# EUROPÄISCHE PATENTSCHRIFT

(11) **EP 0 707 035 B1**
(45) Veröffentlichungstag und Bekanntmachung des Hinweises auf die Patenterteilung: **13.01.1999**
(21) Anmeldenummer: 95810617.1
(22) Anmeldetag: 03.10.1995
(51) Int. Cl.: C08K 5/529, C08L 23/10, C07F 9/59

(54) **HALS-Phosphorinane als Stabilisatoren**
HALS phosphorinanes as stabilisers
Phosphorinanes HALS comme stabiliseurs

(30) Priorität: 12.10.1994 CH 3066/94
(43) Veröffentlichungstag der Anmeldung: 17.04.1996
(73) Patentinhaber: Ciba Specialty Chemicals Holding Inc., 4057 Basel (CH)
(72) Erfinder: Pitteloud, Rita, Dr., CH-1724 Praroman (CH)

(56) Entgegenhaltungen:
- EP-A- 0 601 973
- GB-A- 2 010 275

## Beschreibung

Die vorliegende Erfindung betrifft neue HALS-Phosphorinane, Zusammensetzungen, enthaltend ein organisches Material, bevorzugt ein Polymer, und die neuen HALS-Phosphorinane, sowie die Verwendung derselben zum Stabilisieren von organischen Materialien gegen oxidativen, thermischen oder lichtinduzierten Abbau.

Organische Phosphite und Phosphonite sind in der Technik als Costabilisatoren, sekundäre Antioxidantien und Verarbeitungsstabilisatoren, unter anderem für Polyolefine, bekannt; Beispiele für solche bekannten Phosphitstabilisatoren finden sich in R. Gächter/H. Müller (Ed.), Plastics Additives Handbook, 3rd Ed., p. 47, Hanser, München 1990, und EP-A-356 688.

Gehinderte Amine, darunter insbesondere Verbindungen enthaltend 2,2,6,6-Tetramethylpiperidylgruppen, finden bevorzugt Einsatz als Lichtschutzmittel (hindered Amine light stabilizers; HALS).

Phosphite oder Phosphonite mit HALS-Strukturelementen werden beispielsweise von T. König al, J. prakt. Chem. 334, 333-349 (1992), in US-A-5 239 076, GB-A-2 247 241, DE-A-4 306 747, FR-A-2 380 290, EP-A-0 042 622, EP-A-0 149 259 und US-A-4 293 466 beschrieben.

Es besteht weiterhin ein Bedarf an wirksamen Stabilisatoren für organische Materialien, die gegen oxidativen, thermischen und/oder lichtinduzierten Abbau empfindlich sind.

Es wurde nun gefunden, dass eine ausgewählte Gruppe solcher HALS-Phosphite sich besonders gut als Stabilisatoren für organische Materialien, die gegen oxidativen, thermischen oder lichtinduzierten Abbau empfindlich sind, eignen. Insbesondere hervorzuheben ist die Eignung der genannten Verbindungen als Verarbeitungsstabilisatoren für synthetische Polymere.

Die vorliegende Erfindung betrifft daher Verbindungen der Formel I 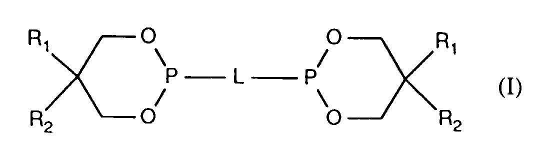 worin L eine Gruppe der Formel II oder III 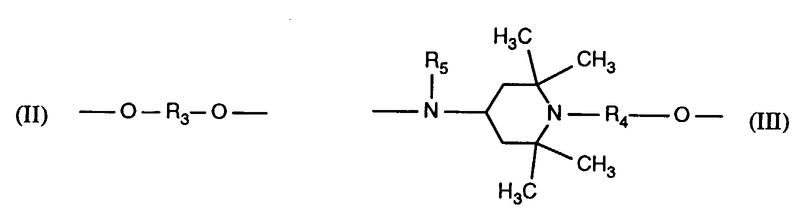 bedeutet,
worin R₁ und R₂ unabhängig voneinander Wasserstoff oder C₁-C₄-Alkyl bedeuten oder zusammen mit dem Kohlenstoffatom, an das sie gebunden sind, einen 3,4-Dehydrocyclohexylidenring oder 5-Norbornenylidenring bilden,
R₃ eine Gruppe der Formel IV bis XVI 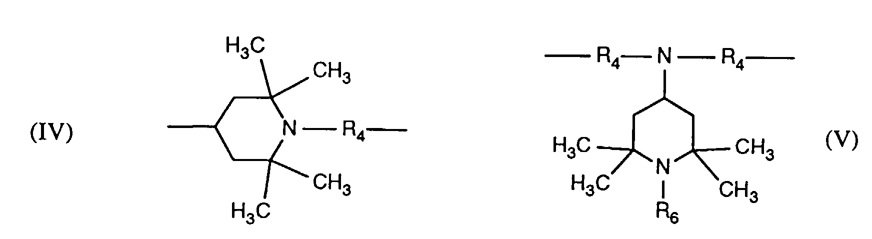 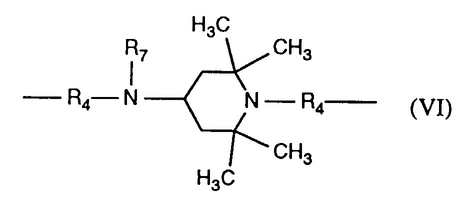 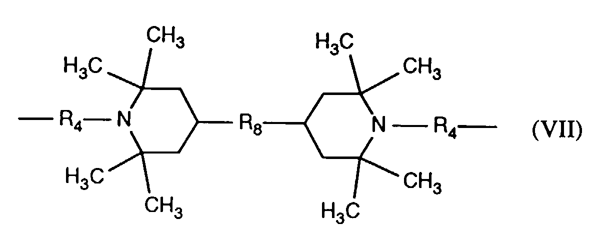 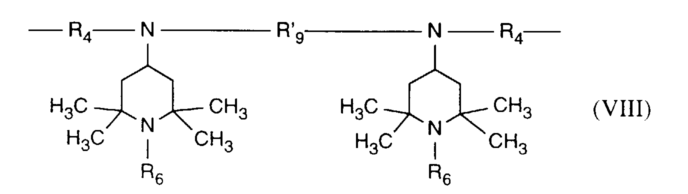 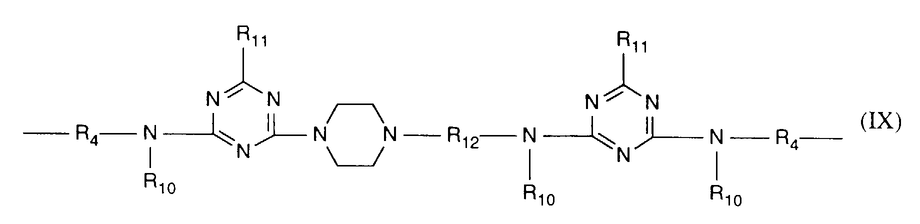 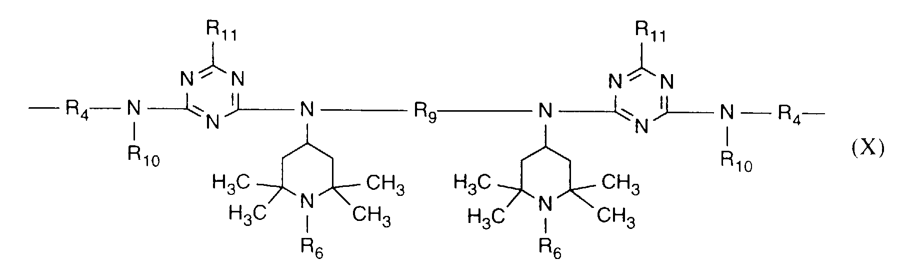 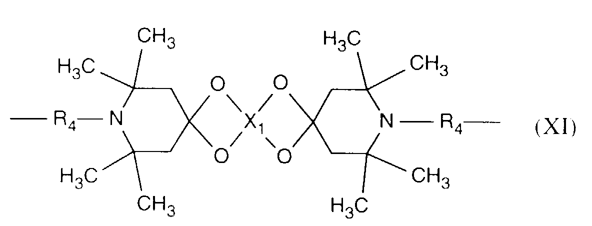 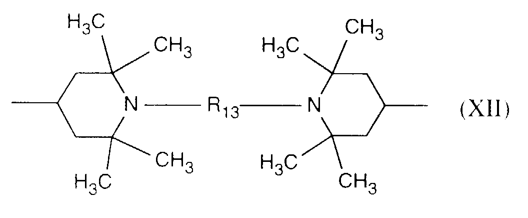 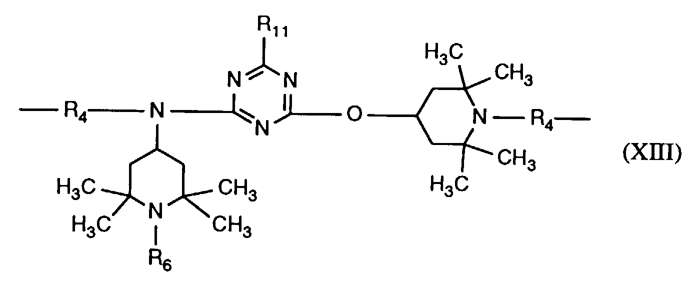 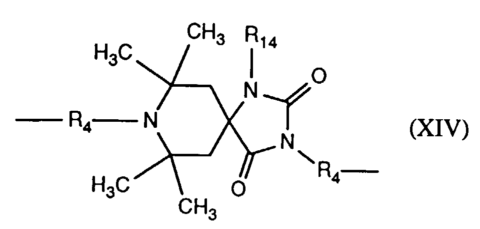 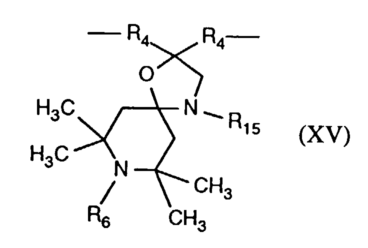 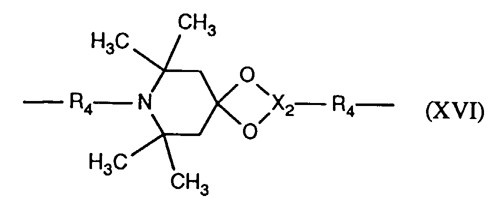 bedeutet,
R₄ C₁-C₁₈-Alkylen, durch Sauerstoff, Schwefel oder 〉N-R₁₆ unterbrochenes C₂-C₁₈-Alkylen; C₄-C₈-Alkenylen oder Phenylethylen darstellt,
R₅ C₁-C₈-Alkyl oder einen Rest der Formel XVII 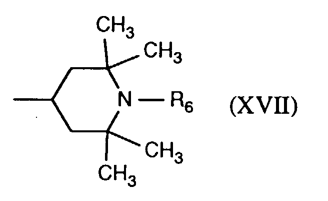 bedeutet,
R₆ Wasserstoff, C₁-C₈-Alkyl, O^{•}, OH, NO, -CH₂CN, C₁-C₁₈-Alkoxy, C₅-C₁₂-Cycloalkoxy, C₃-C₆-Alkenyl, C₃-C₆-Alkinyl, C₁-C₈-Acyl, unsubstituiertes oder am Phenylring durch C₁-C₄-Alkyl substituiertes C₇-C₉-Phenylalkyl darstellt;
R₇ C₁-C₈-Alkyl oder einen Rest der Formel XVII 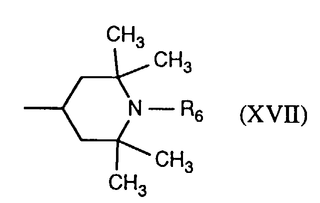 bedeutet,
R₈ 〉N-R₁₇,

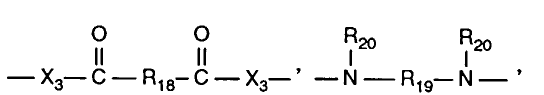

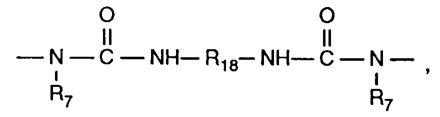

   ―O―R₁₉―O―,

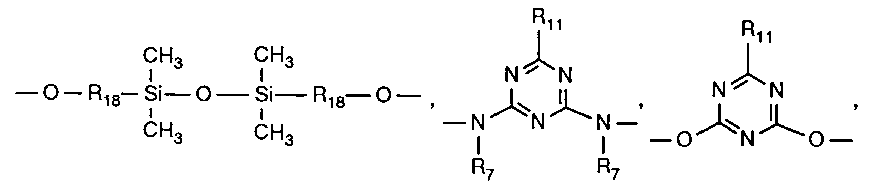

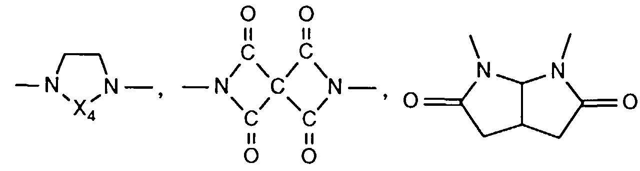

   oder 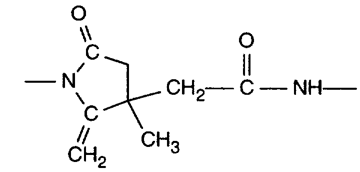 darstellt,
R₉ 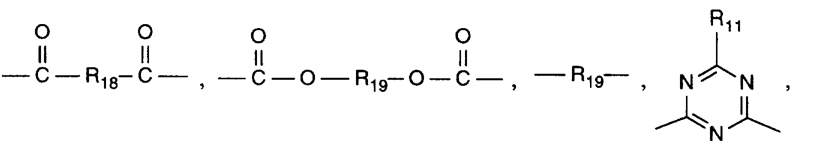 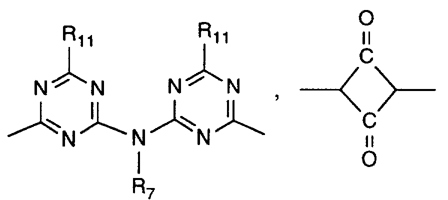 oder 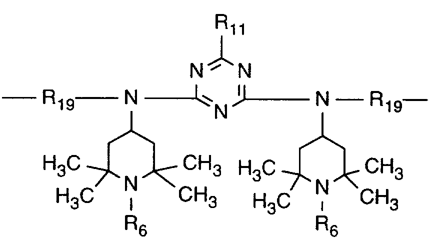 bedeutet,
R'₉ 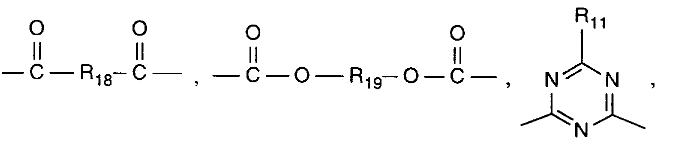 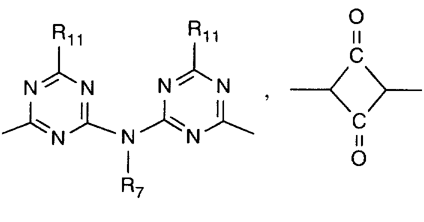 oder 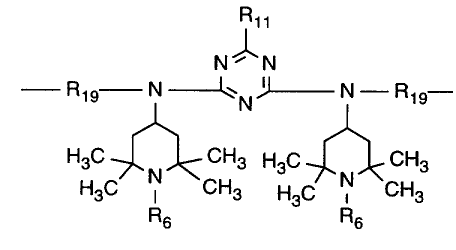 bedeutet,
R₁₀ C₁-C₈-Alkyl oder einen Rest der Formel XVII 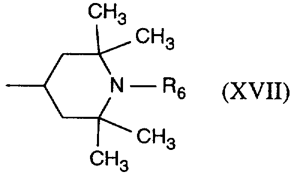 darstellt,
R₁₁ -OR₂₁, -NHR₂₂, 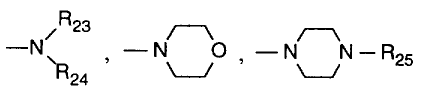 oder -SR₂₁ bedeutet,
R₁₂ und R₁₃ unabhängig voneinander 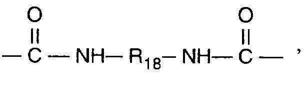 C₁-C₁₈-Alkylen, durch Sauerstoff, Schwefel oder 〉N-R₁₆ unterbrochenes C₂-C₁₈-Alkylen; C₂-C₁₈-Alkenylen, C₂-C₁₈-Alkinylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen oder Naphthylen; 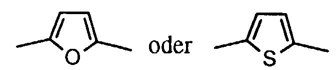 darstellen,
R₁₄ und R₁₅ unabhängig voneinander Wasserstoff oder C₁-C₈-Alkyl bedeuten, R₁₆ Wasserstoff oder C₁-C₈-Alkyl darstellt,
R₁₇ C₁-C₈-Alkyl bedeutet,
R₁₈ eine direkte Bindung, C₁-C₁₈-Alkylen, durch Sauerstoff, Schwefel oder 〉N-R₁₆ unterbrochenes C₂-C₁₈-Alkylen; C₂-C₁₈-Alkenylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen oder Naphthylen; 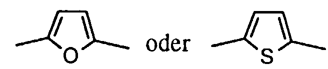 darstellt,
R₁₉ C₁-C₁₈-Alkylen, durch Sauerstoff, Schwefel oder 〉N-R₁₆ unterbrochenes C₂-C₁₈-Alkylen; C₂-C₁₈-Alkenylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen oder Naphthylen; 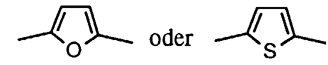 bedeutet,
R₂₀ C₁-C₂₅-Alkanoyl, unsubstituiertes oder durch C₁-C₁₂-Alkyl substituiertes Benzoyl; oder 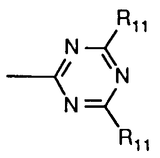 darstellt,
R₂₁ C₁-C₂₅-Alkyl, durch Sauerstoff, Schwefel oder 〉N-R₁₆ unterbrochenes C₂-C₂₅-Alkyl; C₂-C₂₄-Alkenyl, unsubstituiertes oder durch C₁-C₄-Alkyl substituiertes C₅-C₁₅-Cycloalkyl; unsubstituiertes oder durch C₁-C₄-Alkyl substituiertes C₅-C₁₅-Cycloalkenyl; unsubstituiertes oder am Phenylring durch C₁-C₄-Alkyl substituiertes C₇-C₉-Phenylalkyl; unsubstituiertes oder durch C₁-C₄-Alkyl substituiertes Phenyl darstellt;
R₂₂, R₂₃, R₂₄ und R₂₅ unabhängig voneinander Wasserstoff, C₁-C₁₈-Alkyl oder einen Rest der Formel XVII 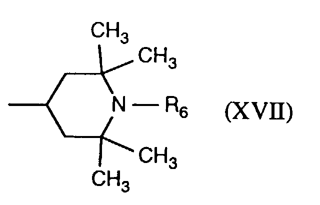 bedeuten,
R₂₆ C₁-C₄-Alkyl oder Hydroxymethyl darstellt,
R₂₇ Wasserstoff oder C₁-C₈-Alkyl bedeutet,
R₂₈ Wasserstoff, C₁-C₈-Alkyl oder einen Rest der Formel XVII 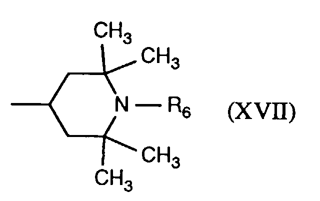 darstellt,
R₂₉ Wasserstoff, C₁-C₂₀-Alkyl, C₅-C₁₂-Cycloalkyl, unsubstituiertes oder durch C₁-C₄-Alkyl substituiertes Phenyl bedeutet,
X₁ eine Gruppe der Formel XVIII, XIX, XX oder XXI 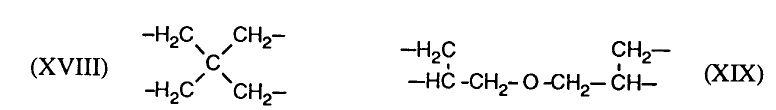 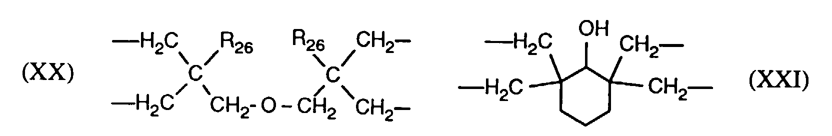 bedeutet,
X₂ 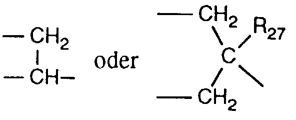 darstellt,
X₃ Sauerstoff oder 〉N-R₂₈ bedeutet, und
X₄ 〉C=O, 〉C=S oder 〉CH-R₂₉ darstellt.

Alkyl mit bis zu 25 Kohlenstoffatomen bedeutet einen verzweigten oder unverzweigten Rest wie beispielsweise Methyl, Ethyl, Propyl, Isopropyl, n-Butyl, sec-Butyl, Isobutyl, tert-Butyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl oder Docosyl. Eine der bevorzugten Bedeutungen von R₂₁ ist beispielweise C₁-C₁₈-Alkyl, insbesondere C₁-C₁₂-Alkyl, z.B. C₁-C₈-Alkyl. Eine der bevorzugten Bedeutungen von R₅, R₆, R₇, R₁₀, R₁₄, R₁₅, R₁₇, R₂₇ und R₂₈ ist beispielsweise C₁-C₆-Alkyl, insbesondere C₁-C₅-Alkyl, z.B. C₁-C₄-Alkyl. Eine besonders bevorzugte Bedeutung von R₂₂, R₂₃, R₂₄ und R₂₅ ist beispielsweise C₁-C₁₆-Alkyl, insbesondere C₁-C₁₄-Alkyl, z.B. C₁-C₁₂-Alkyl. Eine besonders bevorzugte Bedeutung von R₂₂, R₂₃, R₂₄ und R₂₅ ist beispielsweise C₁-C₁₂-Alkyl, insbesondere C₁-C₁₀-Alkyl, z.B. C₁-C₈-Alkyl.

Der 3,4-Dehydrocyclohexylidenring bedeutet

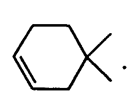

Der 5-Norbornenylidenring bedeutet

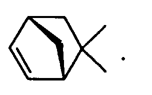

Durch Sauerstoff, Schwefel oder 〉N-R₁₆ unterbrochenes Alkyl mit 2 bis zu 25 Kohlenstoffatomen kann ein- oder mehrfach unterbrochen sein und bedeutet beispielsweise CH₃-O-CH₂-, CH₃-S-CH₂-, CH₃-NH-CH₂-, CH₃-N(CH₃)-CH₂-, CH₃-O-CH₂CH₂-O-CH₂-, CH₃-(O-CH₂CH₂-)₂O-CH₂-, CH₃-(O-CH₂CH₂-)₃O-CH₂- oder CH₃-(O-CH₂CH₂-)₄O-CH₂-. Eine besonders bevorzugte Bedeutung von R₂₁ ist beispielsweise durch Sauerstoff unterbrochenes C₂-C₁₈-Alkyl, insbesondere durch Sauerstoff unterbrochenes C₄-C₁₈-Alkyl, z.B. durch Sauerstoff unterbrochenes C₄-C₁₂-Alkyl.

Alkenyl mit 2 bis 24 Kohlenstoffatomen bedeutet einen verzweigten oder unverzweigten Rest wie beispielsweise Vinyl, Propenyl, 2-Butenyl, 3-Butenyl, Isobutenyl, n-2,4-Pentadienyl, 3-Methyl-2-butenyl, n-2-Octenyl, n-2-Dodecenyl, iso-Dodecenyl, Oleyl, n-2-Octadecenyl oder n-4-Octadecenyl. Eine besonders bevorzugte Bedeutung von R₂₁ ist Alkenyl mit 3 bis 18, insbesondere 3 bis 12, z.B. 3 bis 10 Kohlenstoffatomen. Eine besonders bevorzugte Bedeutung von R₆ ist Alkenyl mit 3 bis 6, insbesondere 3 bis 5, z.B. 3 bis 4 Kohlenstoffatomen.

Unsubstituiertes oder durch C₁-C₄-Alkyl substituiertes C₅-C₁₅-Cycloalkyl, insbesondere C₅-C₁₂-Cycloalkyl, das vorzugsweise 1 bis 3, insbesondere 1 oder 2 verzweigte oder unverzweigte Alkylgruppen-Reste enthält, bedeutet beispielsweise Cyclopentyl, Methylcyclopentyl, Dimethylcyclopentyl, Cyclohexyl, Methylcyclohexyl, Dimethylcyclohexyl, Trimethylcyclohexyl, tert-Butylcyclohexyl, Cycloheptyl, Cyclooctyl oder Cyclododecyl. Bevorzugt ist C₅-C₈-Cycloalkyl, insbesondere Cyclohexyl.

Unsubstituiertes oder durch C₁-C₄-Alkyl substituiertes C₅-C₁₅-Cycloalkenyl, das vorzugsweise 1 bis 3, insbesondere 1 oder 2 verzweigte oder unverzweigte Alkylgruppen-Reste enthält, bedeutet beispielsweise Cyclopentenyl, Methylcyclopentenyl, Dimethylcyclopentenyl, Cyclohexenyl, Methylcyclohexenyl, Dimethylcyclohexenyl, Trimethylcyclohexenyl, tert-Butylcyclohexenyl, Cycloheptenyl, Cyclooctenyl oder Cyclododecenyl. Bevorzugt ist C₅-C₁₂-Cycloalkenyl, insbesondere C₅-C₈-Cycloalkenyl, z.B. Cyclohexenyl.

Unsubstituiertes oder am Phenylrest durch C₁-C₄-Alkyl substituiertes C₇-C₉-Phenylalkyl, das vorzugsweise 1 bis 3, insbesondere 1 oder 2 verzweigte oder unverzweigte Alkylgruppen-Reste enthält, bedeutet beispielsweise Benzyl, α-Methylbenzyl, α,α-Dimethylbenzyl, 2-Phenylethyl, 2-Methylbenzyl, 3-Methylbenzyl, 4-Methylbenzyl, 2,4-Dimethylbenzyl, 2,6-Dimethylbenzyl oder 4-tert-Butylbenzyl. Benzyl ist bevorzugt.

C₁-C₁₈-Alkylen bedeutet einen verzweigten oder unverzweigten Rest wie beispielsweise Methylen, Ethylen, Propylen, Tetramethylen, Pentamethylen, Hexamethylen, Heptamethylen, Octamethylen, Decamethylen, Dodecamethylen oder Octadecamethylen. Eine bevorzugte Bedeutung von R₄ ist beispielsweise C₁-C₁₂-Alkylen, insbesondere C₂-C₁₀-Alkylen, z.B. C₂-C₈-Alkylen. Eine speziell bevorzugte Bedeutung von R₄ ist Ethylen und Propylen. Eine bevorzugte Bedeutung von R₁₂ und R₁₃ ist beispielsweise C₂-C₁₄-Alkylen, insbesondere C₂-C₁₂-Alkylen, z.B. C₂-C₈-Alkylen. Eine speziell bevorzugte Bedeutung von R₁₂ und R₁₃ ist beispielsweise C₄-C₈-Alkylen. Eine bevorzugte Bedeutung von R₁₈ ist beispielsweise C₁-C₁₄-Alkylen, insbesondere C₁-C₁₂-Alkylen, z.B. C₁-C₈-Alkylen. Eine bevorzugte Bedeutung von R₁₉ ist beispielsweise C₂-C₁₄-Alkylen, insbesondere C₂-C₁₂-Alkylen, z.B. C₂-C₈-Alkylen.

Durch Sauerstoff, Schwefel oder 〉N-R₁₆ unterbrochenes C₂-C₁₈-Alkylen kann ein- oder mehrfach unterbrochen sein und bedeutet beispielsweise -CH₂-O-CH₂-, -CH₂-S-CH₂-, -CH₂-NH-CH₂-, -CH₂-N(CH₃)-CH₂-, -CH₂-O-CH₂CH₂-O-CH₂-, -CH₂-(O-CH₂CH₂-)₂O-CH₂-, -CH₂-(O-CH₂CH₂-)₃O-CH₂-, -CH₂-(O-CH₂CH₂-)₄O-CH₂-, oder -CH₂CH₂-S-CH₂CH₂-. Eine bevorzugte Bedeutung von R₄, R₁₂, R₁₃, R₁₈ und R₁₉ ist beispielsweise durch Sauerstoff unterbrochenes C₂-C₁₈-Alkylen, insbesondere durch Sauerstoff unterbrochenes C₄-C₁₈-Alkylen, z.B. durch Sauerstoff unterbrochenes C₄-C₁₂-Alkylen.

Ist R₄ C₄-C₈-Alkenylen, so handelt es sich beispielsweise um 2-Butenylen-1,4.

Phenylethylen bedeutet -CH(C₆H₅)CH₂-.

Durch C₁-C₄-Alkyl substituiertes Phenyl, das vorzugsweise 1 bis 3, insbesondere 1 oder 2 Alkylgruppen enthält, bedeutet beispielsweise o-, m- oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 4-tert-butylphenyl, 2-Ethylphenyl oder 2,6-Diethylphenyl.

Alkoxy mit bis zu 18 Kohlenstoffatomen bedeutet einen verzweigten oder unverzweigten Rest wie beispielsweise Methoxy, Ethoxy, Propoxy, Isopropoxy, n-Butoxy, Isobutoxy, Pentoxy, Isopentoxy, Hexoxy, Heptoxy, Octoxy, Decyloxy, Tetradecyloxy, Hexadecyloxy oder Octadecyloxy. Eine bevorzugte Bedeutung von R₆ ist Alkoxy mit 4 bis 16, insbesondere 6 bis 12 Kohlenstoffatomen.

Cycloalkoxy mit 5 bis 12 C-Atomen bedeutet beispielsweise Cyclopentoxy, Cyclohexoxy, Cycloheptoxy, Cyclooctoxy, Cyclodecyloxy oder Cyclododecyloxy. Eine der bevorzugten Bedeutungen von R₆ ist C₅-C₈-Cycloalkoxy. Besonders bevorzugt sind Cyclopentoxy und Cyclohexoxy.

Alkinyl mit 3 bis 6 Kohlenstoffatomen bedeutet einen verzweigten oder unverzweigten Rest wie beispielsweise Propinyl (Propargyl)(-CH₂-C≡CH ), 2-Butinyl oder 3-Butinyl.

Acyl mit 1 bis 8 C-Atomen bedeutet beispielsweise Formyl, Acetyl, Propionyl, Butyryl, Pentanoyl, Hexanoyl, Heptanoyl, Octanoyl, Benzoyl, Acryloyl oder Crotonyl. Bevorzugt sind C₁-C₈-Alkanoyl, C₃-C₈-Alkenoyl oder Benzoyl, insbesondere Acetyl.

C₂-C₁₈-Alkenylen bedeutet beispielsweise Vinylen, Methylvinylen, Octenylethylen oder Dodecenylethylen. Eine bevorzugte Bedeutung von R₁₂, R₁₃, R₁₈ und R₁₉ ist C₄-C₁₂-Alkenylen, insbesondere C₄-C₈-Alkenylen, z.B. 2-Butenylen-1,4.

C₂-C₁₈-Alkinylen bedeutet beispielsweise -C≡C-, 2-Propinylen (-C≡C-CH₂- ), 2-Butinylen (-CH₂-C≡C-CH₂-), 2-Pentinylen, 2-Hexinylen, 3-Hexinylen, 3-Heptinylen, 2-decinylen, 4-decinylen oder 8-Octadecinylen. Eine bevorzugte Bedeutung von R₁₂ und R₁₃ ist C₂-C₁₂-Alkinylen, insbesondere C₄-C₈-Alkinylen, z.B. 2-Butinylen.

Alkyliden mit 2 bis 20 Kohlenstoffatomen bedeutet beispielsweise Ethyliden, Propyliden, Butyliden, Pentyliden, 4-Methylpentyliden, Heptyliden, Nonyliden, Tridecyliden, Nonadecyliden, 1-Methylethyliden, l-Ethylpropyliden oder 1-Ethylpentyliden. Eine bevorzugte Bedeutung von R₁₂, R₁₃, R₁₈ und R₁₉ ist beispielsweise Alkyliden mit 2 bis 12, insbesondere 2 bis 8, z.B. 2 bis 6 Kohlenstoffatomen.

Phenylalkyliden mit 7 bis 20 Kohlenstoffatomen bedeutet beispielsweise Benzyliden, 2-Phenylethyliden oder l-Phenyl-2-hexyliden. Eine bevorzugte Bedeutung von R₁₂, R₁₃, R₁₈ und R₁₉ ist beispielsweise Phenylalkyliden mit 7 bis 15, insbesondere 7 bis 12, z.B. 7 bis 9 Kohlenstoffatomen.

C₅-C₈-Cycloalkylen bedeutet eine gesättigte Kohlenwasserstoffgruppe mit zwei freien Valenzen und mindestens einer Ringeinheit und ist beispielsweise Cyclopentylen, Cyclohexylen, Cycloheptylen oder Cyclooctylen. Bevorzugt ist Cyclohexylen.

C₇-C₈-Bicycloalkylen bedeutet beispielsweise Bicycloheptylen oder Bicyclooctylen.

Unsubstituiertes oder durch C₁-C₄-Alkyl substituiertes Phenylen oder Naphthylen bedeutet beispielsweise 1,2-, 1,3-, 1,4-Phenylen, 1,2-, 1,3-, 1,4-, 1,6-, 1,7-, 2,6- oder 2,7-Naphthylen. 1,4-Phenylen ist bevorzugt.

Alkanoyl mit bis zu 25 Kohlenstoffatomen bedeutet einen verzweigten oder unverzweigten Rest wie beispielsweise Formyl, Acetyl, Propionyl, Butanoyl, Pentanoyl, Hexanoyl, Heptanoyl, Octanoyl, Nonanoyl, Decanoyl, Undecanoyl, Dodecanoyl, Tridecanoyl, Tetradecanoyl, Pentadecanoyl, Hexadecanoyl, Heptadecanoyl, Octadecanoyl, Eicosanoyl oder Docosanoyl. Eine bevorzugte Bedeutung von R₂₀ ist C₁-C₁₈-Alkanoyl, insbesondere C₁-C₁₂-Alkanoyl, z.B. C₁-C₈-Alkanoyl. Eine besonders bevorzugte Bedeutung von R₂₀ ist C₁-C₄-Alkanoyl, insbesondere Acetyl.

Durch C₁-C₁₂-Alkyl substituiertes Benzoyl, das vorzugsweise 1 bis 3, insbesondere 1 oder 2 Alkylgruppen trägt, bedeutet beispielsweise o-, m- oder p-Methylbenzoyl, 2,3-Dimethylbenzoyl, 2,4-Dimethylbenzoyl, 2,5-Dimethylbenzoyl, 2,6-Dimethylbenzoyl, 3,4-Dimethylbenzoyl, 3,5-Dimethylbenzoyl, 2-Methyl-6-ethylbenzoyl, 4-tert-Butylbenzoyl, 2-Ethylbenzoyl, 2,4,6-Trimethylbenzoyl, 2,6-Dimethyl-4-tert-butylbenzoyl oder 3,5-Di-tert-butylbenzoyl. Bevorzugte Substituenten sind C₁-C₈-Alkyl, insbesondere C₁-C₄-Alkyl.

Bevorzugt sind die Verbindungen der Formel I, worin R₄ C₂-C₄-Alkylen bedeutet.

Bevorzugt sind auch die Verbindungen der Formel I, worin
R₄ C₁-C₁₂-Alkylen, durch Sauerstoff oder Schwefel unterbrochenes C₄-C₁₈-Alkylen; oder C₄-C₈-Alkenylen darstellt,
R₅ C₁-C₈-Alkyl bedeutet,
R₆ Wasserstoff, C₁-C₈-Alkyl, O^{•}, C₄-C₁₈-Alkoxy, C₅-C₈-Cycloalkoxy, C₃-C₆-AIkenyl, C₃-C₆-Alkinyl, C₁-C₆-Acyl oder Benzyl darstellt,
R₇ C₁-C₈-Alkyl bedeutet,
R₈ 〉N-R₁₇, 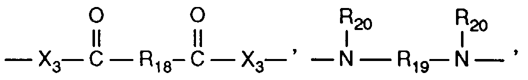 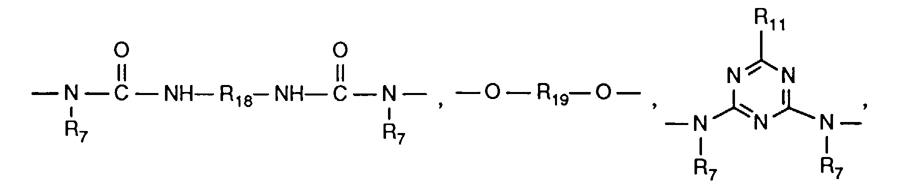 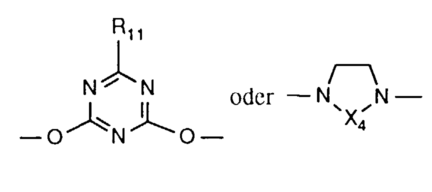 darstellt,
R₉ 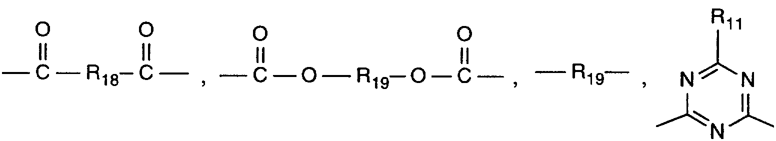 oder 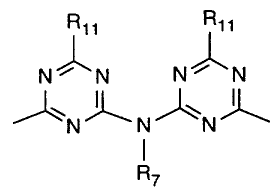 bedeutet,
R'₉ 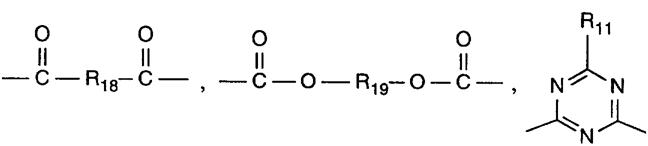 oder 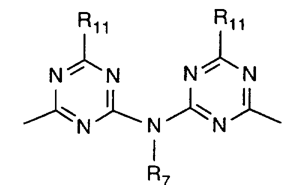 bedeutet,
R₁₀ C₁-C₈-Alkyl darstellt,
R₁₁ -OR₂₁, -NHR₂₂, 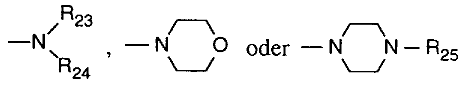 bedeutet,
R₁₂ und R₁₃ unabhängig voneinander 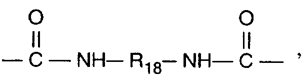 C₁-C₁₂-Alkylen, durch Sauerstoff oder Schwefel unterbrochenes C₄-C₁₂-Alkylen; C₂-C₁₂-Alkenylen, C₂-C₁₂-Alkinylen, C₂-C₁₄-Alkyliden, C₇-C₁₆-Phenylalkyliden, C₅-C₈-Cycloalkylen, Phenylen oder Naphthylen darstellen,
R₁₄ und R₁₅ unabhängig voneinander Wasserstoff oder C₁-C₄-Alkyl bedeuten,
R₁₈ eine direkte Bindung, C₁-C₁₈-Alkylen, durch Sauerstoff oder Schwefel unterbrochenes C₄-C₁₂-Alkylen; C₂-C₁₂-Alkenylen, C₂-C₁₄-Alkyliden, C₇-C₁₆-Phenylalkyliden, C₅-C₈-Cycloalkylen, Phenylen oder Naphthylen darstellt,
R₁₉ C₁-C₁₂-Alkylen, durch Sauerstoff oder Schwefel unterbrochenes C₂-C₁₂-Alkylen; C₂-C₁₂-Alkenylen, C₂-C₁₄-Alkyliden, C₇-C₁₆-Phenylalkyliden, C₅-C₈-Cycloalkylen, Phenylen oder Naphthylen bedeutet,
R₂₀ C₁-C₁₈-Alkanoyl, Benzoyl oder 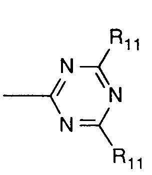 darstellt,
R₂₁ C₁-C₁₈-Alkyl, durch Sauerstoff oder Schwefel unterbrochenes C₂-C₁₈-Alkyl; C₂-C₁₈-Alkenyl, unsubstituiertes oder durch C₁-C₄-Alkyl substituiertes C₅-C₈-Cycloalkyl; unsubstituiertes oder durch C₁-C₄-Alkyl substituiertes C₅-C₈-Cycloalkenyl; C₇-C₉-Phenylalkyl, unsubstituiertes oder durch C₁-C₄-Alkyl substituiertes Phenyl darstellt;
R₂₂, R₂₃, R₂₄ und R₂₅ unabhängig voneinander Wasserstoff oder C₁-C₁₂-Alkyl bedeuten,
R₂₆ C₁-C₄-Alkyl darstellt,
R₂₇ Wasserstoff oder C₁-C₄-Alkyl bedeutet,
R₂₈ Wasserstoff oder C₁-C₄-Alkyl darstellt,
R₂₉ Wasserstoff, C₁-C₁₂-Alkyl, C₅-C₈-Cycloalkyl, unsubstituiertes oder durch C₁-C₄-Alkyl substituiertes Phenyl bedeutet,
X₁ eine Gruppe der Formel XVIII, XIX oder XX 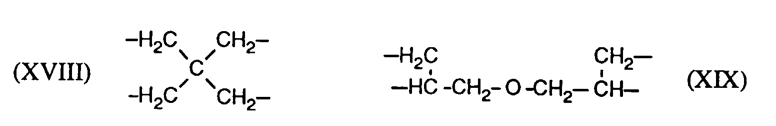 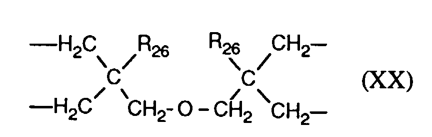 bedeutet.
X₂ 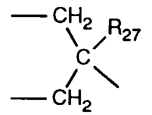 darstellt, und
X₄ 〉C=O oder 〉CH-R₂₉ darstellt.

Ebenfalls bevorzugt sind die Verbindungen der Formel I, worin
R₄ C₂-C₈-Alkylen, durch Sauerstoff unterbrochenes C₄-C₁₂-Alkylen; oder C₄-C₈-Alkenylen darstellt,
R₅ C₁-C₄-Alkyl bedeutet,
R₆ Wasserstoff, C₁-C₄-Alkyl, C₄-C₁₈-Alkoxy, C₅-C₈-Cycloalkoxy, Allyl, Propargyl, Acetyl oder Benzyl darstellt,
R₇ C₁-C₈-Alkyl bedeutet,
R₈ 〉N-R₁₇,

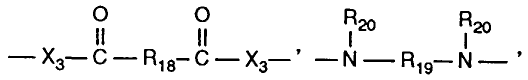

   ―O―R₁₉―O― ,

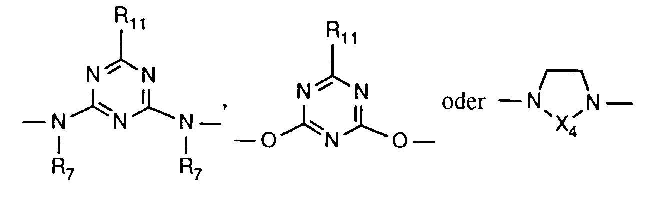

   darstellt,
R₉ und R'₉ 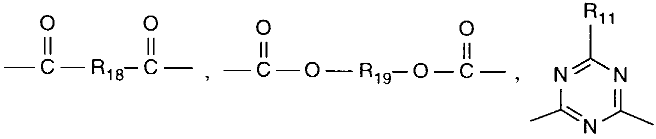 oder 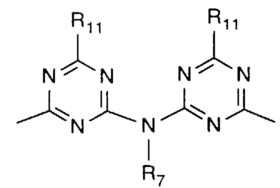 bedeutet,
R₁₀ C₁-C₈-Alkyl darstellt,
R₁₁ -OR₂₁, -NHR₂₂, 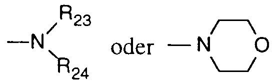 bedeutet,
R₁₂ und R₁₃ unabhängig voneinander 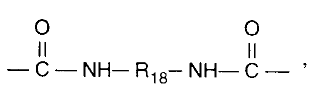 C₁-C₈-Alkylen, durch Sauerstoff unterbrochenes C₄-C₁₂-Alkylen; C₂-C₈-Alkenylen, C₂-C₈-Alkinylen, C₂-C₁₀-Alkyliden, C₇-C₁₂-Phenylalkyliden, Cyclohexylen oder Phenylen darstellen,
R₁₄ und R₁₅ unabhängig voneinander Wasserstoff oder C₁-C₄-Alkyl bedeuten,
R₁₈ eine direkte Bindung, C₁-C₁₂-Alkylen, durch Sauerstoff unterbrochenes C₄-C₁₂-Alkylen; C₂-C₈-Alkenylen, C₂-C₈-Alkyliden, C₇-C₁₂-Phenylalkyliden, Cyclohexylen oder Phenylen darstellt,
R₁₉ C₁-C₁₂-Alkylen, durch Sauerstoff unterbrochenes C₂-C₁₂-Alkylen; C₂-C₈-Alkenylen, C₂-C₈-Alkyliden, C₇-C₁₂-Phenylalkyliden, Cyclohexylen oder Phenylen bedeutet,
R₂₀ C₁-C₁₂-Alkanoyl oder Benzoyl darstellt,
R₂₁ C₁-C₁₂-Alkyl, durch Sauerstoff unterbrochenes C₂-C₁₂-Alkyl; C₂-C₁₂-Alkenyl, unsubstituiertes oder durch C₁-C₄-Alkyl substituiertes Cyclohexyl; Benzyl oder Phenyl darstellt,
R₂₂, R₂₃ und R₂₄ unabhängig voneinander Wasserstoff oder C₁-C₈-Alkyl bedeuten,
R₂₇ Wasserstoff oder C₁-C₄-Alkyl darstellt,
R₂₈ Wasserstoff oder C₁-C₄-Alkyl bedeutet,
R₂₉ Wasserstoff, C₁-C₈-Alkyl, Cyclohexyl oder Phenyl darstellt,
X₁ eine Gruppe der Formel XVIII oder XIX 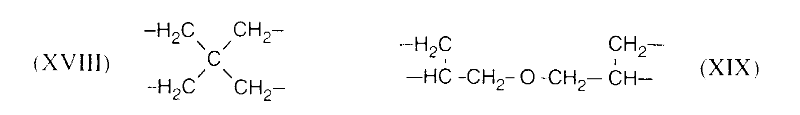 bedeutet,
X₂ 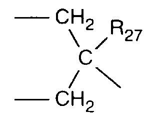 darstellt, und
X₄ 〉C=O oder 〉CH-R₂₉ darstellt.

Besonders bevorzugt sind die Verbindungen der Formel I, worin
L eine Gruppe der Formel II

   ―O―R₃―O― (II)

   bedeutet,
R₄ C₂-C₈-Alkylen oder durch Sauerstoff unterbrochenes C₄-C₈-Alkylen darstellt,
R₅ C₁-C₄-Alkyl bedeutet,
R₆ Wasserstoff, C₁-C₄-Alkyl, C₄-C₁₈-Alkoxy, C₅-C₈-Cycloalkoxy, Allyl, Propargyl, Acetyl oder Benzyl darstellt,
R₇ C₁-C₈-Alkyl bedeutet,
R₈ 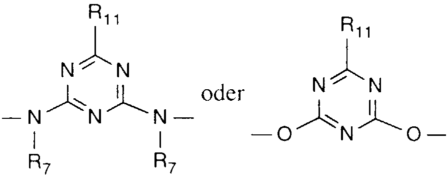 darstellt,
R₉ und R'₉ 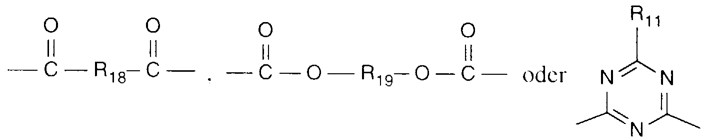 bedeutet,
R₁₀ C₁-C₈-Alkyl darstellt,
R₁₁ -OR₂₁, -NHR₂₂, 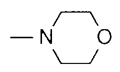 oder -SR₂₁ bedeutet,
R₁₂ und R₁₃ 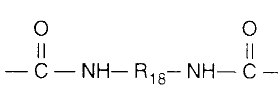 darstellen,
R₁₄ und R₁₅ Wasserstoff bedeuten,
R₁₈ eine direkte Bindung, C₁-C₈-Alkylen oder durch Sauerstoff unterbrochenes C₄-C₈-Alkylen darstellt
R₁₉ C₂-C₈-Alkylen oder durch Sauerstoff unterbrochenes C₄-C₈-Alkylen bedeutet,
R₂₁ C₁-C₈-Alkyl, durch Sauerstoff unterbrochenes C₄-C₁₂-Alkyl; oder Cyclohexyl darstellt,
R₂₂ C₁-C₈-Alkyl ist,
R₂₇ Wasserstoff oder C₁-C₄-Alkyl bedeutet,
X₁ eine Gruppe der Formel XVIII oder XIX 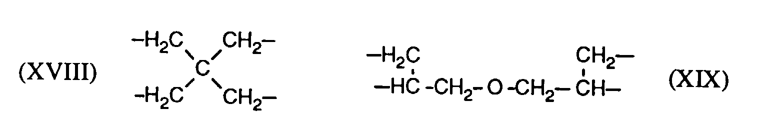 darstellt, und
X₂ 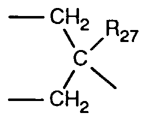 bedeutet.

Von besonderem Interesse sind die Verbindungen der Formel I, worin R₁₀ Wasserstoff, C₁-C₄-Alkyl, C₄-C₁₆-Alkoxy, C₅-C₈-Cycloalkoxy, Allyl, Propargyl, Acetyl oder Benzyl darstellt.

Speziell von besonderem Interesse sind die Verbindungen der Formel I, worin L eine Gruppe der Formel II

―O―R₃―O― (II)

darstellt,
R₁ und R₂ Methyl bedeuten oder zusammen mit dem Kohlenstoffatom, an das sie gebunden sind, einen 3,4-Dehydrocyclohexylidenring bilden,
R₃ eine Gruppe der Formel IV, V, VII, VIII, XI, XII, XIV oder XVI 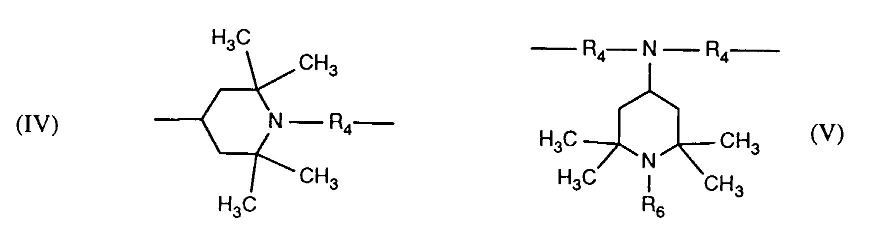 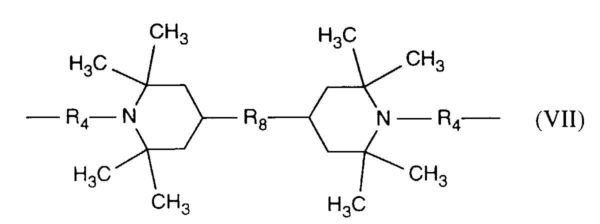 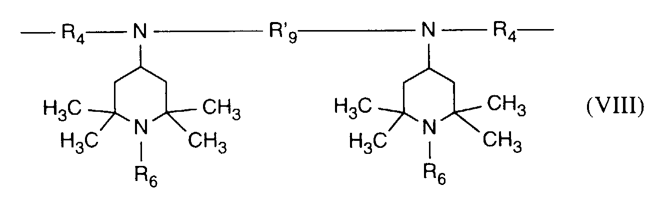 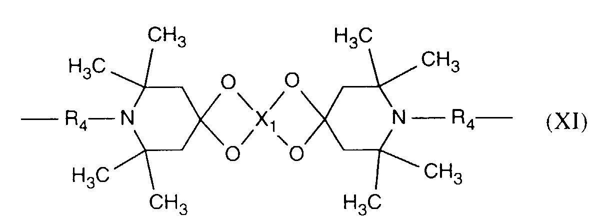 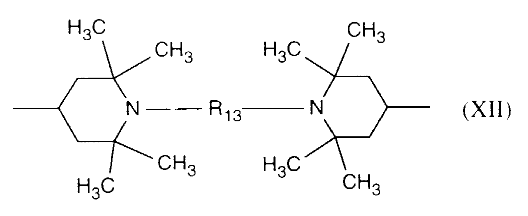 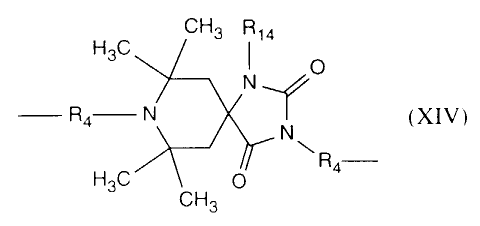 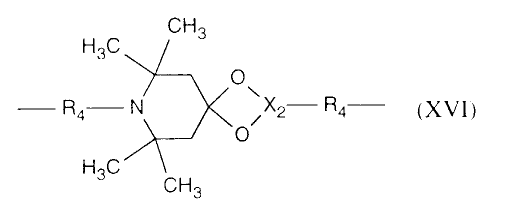 bedeutet,
R₄ Ethylen darstellt,
R₆ Wasserstoff oder Methyl bedeutet,
R₇ C₁-C₆-Alkyl darstellt,
R₈ 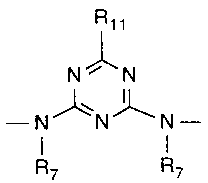 bedeutet,
R'₉ 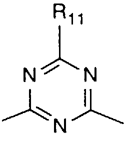 ist,
R₁₁ -OR₂₁, -HNR₂₂ oder 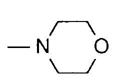 darstellt,
R₁₃ 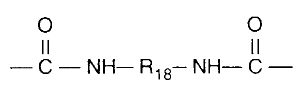 bedeutet,
R₁₄ Wasserstoff darstellt,
R₁₈ eine direkte Bindung oder C₁-C₈-Alkylen bedeutet,
R₂₁ C₁-C₄-Alkyl darstellt.
R₂₂ C₁-C₈-Alkyl ist.
R₂₇ Wasserstoff oder Methyl bedeutet,
X₁ eine Gruppe der Formel XVIII 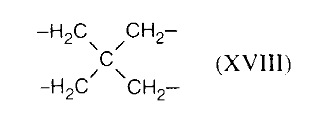 darstellt, und
X₂ 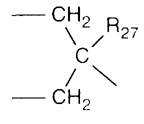 bedeutet.

Die erfindungsgemässen Verbindungen der Formel I können auf an sich bekannte Weise hergestellt werden.

Ein weiterer Gegenstand der Erfindung ist ein bevorzugtes Verfahren zur Herstellung von Verbindungen der Formel I, dadurch gekennzeichnet, dass eine Verbindung der Formel XXII

H―L―H (XXII)

worin L die angegebene Bedeutung hat, mit einem cyclischen Chlorphosphit der Formel XXIII 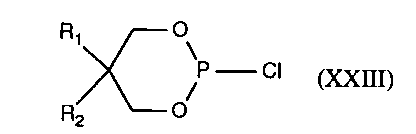 worin R₁ und R₂ die angegebenen Bedeutungen haben, umgesetzt wird.

Die Umsetzung erfolgt in der Schmelze oder in Gegenwart eines geeigneten organischen, polaren oder apolaren, aprotischen Lösungsmittels. Bevorzugt geschieht diese Umsetzung in Gegenwart einer Base bei Temperaturen zwischen -20°C und dem Siedepunkt des Lösungsmittels, insbesondere bei Temperaturen zwischen 20 und 150°C.

Basen wie beispielsweise Amine können gleichzeitig auch als Lösungsmittel verwendet werden.

Die Base kann in unterschiedlichen Mengen eingesetzt werden, von katalytischen über stöchiometrische Mengen bis hin zu mehrfachem molarem Überschuß bezüglich eingesetzten Verbindungen der Formel XXII oder Verbindungen der Formel XXIII. Der bei der Reaktion gebildete Chlorwasserstoff wird gegebenenfalls durch die Base in Chlorid überführt, das durch Filtration und/oder Waschen mit einer geeigneten wässrigen oder festen Phase entfernt werden kann; dabei kann auch ein zweites, nicht mit Wasser mischbares Lösungsmittel eingesetzt werden. Die Isolierung der Produkte erfolgt zweckmäßig durch Eindampfen der organischen Phase und Trocknung des Rückstandes.

Geeignete Lösungsmittel zur Durchführung der Reaktion sind u.a. Kohlenwasserstoffe (beispielsweise Mesitylen, Toluol, Xylol, Hexan, Pentan oder weitere Petroletherfraktionen), halogenierte Kohlenwasserstoffe (beispielsweise Di- oder Trichlormethan, 1,2-Dichlorethan, 1,1,1-Trichlorethan oder Chlorbenzol), Ether (z.B. Diethylether, Dibutylether oder Tetrahydrofuran), Ketone (z.B. Aceton, Ethylmethylketon, Diethylketon, Methylpropylketon oder Cyclohexanon), ferner Acetonitril, Butylacetat, Dimethylformamid, Dimethylsulfoxid oder N-Methylpyrrolidon.

Geeignete Basen sind u.a. primäre, sekundäre oder vor allem tertiäre Amine (z.B. Trimethylamin, Triethylamin, Tributylamin, N,N-Dimethylanilin, N,N-Diethylanilin oder Pyridin), Hydride (z.B. Lithium-, Natrium-, Kaliumhydrid) oder Alkoholate (z.B. Natriummethanolat).

Werden Hydride (z.B. Natriumhydrid, Natriumborhydrid oder Lithiumaluminiumhydrid), Alkalimetalle, Alkalihydroxide oder Natriummethanolat als Basen verwendet, kann zuerst das entsprechende Alkoholat der Verbindung der Formel XXII gebildet werden; das gegebenenfalls dabei entstehende Reaktionsprodukt (z.B. Wasser, Methanol) wird vor der Umsetzung mit der Verbindung der Formel XXIII abdestilliert (z.B. als Azeotrop mit Toluol).

Die Herstellung der Verbindungen der Formel XXII und XXIII ist bekannt.

Die HALS-Verbindungen der Formel XXII sind bekannt oder können nach an sich bekannten Verfahren, wie sie beispielsweise in US-A-3 974 127, US-A-4 279 804; US-A-4 798 836; US-A-4 883 870; US-A-5 198 546; US-A-4 731 448 oder EP-A-0 047 967 beschrieben sind, hergestellt werden.

Die Chlorphosphite der Formel XXIII sind bekannt oder können nach an sich bekannten Verfahren wie sie beispielsweise in Houben-Weyl, Methoden der Organischen Chemie, Band El, Seiten 373-376 (1982); J.H.R.O. Day et al., Inorganic Chemistry 31 (7), 1279-1285 (1992); oder B. Costisella et al., Journal für praktische Chemie, Band 314 (3-4), Seiten 532-542 (1972) beschrieben sind, hergestellt werden.

Die erfindungsgemässen Verbindungen der Formel I eignen sich zum Stabilisieren von organischen Materialien gegen oxidativen, thermischen oder lichtinduzierten Abbau.

Beispiele für derartige Materialien sind:
1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide, Polyetherimide, Polyesterimide, Polyhydantoine und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten, Urethan-acrylaten oder Polyester-acrylaten.
25. Alkydharze, Polyesterharze und Acrylatharze, die mit Melaminharzen, Harnstoffharzen, Isocyanaten, Isocyanuraten, Polyisocyanaten oder Epoxidharzen vernetzt sind.
26. Vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigern vernetzt werden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.
29. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.
30. Wässrige Emulsionen natürlicher oder synthetischer Kautschuke, wie z.B. Naturkautschuk-Latex oder Latices von carboxylierten Styrol-Butadien-Copolymeren.

Weitere Gegenstände der Erfindung sind daher auch Zusammensetzungen enthaltend (a) ein dem oxidativen, thermischen oder lichtinduzierten Abbau unterworfenes organisches Material und (b) mindestens eine Verbindung der Formel I.

Vorzugsweise handelt es sich bei den zu schützenden organischen Materialien um natürliche, halbsynthetische oder bevorzugt synthetische Polymere. Besonders bevorzugt sind thermoplastische Polymere, insbesondere PVC oder Polyolefine, vor allem Polyethylen und Polypropylen.

Besonders hervorzuheben ist die Wirkung der erfindungsgemässen Verbindungen gegen thermischen und oxidativen Abbau, vor allem bei thermischer Belastung, wie sie bei der Verarbeitung von Thermoplasten auftritt. Die erfindungsgemässen Verbindungen sind daher hervorragend als Verarbeitungsstabilisatoren einzusetzen.

Vorzugsweise werden die Verbindungen der Formel I dem zu stabilisierenden Material in Mengen von 0,01 bis 10 %, beispielsweise 0,01 bis 5 %, vorzugsweise 0,025 bis 3 %, insbesondere 0,025 bis 1 % zugesetzt, bezogen auf das Gewicht des zu stabilisierenden organischen Materials.

Zusätzlich zu den Verbindungen der Formel I können die erfindungsgemässen Zusammensetzungen weitere Costabilisatoren enthalten, wie beispielsweise die folgenden:
1. Antioxidantien
   1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.
   1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
   1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.
   1.4. Tocopherole, z.B. α-Tocopherol, β-Tocopherol, γ-Tocopherol, δ-Tocopherol und Mischungen davon (Vitamin E).
   1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis(6-tert-butyl-2-methylphenol), 4,4'-Thio-bis(3,6-di-sec.-amylphenol), 4,4'-Bis(2,6-dimethyl-4-hydroxyphenyl)-disulfid.
   1.6. Alkyliden-Bisphenole, z.B. 2,2'-Methylen-bis(6-tert-butyl-4-methylphenol), 2,2'-Methylen-bis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-di-tert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
   1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.
   1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Didodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.
   1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)-phenol.
   1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.
   1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
   1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
   1.13. Ester der β-(3,5-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.14. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.17. Amide der β-(3,5-Di-tert-butyl-4-hydroxyphenyl)-pronionsäure, wie z.B. N,N'-Bis-(3,5-di-tert-butyl-4-hydroxyphenylpropionyl)-hexamethylendiamin, N,N'-Bis(3,5-di-tert-butyl-4-hydroxyphenylpropionyl)-trimethylendiamin, N,N'-Bis(3,5-di-tert-butyl-4-hydroxyphenylpropionyl)-hydrazin.
   1.18. Ascorbinsäure (Vitamin C).
   1.19. Aminische Antioxidantien, wie z.B. N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(naphthyl-2)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylaminophenol, 4-Dodecanoylamino-phenol, 4-Octadecanoylamino-phenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethylpiperidin-4-on, 2,2,6,6-Tetramethylpiperidin-4-ol.
2. UV-Absorber und Lichtschutzmittel
   2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl- 2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, Mischung aus 2-(3'-tert-Butyl-2'-hydroxy-5'-(2-octyloxycarbonylethyl)-phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; [R-CH₂CH₂-COO(CH₂)₃ 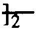 mit R = 3'-tert-Butyl-4'-hydroxy-5'-2H-benzotriazol-2-yl-phenyl.
   2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butyl-benzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis(2,2,6,6-tetramethyl-piperidin-4-yl)-sebacat, Bis(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2, 2,6,6-pentamethylpiperidyl)-ester, Kondensationsprodukt aus l-Hydroxyethyl-2,2,6,6-tetramethyl-4-hydroxypiperidin und Bernsteinsäure, Kondensationsprodukt aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis(1-octyloxy-2,2,6,6-tetramethylpiperidyl)-sebacat, Bis(1-octyloxy-2,2,6,6-tetramethylpiperidyl)-succinat, Kondensationsprodukt aus N,N'-Bis(2,2,6,6-tetramethyl-4-piperidyl)-hexamethylendiamin und 4-Morpholino-2,6-dichlor-1,3,5-triazin, 1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)-ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondenstionsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro[4,5]decan und Epichlorhydrin.
   2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
   2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis-(2,4-dimethylphenyl)-1,3,5-triazin, 2-[2-Hydroxy-4-(2-hydroxy-3-butyloxy-propyloxy)-phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin.
3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N,N'-Di-acetyl-adipinsäure-dihydrazid, N,N'-Bis-salicyloyl-oxalsäure-dihydrazid, N,N'-Bis-salicyloyl-thiopropionsäure-dihydrazid.
4. Phosphite und Phosphonite, wie z.B. Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz-[d,g]-1,3,2-dioxaphosphocin, Bis(2,4-di-tert-butyl-6-methylphenyl)-methylphosphit, Bis-(2,4-di-tert-butyl-6-methylphenyl)-ethylphosphit.
5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.
6. Nitrone wie z.B. N-Benzyl-alpha-phenyl-nitron, N-Ethyl-alpha-methyl-nitron, N-Octyl-alpha-heptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecyl-alpha-heptadecyl-nitron, N-Ocatadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.
7. Thiosynergisten wie z.B. Thiodipropionsäure-di-laurylester oder Thiodipropionsäure-di-stearylester.
8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.
9. Polyamidstabilisatoren, wie z.B. Kupfersalze in Kombination mit Jodiden und/oder Phosphorverbindungen und Salze des zweiwertigen Mangans.
10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.
11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("Ionomere").
12. Füllstoffe und Verstärkungsmittel, wie z.B. Calciumcarbonat, Silikate, Glasfasern, Glaskugeln, Asbest, Talk, Kaolin, Glimmer, Bariumsulfat, Metalloxide und -hydroxide, Ruß, Graphit, Holzmehl und Mehle oder Fasern anderer Naturprodukte, synthetische Fasern.
13. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.
14. Benzofuranone bzw. Indolinone, wie z.B. in US-A-4 325 863, US-A-4 338 244, US-A-5 175 312, US-A-5 216 052, US-A-5 252 643, DE-A4 316 611, DE-A-4 316 622, DE-A-4 316 876, EP-A-0 589 839 oder EP-A-0 591 102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzofuran-2-on, 3,3'-Bis[5,7-di-tert-butyl-3-(4-[2-hydroxyethoxy]-phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.

Die Costabilisatoren, mit Ausnahme der unter Punkt 14 aufgeführten Benzofuranone, werden beispielsweise in Konzentrationen von 0,01 bis 10 %, bezogen auf das Gesamtgewicht des zu stabilisierenden Materials, zugesetzt.

Weitere bevorzugte Zusammensetzungen enthalten neben der Komponente (a) und den Verbindungen der Formel I noch weitere Additive, insbesondere phenolische Antioxidantien, Lichtschutzmittel oder/und Verarbeitungsstabilisatoren.

Besonders bevorzugte Additive sind phenolische Antioxidantien (Punkt 1 der Liste), sterisch gehinderte Amine (Punkt 2.6 der Liste), Phosphite und Phosphonite (Punkt 4 der Liste) und peroxidzerstörende Verbindungen (Punkt 8 der Liste).

Ebenfalls besonders bevorzugte zusätzliche Additive (Stabilisatoren) sind Benzofuran-2-one, wie sie z.B. in US-A-4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 und EP-A-0 591 102 beschrieben werden.

Beispiele für solche Benzofuran-2-one sind Verbindungen der Formel 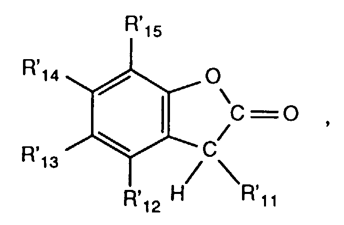 worin
R'₁₁ ein unsubstituiertes oder substituiertes carbocyclisches oder heterocyclisches aromatisches Ringsystem bedeutet;
R'₁₂ Wasserstoff ist;
R'₁₄ Wasserstoff, Alkyl mit 1 bis 12 Kohlenstoffatomen, Cyclopentyl, Cyclohexyl oder Chlor ist;
R'₁₃ die Bedeutung von R'₁₂ oder R'₁₄ hat oder ein Rest der Formel 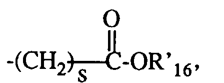 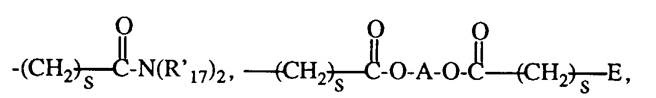 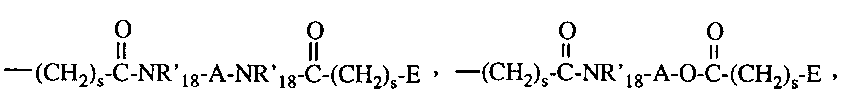 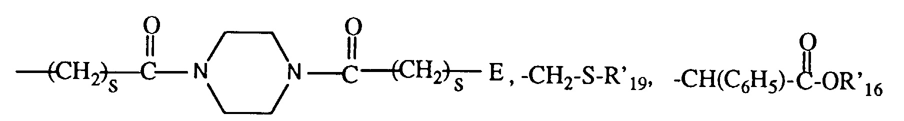 oder -D-E ist, worin
R'₁₆ Wasserstoff, Alkyl mit 1 bis 18 Kohlenstoffatomen, durch Sauerstoff oder Schwefel unterbrochenes Alkyl mit 2 bis 18 Kohlenstoffatomen, Dialkylaminoalkyl mit insgesamt 3 bis 16 Kohlenstoffatomen, Cyclopentyl, Cyclohexyl, Phenyl oder durch 1 bis 3 Alkylreste mit zusammen höchstens 18 Kohlenstoffatomen substituiertes Phenyl ist;
s 0, 1 oder 2 ist;
die Substituenten R'₁₇ unabhängig voneinander Wasserstoff, Alkyl mit 1 bis 18 Kohlenstoffatomen, Cyclopentyl, Cyclohexyl, Phenyl, durch 1 oder 2 Alkylreste mit zusammen höchstens 16 Kohlenstoffatomen substituiertes Phenyl, ein Rest der Formel -C₂H₄OH, -C₂H₄-O-CₜH₂ₜ₊₁ oder 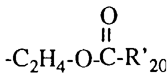 sind oder zusammen mit dem Stickstoffatom, an das sie gebunden sind, einen Piperidin- oder Morpholinrest bilden;
t 1 bis 18;
R'₂₀ Wasserstoff, Alkyl mit 1 bis 22 Kohlenstoffatomen oder Cycloalkyl mit 5 bis 12 Kohlenstoffatomen;
A ein gegebenenfalls durch Stickstoff, Sauerstoff oder Schwefel unterbrochenes Alkylen mit 2 bis 22 Kohlenstoffatomen;
R'₁₈ Wasserstoff, Alkyl mit 1 bis 18 Kohlenstoffatomen, Cyclopentyl, Cyclohexyl, Phenyl, durch 1 oder 2 Alkylreste mit zusammen höchstens 16 Kohlenstoffatomen substituiertes Phenyl oder Benzyl;
R'₁₉ Alkyl mit 1 bis 18 Kohlenstoffatomen bedeutet;
   D -O-, -S-, -SO-, -SO₂- oder -C(R'₂₁)₂- ist;
   die Substituenten R'₂₁ unabhängig voneinander Wasserstoff, C₁-C₁₆-Alkyl sind, wobei die beiden R'₂₁ zusammen 1 bis 16 Kohlenstoffatome enthalten, R'₂₁ ferner Phenyl oder einen Rest der Formel 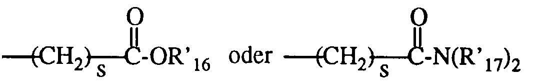 ist, worin s, R'₁₆ und R'₁₇ die oben angegebenen Bedeutungen haben;
E ein Rest der Formel 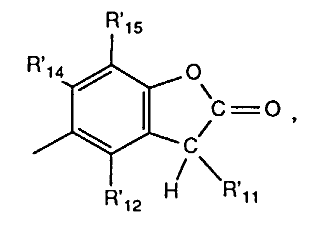 worin R'₁₁, R'₁₂ und R'₁₄ die oben angegebenen Bedeutungen haben; und
R'₁₅ Wasserstoff, Alkyl mit 1 bis 20 Kohlenstoffatomen, Cyclopentyl, Cyclohexyl, Chlor oder ein Rest der Formel 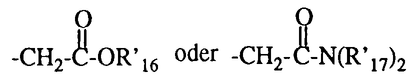 ist, worin R'₁₆ und R'₁₇ die oben angegebenen Bedeutungen haben, oder R'₁₅ zusammen mit R'₁₄ einen Tetramethylenrest bildet.

Bevorzugt sind solche Benzofuran-2-one, in denen R'₁₃ Wasserstoff, Alkyl mit 1 bis 12 Kohlenstoffatomen, Cyclopentyl, Cyclohexyl, Chlor oder ein Rest der Formel 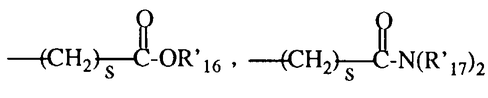 oder -D-E ist, worin s, R'₁₆, R'₁₇, D und E die oben angegebenen Bedeutungen haben, R'₁₆ insbesondere die Bedeutung von Wasserstoff, Alkyl mit 1 bis 18 Kohlenstoffatomen, Cyclopentyl oder Cyclohexyl hat.

Bevorzugt sind weiterhin solche Benzofuran-2-one, in denen R'₁₁ Phenyl oder durch 1 oder 2 Alkylreste mit zusammen höchstens 12 Kohlenstoffatomen substituiertes Phenyl ist; R'₁₂ Wasserstoff; R'₁₄ Wasserstoff oder Alkyl mit 1 bis 12 Kohlenstoffatomen ist; R'₁₃ Wasserstoff, Alkyl mit 1 bis 12 Kohlenstoffatomen, 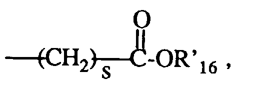 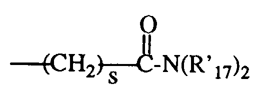 oder -D-E; R'₁₅ Wasserstoff, Alkyl mit 1 bis 20 Kohlenstoffatomen, 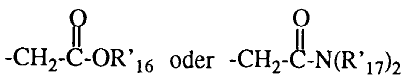 ist oder R'₁₅ zusammen mit R'₁₄ einen Tetramethylenrest bildet, wobei s, R'₁₆, R'₁₇, D und E die zu Anfang angegebenen Bedeutungen haben.

Ebenfalls von besonderem Interesse sind solche Benzofuran-2-one, in denen R'₁₃ Wasserstoff, Alkyl mit 1 bis 12 Kohlenstoffatomen oder -D-E ist; R'₁₂ und R'₁₄ unabhängig voneinander Wasserstoff oder Alkyl mit 1 bis 4 Kohlenstoffatomen sind; und R'₁₅ Alkyl mit 1 bis 20 Kohlenstoffatomen ist, wobei D und E die zu Anfang angegebenen Bedeutungen haben.

Ebenfalls von hervorgehobenem Interesse sind schließlich solche Benzofuran-2-one, in denen R'₁₃ Alkyl mit 1 bis 4 Kohlenstoffatomen oder -D-E ist; R'₁₂ und R'₁₄ Wasserstoff sind; und R'₁₅ Alkyl mit 1 bis 4 Kohlenstoffatomen, Cyclopentyl oder Cyclohexyl ist, wobei D eine Gruppe -C(R'₂₁)₂- und E ein Rest der Formel 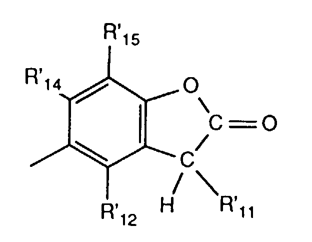 ist, wobei die Substituenten R'₂₁ gleich oder verschieden voneinander sind und je Alkyl mit 1 bis 4 Kohlenstoffatomen sind, und R'₁₁, R'₁₂, R'₁₄ und R'₁₅ die angegebene Bedeutung haben.

Die Menge an zusätzlich eingesetzten Benzofuran-2-onen, kann in weiten Grenzen schwanken. Beispielsweise können sie zu 0,0001 bis 5, vorzugsweise 0,001 bis 2, insbesondere 0,01 bis 2 Gew.-%, in den erfindungsgemäßen Zusammensetzungen enthalten sein.

Die Einarbeitung der Verbindungen der Formel I sowie gegebenenfalls weiterer Additive in das polymere, organische Material erfolgt nach bekannten Methoden, beispielsweise vor oder während der Formgebung oder auch durch Aufbringen der gelösten oder dispergierten Verbindungen auf das polymere, organische Material, gegebenenfalls unter nachträglichem Verdunsten des Lösungsmittels. Die Verbindungen der Formel I können auch in Form eines Masterbatches, der diese beispielsweise in einer Konzentration von 2,5 bis 25 Gew.-% enthält, den zu stabilisierenden Materialien zugesetzt werden.

Die Verbindungen der Formel I können auch vor oder während der Polymerisation oder vor der Vernetzung zugegeben werden.

Die Verbindungen der Formel I können in reiner Form oder in Wachsen, Oelen oder Polymeren verkapselt in das zu stabilisierende Material eingearbeitet werden.

Die Verbindungen der Formel I können auch auf das zu stabilisierende Polymer aufgesprüht werden. Sie sind in der Lage, andere Zusätze (z.B. die oben angegebenen herkömmlichen Additive) bzw. deren Schmelzen zu verdünnen, so dass sie auch zusammen mit diesen Zusätzen auf das zu stabilisierende Polymer aufgesprüht werden können. Besonders vorteilhaft ist die Zugabe durch Aufsprühen während der Desaktivierung der Polymerisationskatalysatoren, wobei z.B. der zur Desaktivierung verwendete Dampf zum Versprühen verwendet werden kann.

Bei kugelförmig polymerisierten Polyolefinen kann es z.B. vorteilhaft sein, die Verbindungen der Formel I, gegebenenfalls zusammen mit anderen Additiven, durch Aufsprühen zu applizieren.

Die so stabilisierten Materialien können in verschiedenster Form angewendet werden, z.B. als Folien, Fasern, Bändchen, Formmassen, Profile oder als Bindemittel für Lacke, Klebstoffe oder Kitte.

Wie bereits erwähnt, handelt es sich bei den zu schützenden organischen Materialien vorzugsweise um organische, besonders synthetische, Polymere. Besonders vorteilhaft werden dabei thermoplastische Materialien geschützt, insbesondere Polyolefine. Vor allem ist dabei die ausgezeichnete Wirksamkeit der erfindungsgemässen Verbindungen der Formel I als Verarbeitungsstabilisatoren (Hitzestabilisatoren) hervorzuheben. Zu diesem Zweck werden sie vorteilhaft vor oder während der Verarbeitung des Polymeren diesem zugesetzt. Aber auch weitere Polymere (z.B. Elastomere) oder Schmierstoffe bzw. Hydraulikflüssigkeiten können gegen Abbau, z.B. lichtinduzierten oder thermooxidativen Abbau, stabilisiert werden. Elastomere sind der obigen Aufzählung von möglichen organischen Materialien zu entnehmen.

Die in Frage kommenden Schmierstoffe und Hydraulikflüssigkeiten basieren beispielsweise auf mineralischen oder synthetischen Ölen oder Mischungen davon. Die Schmierstoffe sind dem Fachmann geläufig und in der einschlägigen Fachliteratur, wie beispielsweise in Dieter Klamann, "Schmierstoffe und verwandte Produkte" (Verlag Chemie, Weinheim, 1982), in Schewe-Kobek, "Das Schmiermittel-Taschenbuch" (Dr. Alfred Hüthig-Verlag, Heidelberg, 1974) und in "Ullmanns Enzyklopädie der technischen Chemie", Bd. 13, Seiten 85-94 (Verlag Chemie, Weinheim, 1977) beschrieben.

Eine bevorzugte Ausführungsform der vorliegenden Erfindung ist daher die Verwendung von Verbindungen der Formel I zum Stabilisieren von organischen Materialien gegen oxidativen, thermischen oder lichtinduzierten Abbau.

Die erfindungsgemässen Verbindungen der Formel I zeichnen sich durch eine ausgeprägt gute Hydrolysestabilität und ein vorteilhaftes Farbverhalten, d.h. geringe Verfärbung der organischen Materialien während der Verarbeitung, aus.

Organische Materialien, die mit den Verbindungen der vorliegenden Erfindung stabilisiert sind, sind besonders gut vor einem lichtinduzierten Abbau geschützt.

Die vorliegende Erfindung betrifft auch ein Verfahren zum Stabilisieren eines organischen Materials gegen oxidativen, thermischen oder lichtinduzierten Abbau, dadurch gekennzeichnet, daß man diesem mindestens eine Verbindung der Formel I einverleibt oder auf dieses aufbringt.

Die folgenden Beispiele erläutern die Erfindung weiter. Angaben in Teilen oder Prozenten beziehen sich auf das Gewicht.

### Beispiel 1: Herstellung der Verbindung (101) (Tabelle 1).

Zu einer unter Stickstoffatmosphäre gerührten Suspension von 1,70 g (8,50 mMol) 1-(2-Hydroxyethyl)-4-hydroxy-2,2,6,6-tetramethylpiperidin [US-A-4 731 448, Ciba-Geigy AG] und 5,95 ml (42,5 mMol) Triethylamin in 17 ml Toluol werden bei Raumtemperatur langsam 2,90 g (17,0 mMol) 2-Chlor-5,5-dimethyl-1,3-dioxaphosphorinan [Houben-Weyl, Methoden der Organischen Chemie, Band El, Seiten 373-376 (1982)] getropft. Das Reaktionsgemisch wird anschliessend noch 3/4 Stunden bei Raumtemperatur weiter gerührt. Dann werden 10 ml Hexan zugegeben. Das ausgefallene Triethylaminhydrochlorid wird abfiltriert und das Filtrat am Vakuumrotationsverdampfer eingeengt. Trocknung des Rückstandes am Hochvakuum liefert 3,3 g (89 %) der Verbindung (101) als farbloses Oel (Tabelle 1).

In Analogie zu Beispiel 1 wird ausgehend vom N-(2,2,6,6-Tetramethylpiperidin-4-yl)-diethanolamin (201) [EP-A-0 047 967, Goodrich Company, Beispiel II, Seite 9] 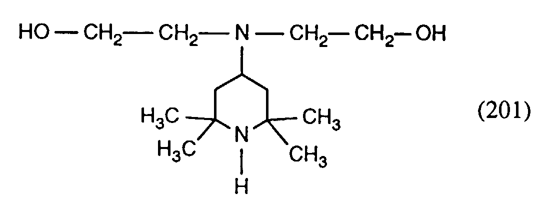 anstelle vom 1-(2-Hydroxyethyl)-4-hydroxy-2,2,6,6-tetramethylpiperidin die Verbindung (102) erhalten.

### Beispiel 2: Herstellung der Verbindung (103) (Tabelle 1).

A) Herstellung der HALS-Diole:
   a) In einen Stahlautoklav werden 42,47g (0,20 Mol) 4-n-Butylamino-2,2,6,6-tetramethylpiperidin [EP-A-302 020, Beispiel 1, Seite 4], 3 ml konzentrierte Salzsäure und 300 ml Methanol vorgelegt. Der Autoklav wird mit Stickstoff inertisiert. Dann werden 26,5 g (0,60 Mol) Ethylenoxid zugepresst und das ganze Reaktionsgemisch auf 150°C erwärmt. Der entstehende Druck beträgt 10 bar. Nach 30 Stunden wird auf Raumtemperatur gekühlt. Ca. 250 ml Methanol werden abdestilliert, der Rückstand auf eine wässrige gesättigte Natriumhydrogencarbonat-Lösung gegossen und mit Essigester dreimal extrahiert. Die organischen Phasen werden mit einer wässrigen, gesättigten Natriumchlorid-Lösung gewaschen, über Natriumsulfat getrocknet und am Vakuumrotationsverdampfer eingeengt. Chromatographie des Rückstandes an Kieselgel mit dem Laufmittelsystem Hexan/Essigester 3:1 bis 1:1 und Essigester liefert 31,5 g (53 %) 2-(n-Butyl-[1-(2-hydroxyethyl)-2,2,6,6-tetramethyl-piperidin-4-yl]amino)ethanol (Verbindung (202)), als hellgelbes Oel. Analyse berechnet: C 67,95 %; H 12,08 %; N 9,32 %. gefunden: C 67,31 %; H 11,98 %; N 9,10 %. 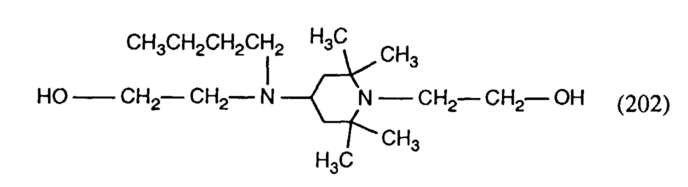
   b) In Analogie zu Beispiel 2Aa wird ausgehend vom bekannten 4-Amino-1,2,2,6,6-pentamethylpiperidin [Beilstein EII, Vol. 22, Seite 321] mit Ethylenoxid das HALS-Diol (203) hergestellt, Smp. 57-64°C. Analyse berechnet: C 65,07 %; H 11,70 %; N 10,84 %. gefunden: C 64,68 %; H 11,43 %; N 10,69 %. 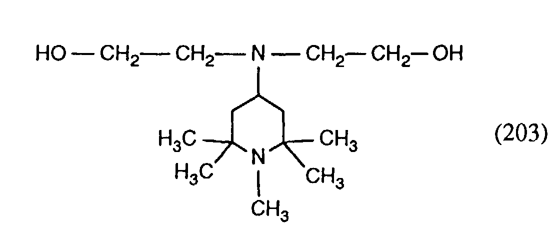
   c) In Analogie zu Beispiel 2Aa wird ausgehend vom bekannten Bis(2,2,6,6-tetramethylpiperidin-4-yl)sebacinsäureester [®Tinuvin 770, Ciba-Geigy AG, US-A-4 396 769] mit Ethylenoxid das HALS-Diol (204) hergestellt. Ausbeute 67 %, Smp. 59-62°C, weisses Pulver. Analyse berechnet: C 67,57 %; H 10,63 %; N 4,92 %. gefunden: C 67,37 %; H 10,67 %; N 4,78 %. 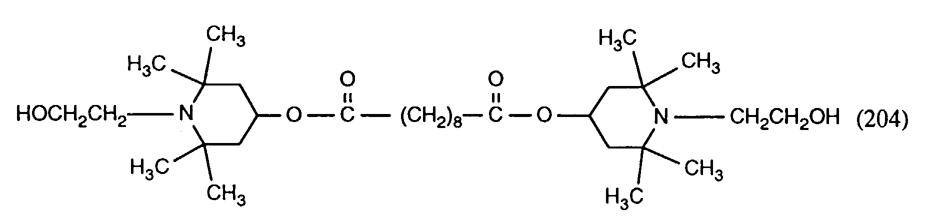
   d)
      1. Zu einer Lösung von 42,4 g (0,23 Mol) Cyanurchlorid in 280 ml Xylol wird unter Stickstoffatmosphäre bei 15°C 99,4 g (0,46 Mol) 4-n-Butylamino-2,2,6,6-tetramethylpiperidin [EP-A-302 020, Beispiel 1, Seite 4] getropft. Das Reaktionsgemisch wird während 30 Minuten bei Raumtemperatur gerührt. Anschliessend wird auf ca. 55°C erwärmt und eine Lösung von 20 g (0,50 Mol) Natriumhydroxid in 50 ml Wasser zugetropft Nach Ende der Zugabe wird das Reaktionsgemisch weitere 30 Minuten bei 55°C gerührt. Die wässrige Phase wird abgetrennt und das Gemisch auf 90°C erwärmt. Gleichzeitig werden 24 g (0,27 Mol) Morpholin und eine Lösung von 10 g (0,25 Mol) Natriumhydroxid in 25 ml Wasser zugetropft. Das Wasser wird azeotrop abdestilliert. Anschliessend wird unter leichtem Vakuum 50 ml Xylol abdestilliert (115°C/0,7 Torr). Das auf ca. 50°C abgekühlte Reaktionsgemisch wird zweimal mit Wasser gewaschen. Die organischen Phasen werden vereinigt und über Hyflo filtriert. Nach Zugabe von 50 ml Wasser und Abkühlen auf 5°C kristallisieren 110 g (82 %) 2-N-Morpholino-4,6-bis[N-n-butyl-(2,2,6,6-tetramethyl-piperidin-4-yl)amino]-1,3,5-triazin als weisses Pulver aus, Smp. 112-114°C. Analyse berechnet: C 67,53 %; H 10,65 %; N 19,09 %. gefunden: C 67,28 %; H 10,70 %; N 19,06 %.
      2. In Analogie zu Beispiel 2Aa wird ausgehend vom 2-N-Morpholino-4,6-bis[N-n-butyl-(2,2,6,6-tetramethyl-piperidin-4-yl)amino]-1,3,5-triazin (Beispiel 2Ad1) mit Ethylenoxid das HALS-Diol (205) hergestellt. Smp. 114-117°C. Analyse berechnet: C 65,84 %; H 10,45 %; N 16,60 %. gefunden: C 65,86 %; H 10,33 %; N 16,01 %. 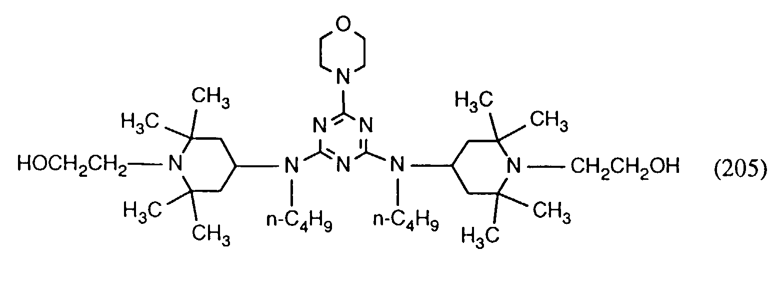
   e)
      1. In einem 200 ml Sulfierkolben werden 40,48 g (0,14 Mol) Bis(2,2,6,6-tetramethyl-piperidin-4-yl)amin [EP-A-336 895, Ciba-Geigy] und 11,4 g (0,14 Mol) einer 36 % wässrigen Formaldehyd-Lösung vorgelegt. Bei Raumtemperatur werden 25,8 g (0,56 Mol) Ameisensäure zugetropft. Dabei steigt die Innentemperatur unter CO₂-Entwicklung auf 70°C an. Das Reaktionsgemisch wird bis zum Abkühlen auf Raumtemperatur weiter gerührt, die wässrige Phase mit Kaliumcarbonat gesättigt und das Reaktionsgemisch mit Chloroform dreimal extrahiert. Die organischen Phasen werden vereinigt, über Kaliumcarbonat getrocknet und am Vakuumrotationsverdampfer eingeengt. Chromatographie des Rückstandes an Kieselgel mit dem Laufmittelsystem Hexan/Dichlormethan 9:1 + 5 % Triethylamin liefert 21 g (49 %) des Methyl-bis-(2,2,6,6-tetramethyl-piperidin-4-yl)amins, Smp. 51-53°C, als weisses Pulver. ¹H-NMR (300 MHz, CDCl₃): δ = 2,25 ppm (s, 3H) Methylgruppe am Stickstoff.
      2. In Analogie zu Beispiel 2Aa wird ausgehend vom Methyl-bis(2,2,6,6-tetramethylpiperidin-4-yl)amin (Beispiel 2Ael) mit Ethylenoxid das HALS-Diol (206) hergestellt Analyse berechnet: C 69,47 %; H 11,91 %; N 10,57 %. gefunden: C 68,31 %; H 12,16 %; N 10,50 %. 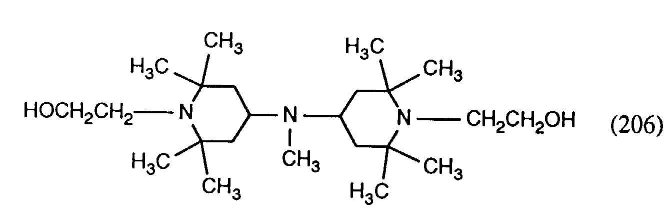
   f) Das HALS-Diol (207) ist bekannt und die Herstellung in US-A-4 210 576 (Montedison), Seite 5, Beispiel 1, beschrieben. 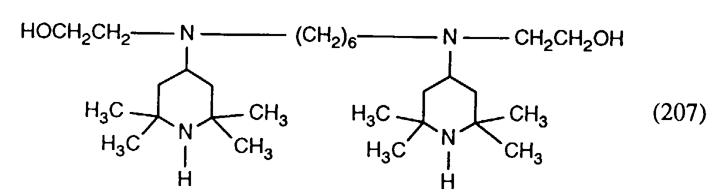
   g)
      1. Zu einer Lösung von 69,7 g (0,13 Mol) 2,4-Bis[N-(2,2,6,6-tetramethyl-4-piperidinyl)butylamino]-6-chloro-1,3,5-triazin [EP-A-314 472, Sankyo] in 400 ml Toluol wird bei Raumtemperatur und unter Stickstoffatmosphäre 63,5 g (0,195 Mol) einer 21 %igen Natriumethylat-Lösung in Toluol getropft Anschliessend wird das Reaktionsgemisch während 20 Stunden unter Rückfluss gekocht. Nach dem Abkühlen auf Raumtemperatur wird das Reaktionsgemisch nacheinander mit Wasser, 1N Natriumhydrogencarbonat-Lösung, Wasser und gesättigter Natriumchlorid-Lösung gewaschen. Die organischen Phasen werden vereinigt, über Kaliumcarbonat getrocknet und am Vakuumrotationsverdampfer eingeengt. Kristallisation des Rückstandes aus Acetonitril liefert 52,2 g (74 %) 2-Ethoxy-4,6-bis[N-(2,2,6,6-tetramethyl-4-piperidinyl)-butylamino]-1,3,5-triazin, Smp. 95-104°C, weisses Pulver, ¹H-NMR (300 MHz, CDCl₃): δ = 4,345 ppm (q, J = 7 Hz) -O**CH**_{**2**}CH₃.
      2. In einem 11 Autoklav werden 38,5 g (0,07 Mol) 2-Ethoxy-4,6-bis[N-(2,2,6,6-tetramethyl-4-piperidinyl)butylamino]-1,3,5-triazin (Beispiel 2Ag1), 140 ml Ethanol und 70 ml Wasser vorgelegt Der Autoklav wird mit Stickstoff inertisiert. Anschliessend werden 12,4 g (0,28 Mol) Ethylenoxid zugepresst und das Reaktionsgemisch auf 90°C erwärmt (Druck = 2 bar). Nach 2 Stunden wird auf 30°C abgekühlt und nochmals 12,4 g (0,28 Mol) Ethylenoxid zugepresst. Das Reaktionsgemisch wird auf 100°C erwärmt und während 3 Stunden bei dieser Temperatur gehalten (Druck = 3 bar). Nach dem Abkühlen auf Raumtemperatur wird das Reaktionsgemisch am Vakuumrotationsverdampfer eingeengt. Der Rückstand wird in 100 ml Acetonitril gelöst und heiss filtriert. Beim Abkühlen kristallisieren 40 g (90 %) des HALS-Diols (208), Smp. 160-170°C, als weisses Pulver aus. Analyse berechnet: C 66,31 %; H 10,65 %; N 15,47 %. gefunden: C 66,23 %; H 10,61 %; N 15,34 %. 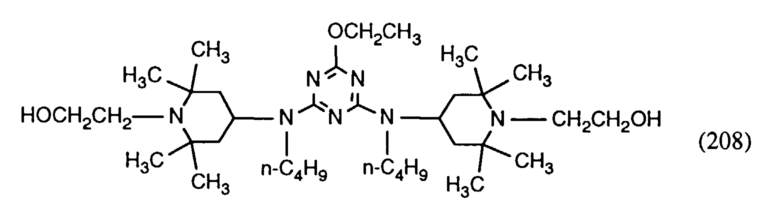
   h) 1.
      Zu einer Lösung von 42,5 g (0,20 Mol) 4-n-Butylamino-2,2,6,6-tetramethylpiperidin [EP-A-302 020, Beispiel 1, Seite 4] und 50 ml (36,3 g; 0,36 Mol) Triethylamin in 300 ml Toluol wird unter Stickstoffatmosphäre bei 12-13°C 16,5 g (0,21 Mol) Acetylchlorid getropft. Das Reaktionsgemisch wird während 3 Stunden bei Raumtemperatur gerührt. Das ausgefallene Triethylaminhydrochlorid wird abfiltriert und das Filtrat am Vakuumrotationsverdampfer eingeengt. Destillation des Rückstandes (90-92°C, 0,05 mbar) liefert 38,7 g (76 %) N-n-Butyl-N-(2,2,6,6-tetramethyl-4-piperidinyl)acetamid als viskoses Oel.
      2. In Analogie zu Beispiel 2Ag2 wird ausgehend von 25,4 g (0,10 Mol) N-n-Butyl-N-(2,2,6,6-tetramethyl-4-piperidinyl)-acetamid [Beispiel 2Ahl] und 17,6 g (0,40 Mol) Ethylenoxid in 100 ml Wasser und 100 ml Ethanol 27,2 g Rohprodukt erhalten. Chromatographie an Kieselgel mit dem Laufmittelsystem Essigester/Ethanol/Triethylamin = 30:1:1 liefert 17,2 (58 %) des gewünschten N-n-Butyl-N-[1-(2-hydroxyethyl)-2,2,6,6-tetramethyl-piperidin-4-yl]-acetamids als viskoses Oel, das sich beim Lagern verfestigt, Smp. 72-82°C. Analyse berechnet: C 68,41 %; H 11,48 %; N 9,39 %. Analyse gefunden: C 67,99 %; H 11,96 %; N 9,14 %.
      3. Eine Lösung von 12,6 g (42,2 mMol) N-n-Butyl-N-[1-(2-hydroxyethyl)-2,2,6,6-tetramethyl-piperidin-4-yl]-acetamid [Beispiel 2Ah2] in 180 ml 2N Salzsäure wird während 48 Stunden am Rückfluss gekocht. Anschliessend wird das Reaktionsgemisch auf 0-5°C abgekühlt und mit 40 ml 30 %iger Natriumhydroxid-Lösung versetzt und zweimal mit Toluol extrahiert. Die organischen Phasen werden mit Wasser gewaschen, vereinigt, über Natriumsulfat getrocknet und am Vakuumrotationsverdampfer eingeengt. Chromatographie des Rückstandes an Kieselgel mit dem Laufmittelsystem Essigester/Ethanol/Triethylamin = 50:2:1 liefert 8,1 g (68 %) des 2-(4-n-Butylamino-2,2,6,6-tetramethyl-piperidin-1-yl)-ethanols (209) als weisses Pulver, Smp. 106-111°C. Analyse berchnet: C 70,26 %; H 12,58 %; N 10,92 %. Analyse gefunden: C 70,42 %; H 12,85 %; N 11,00 %. 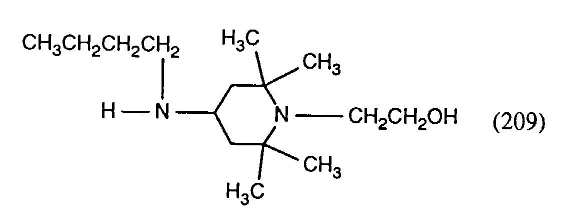
   i) In einem Rundkolben mit Magnetrührer und Kühler werden unter Argon-Atmosphäre 833 g (5,30 Mol) 4-Hydroxy-2,2,6,6-tetramethylpiperidin und 418 g (1,05 Mol) 2-Butin-1,4-diol-ditosylat [C.A. Registry No. 6337-59-3] in 3,6 Acetonitril vorgelegt. Das Reaktionsgemisch wird über Nacht am Rückluss gekocht. Anschliessend wird das Reaktionsgemisch abgekühlt, auf Eis gegossen und mehrmals mit Essigester extrahiert. Die organischen Phasen werden vereinigt, über Natriumsulfat getrocknet und am Vakuumrotationsverdampfer eingeengt. Kristallisation des Rückstandes aus Ethanol liefert 295 g (76 %) 1,4-Bis(4-hydroxy-2,2,6,6-tetramethylpiperidin-1-yl)-but-2-in (210), Smp. 203,4°C, weisse Kristalle. Analyse berechnet: C 72,48 %; H 11,06 %; N 7,68 %. gefunden: C 72,52 %; H 11,12 %; N 7,75 %. 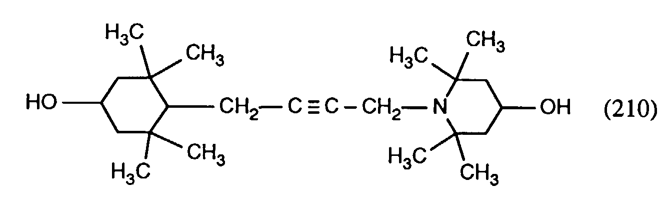
   k)
      1. Zu einer unter Stickstoffatmosphäre gerührten Lösung von 12,8 g (60 mMol) 4-(2-Hydroxyethylamino)-1,2,2,6,6-pentamethylpiperidin [US-A-3 904 581, Sankyo] in 120 ml Dioxan wird bei 40°C eine Lösung von 5,4 g (29 mMol) Cyanurchlorid in 40 ml Dioxan getropft. Nach Ende der Zugabe (ca. 15 Minuten) wird das Reaktionsgemisch während 3 Stunden unter Rückfluss gekocht. Die erhaltene Suspension wird auf Raumtemperatur abgekühlt und das ausgefallene Produkt abfiltriert. Dieses wird in einer kalten Ammoniak-Lösung aufgenommen und erneut filtriert. Kristallisation des Rückstandes aus Toluol liefert 11,0 g (71 %) des 2,4-Bis[2-hydroxy-N-(1,2,2,6,6-pentamethyl-4-piperidinyl)ethylamino]-6-chloro-1,3,5-triazin, Smp. 166-176°C, als weisses Pulver. Analyse berechnet: C 60,03 %; H 9,33 %; N 18,15 %; Cl 6,56 %. gefunden: C 60,01 %; H 9,36 %; N 17,97 %; Cl 6,70 %.
      2. Unter einer Stickstoffatmosphäre wird eine Lösung von 5,40 g (10,0 mMol) 2,4-Bis[2-hydroxy-N-(1,2,2,6,6-pentamethyl-4-piperidinyl)ethylamino]-6-chloro-1,3,5-triazin (Beispiel 2Akl) und 2,0 g (15,0 mMol) n-Octylamin in 100 ml Dioxan während 6 Stunden unter Rückfluss gekocht. Anschliessend wird das Dioxan abdestilliert, der Rückstand auf eine 10 % wässrige Natriumcarbonat-Lösung gegossen und mit Essigester extrahiert. Die organischen Phasen werden vereinigt, über Magnesiumsulfat getrocknet und am Vakuumrotationsverdampfer eingeengt. Chromatographie des Rückstandes an Kieselgel mit dem Laufmittelsystem Essigester/Ethanol/Triethylamin 20:1:1 liefert 5,5 g (87 %) des HALS-Diols (211), Smp. 55-62. Analyse berechnet: C 66,41 %; H 10,83 %; N 17,70 %. gefunden: C 65,90 %; H 11,08 %; N 17,58 %. 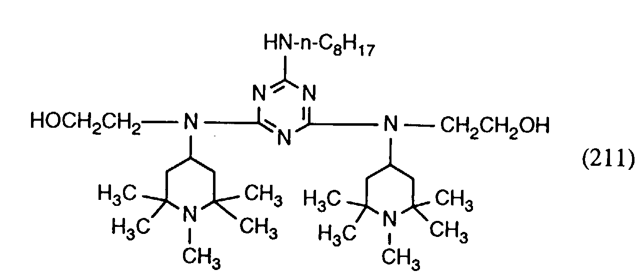
   l) In Analogie zu Beispiel 2Ak2 wird anstelle von n-Octylamin mit 4-Butylamino-1,2,2,6,6-pentamethylpiperidin das HALS-Diol (212) hergestellt. Smp. 215-225°C. Analyse berechnet: C 67,45 %; H 10,91 %; N 17,27 %. gefunden: C 66,94 %; H 11,06 %; N 17,12 %. 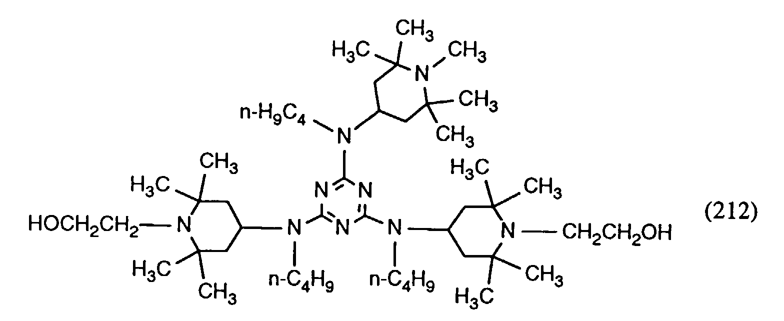
   m) Das HALS-Diol (213) ist bekannt und in DE-A-2 233 121 (Sankyo, Beispiel 7, Seite 21, Zeilen 1 und 2) beschrieben. 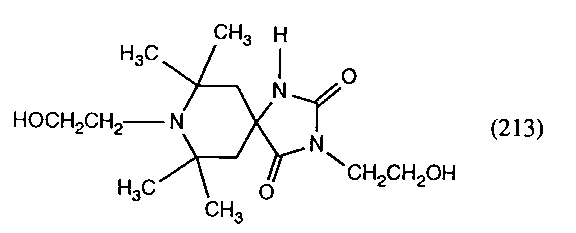
   n) Das HALS-Diol (214) ist bekannt und in US-A-4 569 997 (Ciba-Geigy, Beispiel 1, Kolonne 14) beschrieben. 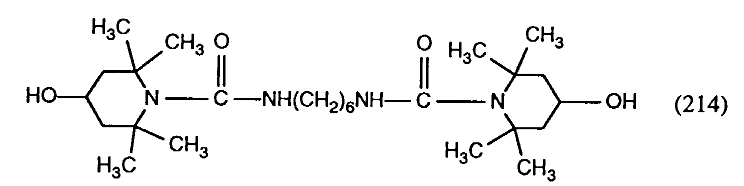
   o) In einem 11 Autoklav werden 12,1 g (47,0 mMol) 9-Aza-3-hydroxymethyl-3,8,8,10,10-pentamethyl-1,5-dioxospiro[ 5.5]undecan (DE-A-2 353 538, Sankyo, Beispiel 1, Seite 38), 50 ml Ethanol und 50 ml Wasser vorgelegt. Der Autoklav wird mit Stickstoff inertisiert. Anschliessend werden 8,2 g (188 mMol) Ethylenoxid zugepresst und das Reaktionsgemisch auf 90°C erwärmt (Druck = 2 bar). Nach 2 Stunden wird auf 30°C abgekühlt und nochmals 8,2 g (188 mMol) Ethylenoxid zugepresst. Das Reaktionsgemisch wird auf 100°C erwärmt und während 3 Stunden bei dieser Temperatur gehalten (Druck = 3 bar). Nach dem Abkühlen auf Raumtemperatur wird das Reaktionsgemisch am Vakuumrotationsverdampfer eingeengt. Der Rückstand wird in Essigester gelöst und an Kieselgel mit dem Laufmittel Essigester chromatographiert. Kristallisation der reinen Fraktionen aus Toluol/Hexan = 9:1 liefert 11,15 g (79 %) des HALS-Diols (215), Smp. 110-115°C, als weisses Pulver aus. Analyse berechnet: C 63,76 %; H 10,37 %; N 4,65 %. gefunden: C 64,04 %; H 10,32 %; N 4,45 %. 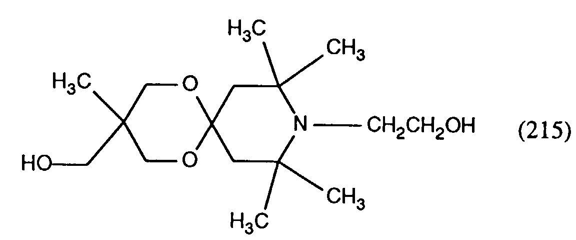
   p) Das HALS-Diol (216) ist ebenfalls bekannt und die Herstellung in JP-A-57 21 368 (Adeka Argus, Beispiel 7) beschrieben. 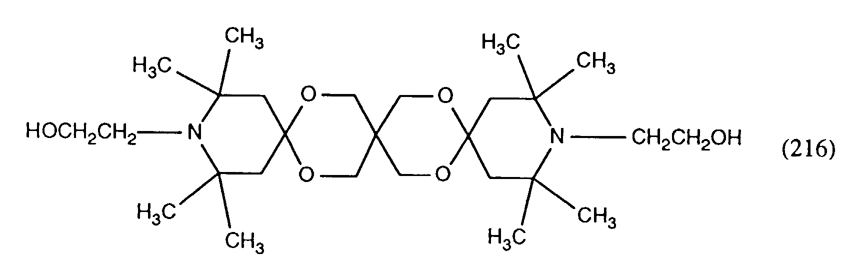
B) Zu einer unter Stickstoffatmosphäre gerührten Lösung von 2,43 g (3,60 mMol) 2N-Morpholino-4,6-bis-[N-n-butyl-(N-2'-hydroxyethyl-2,2,6,6-tetrarnethylpiperidin-4-yl)-amino]-1,3,5-triazin [Beispiel 2Ad, Verbindung (205)] und 2,5 ml (18,0 mMol) Triethylamin in 24 ml Toluol wird bei Raumtemperatur langsam 1,24 g (7,35 mMol) 2-Chlor-5,5-dimethyl- 1,3-dioxaphosphorinan [Houben-Weyl, Methoden der Organischen Chemie, Band El, Seiten 373-376 (1982)] getropft. Das Reaktionsgemisch wird anschliessend noch eine Stunde bei 40°C weiter gerührt Das ausgefallene Triethylaminhydrochlorid wird abfiltriert und das Filtrat am Vakuumrotationsverdampfer eingeengt. Kristallisation des Rückstandes aus Acetonitril liefert 2,75 g (81 %) der Verbindung (103) (Tabelle 1) als weisses Pulver, Smp. 98-105°C.

In Analogie zu Beispiel 2B werden ausgehend von den HALS-Diolen (208) [Beispiel 2Ag], (213) [Beispiel 2Am], (214) [Beispiel 2An] und (216) [Beispiel 2Ap] anstelle von 2N-Morpholino-4,6-bis-[N-n-butyl-(N-2'-hydroxyethyl-2,2,6,6-tetramethylpiperidin-4-yl)-amino]-1,3,5-triazin die Verbindungen (104), (105), (106) und (108) erhalten (Tabelle 1).

In Analogie zu Beispiel 2B wird ausgehend vom Spirophosphorinan (301) [Inorganic Chemistry 31 (7), 1279-85 (1992)] 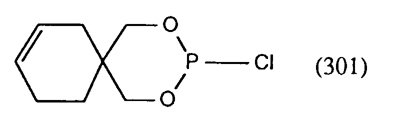 und dem HALS-Diol (215) [Beispiel 2Ao] die Verbindung (107) erhalten (Tabelle 1).

In Analogie zu Beispiel 2B wird ausgehend vom HALS-Diol (211) [Beispiel 2Ak] die Verbindung (109) erhalten (Tabelle 1).

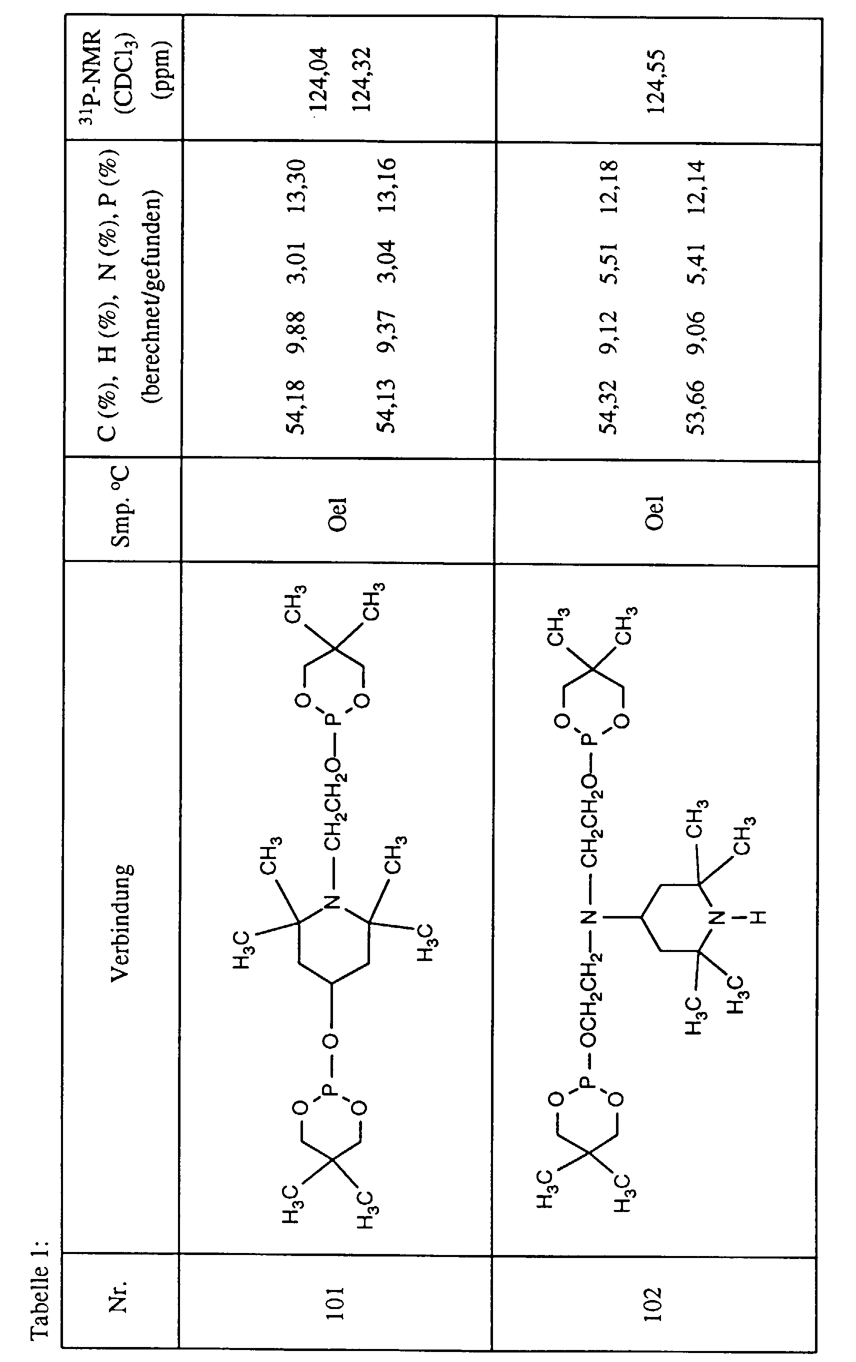

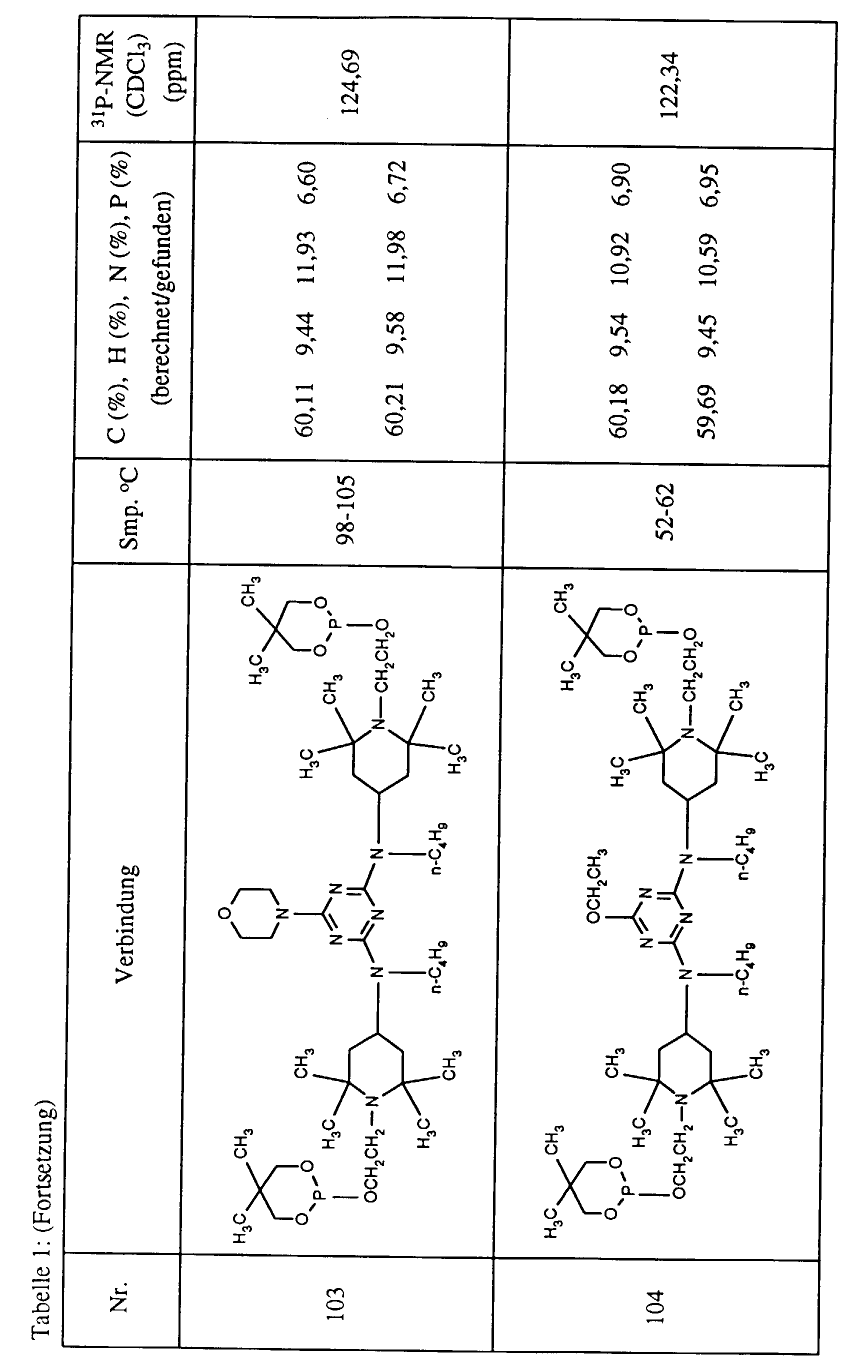

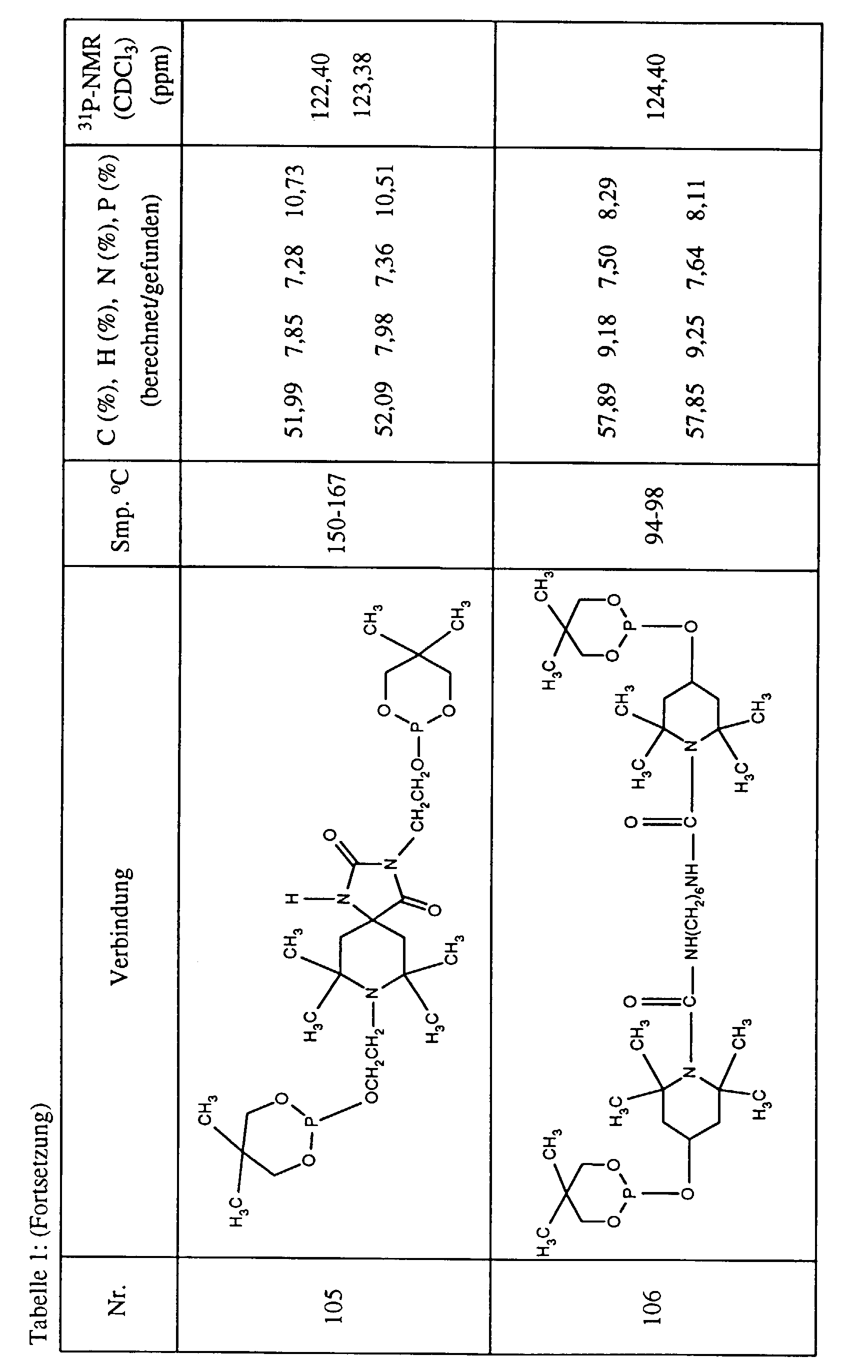

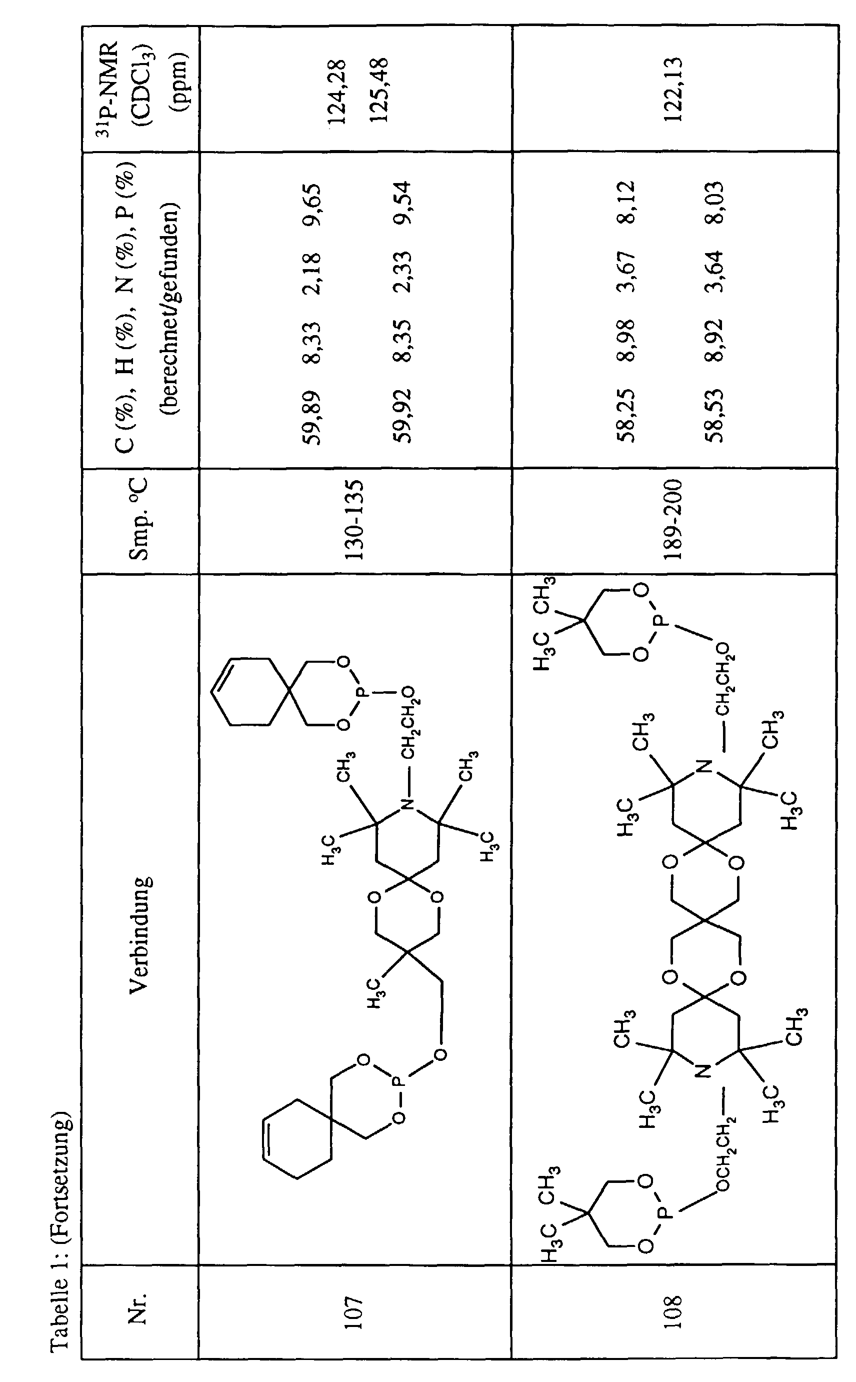

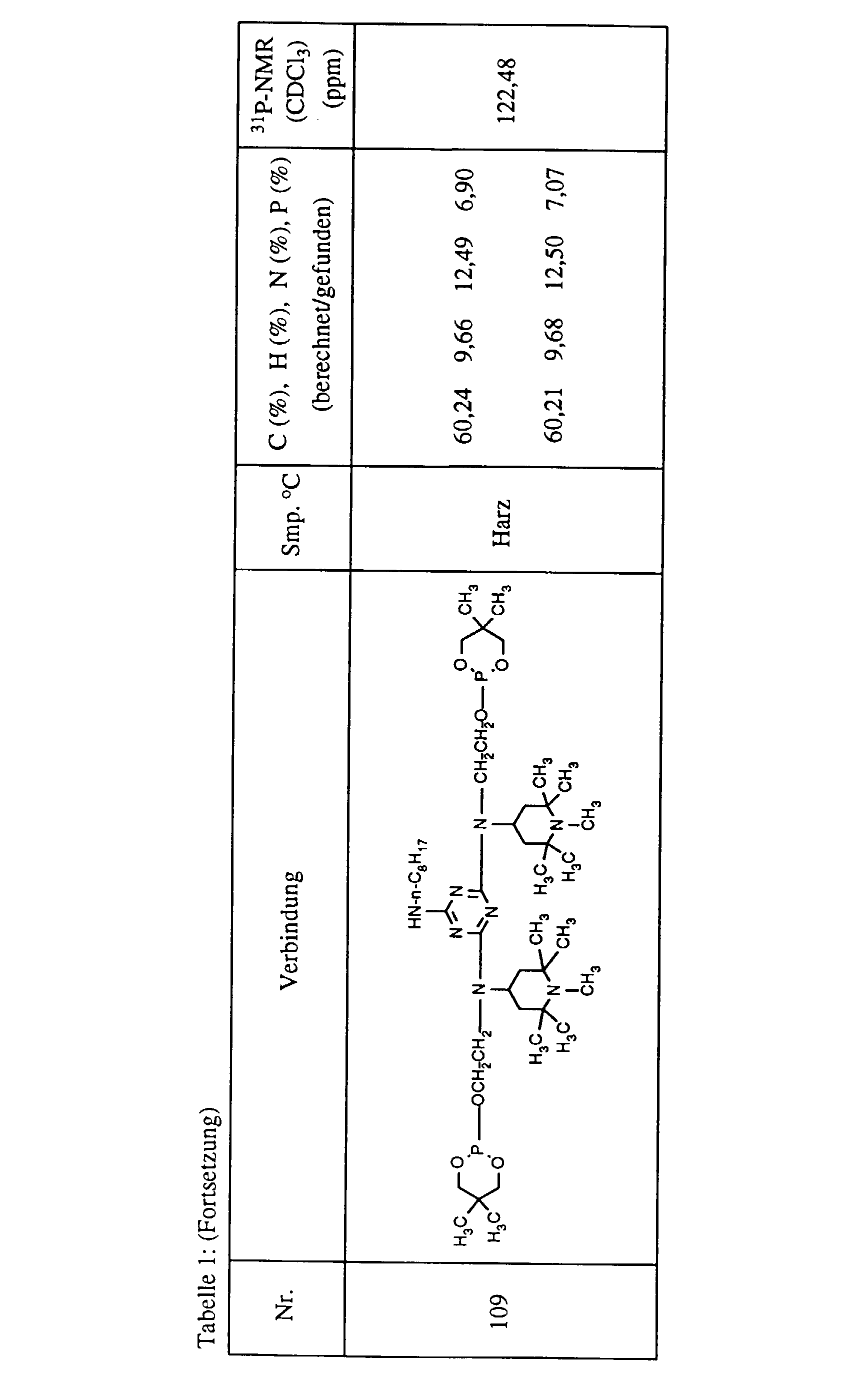

### Beispiel 3: Stabilisierung von Polypropylen bei Mehrfachextrusion.

1,3 kg Polypropylenpulver (®Profax 6501), das mit 0,025 % Irganox® 1076 (3-[3,5-di-tert-butyl-4-hydroxyphenyl] propionsäure-n-octadecylester) vorstabilisiert wurde, (mit einem bei 230°C und mit 2,16 kg gemessenen Schmelzindex von 3,2) werden gemischt mit 0,05 % Irganox® 1010 (Pentaerythrityl-tetrakis-[3-(3,5-di-tert-butyl-4-hydroxyphenyl)-propionat]), 0,05 % Calciumstearat, 0,03 % Dihydrotalcit [DHT 4A®, Kyowa Chemical Industry Co., Ltd., Mg_{4.5}Al₂(OH)₁₃CO₃•3,5 H₂O] und 0,05 % der Verbindung aus Tabelle 1. Diese Mischung wird in einem Extruder mit einem Zylinderdurchmesser von 20 mm und einer Länge von 400 mm mit 100 Umdrehungen pro Minute extrudiert, wobei die 3 Heizzonen auf die folgenden Temperaturen eingestellt werden: 260, 270, 280°C. Das Extrudat wird zur Kühlung durch ein Wasserbad gezogen und anschliessend granuliert. Dieses Granulat wird wiederholt extrudiert. Nach 3 Extrusionen wird der Schmelzindex gemessen (bei 230°C mit 2,16 kg). Grosse Zunahme des Schmelzindex bedeutet starken Kettenabbau, also schlechte Stabilisierung. Die Resultate sind in Tabelle 2 zusammengefasst.

**Tabelle 2:**

| Verbindung aus Tabelle 1 | Schmelzindex nach 3 Extrusionen |
|---|---|
| - | 20,0 |
| 101 | 5,8 |
| 102 | 6,0 |
| 103 | 6,1 |
| 104 | 6,2 |
| 105 | 5,9 |
| 108 | 5,8 |
| 109 | 5,6 |

## Patentansprüche

1. Verbindungen der Formel I 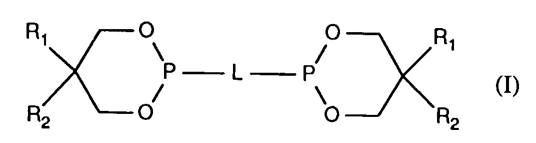 worin L eine Gruppe der Formel II oder III 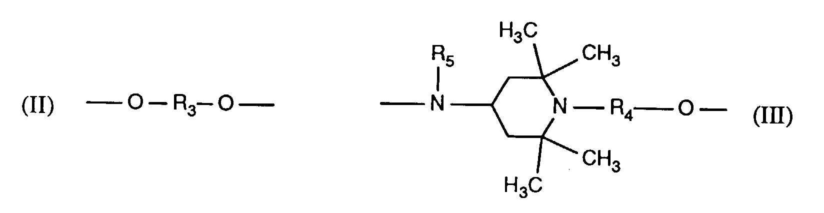 bedeutet, worin
R₁ und R₂ unabhängig voneinander Wasserstoff oder C₁-C₄-Alkyl bedeuten oder zusammen mit dem Kohlenstoffatom, an das sie gebunden sind, einen 3,4-Dehydrocyclohexylidenring oder 5-Norbornenylidenring bilden,
R₃ eine Gruppe der Formel IV bis XVI 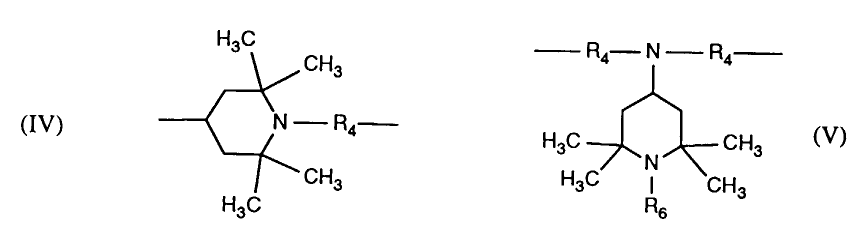 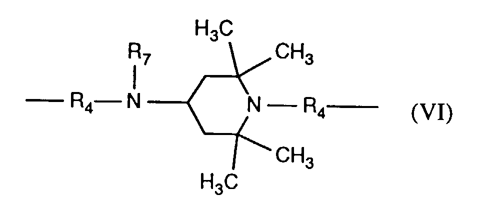 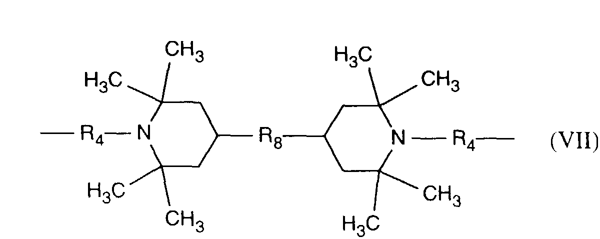 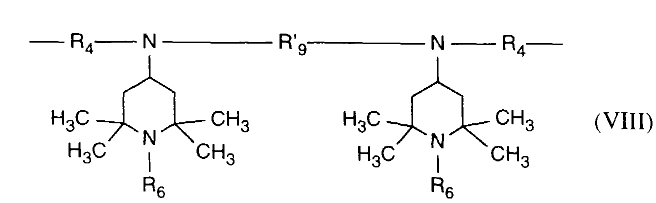 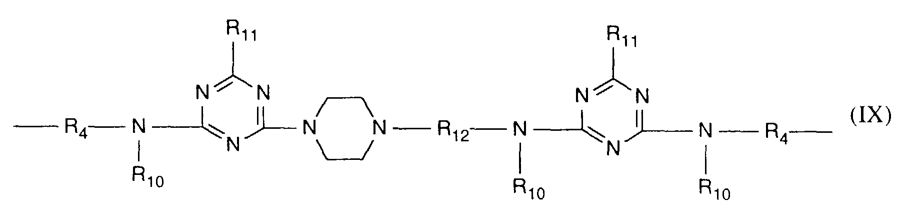 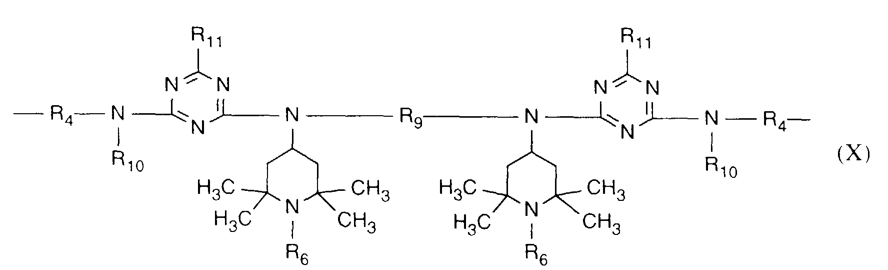 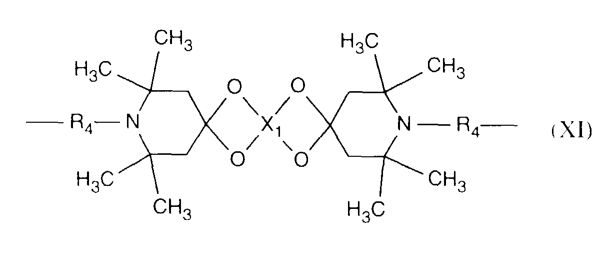 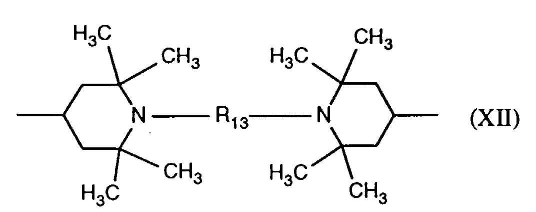 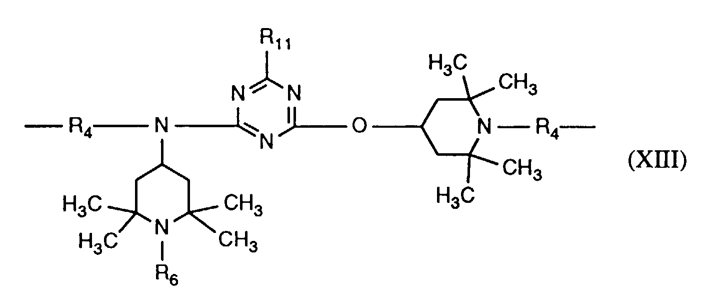 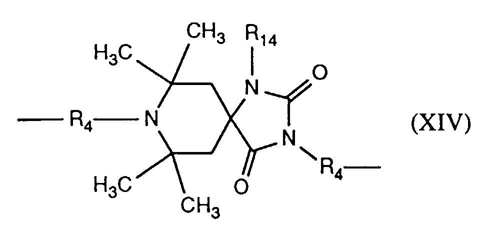 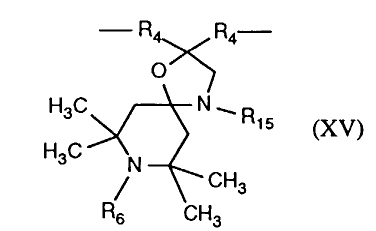 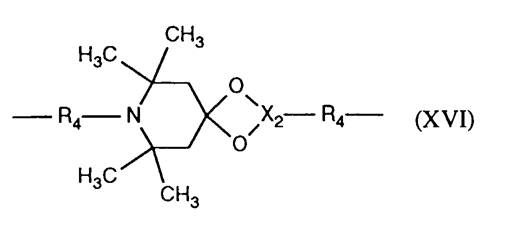 bedeutet,
R₄ C₁-C₁₈-Alkylen, durch Sauerstoff, Schwefel oder 〉N-R₁₆unterbrochenes C₂-C₁₈-Alkylen; C₄-C₈-Alkenylen oder Phenylethylen darstellt,
R₅ C₁-C₈-Alkyl oder einen Rest der Formel XVII 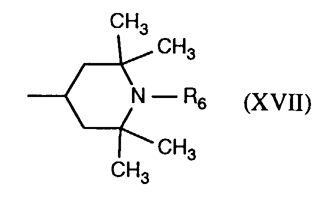 bedeutet,
R₆ Wasserstoff, C₁-C₈-Alkyl, O^{•}, OH, NO, -CH₂CN, C₁-C₁₈-Alkoxy, C₅-C₁₂-Cycloalkoxy, C₃-C₆-Alkenyl, C₃-C₆-Alkinyl, C₁-C₈-Acyl, unsubstituiertes oder am Phenylring durch C₁-C₄-Alkyl substituiertes C₇-C₉-Phenylalkyl darstellt;
R₇ C₁-C₈-Alkyl oder einen Rest der Formel XVII 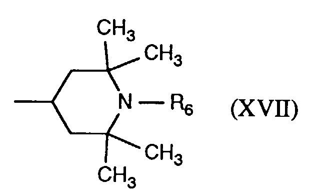 bedeutet,
R₈ 〉N-R₁₇, 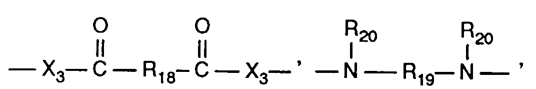 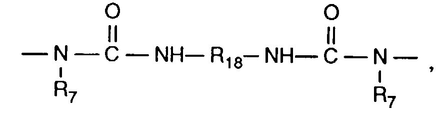 ―O―R₁₉―O―, 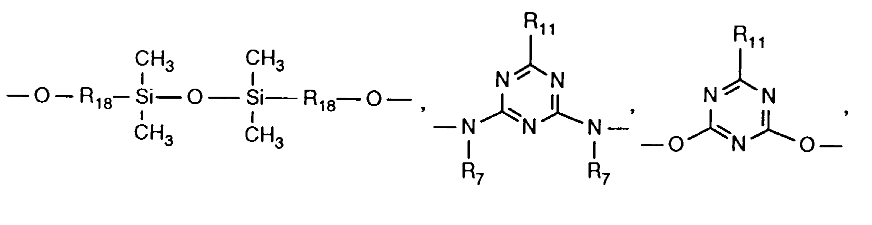 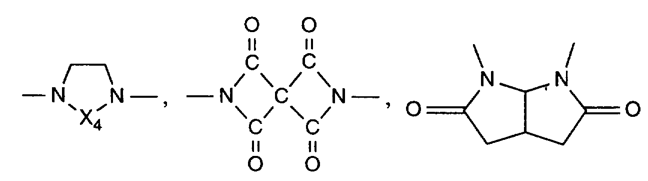 oder 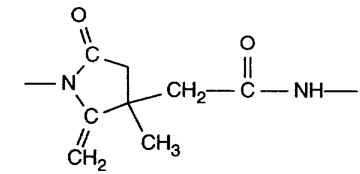 darstellt,
R₉ 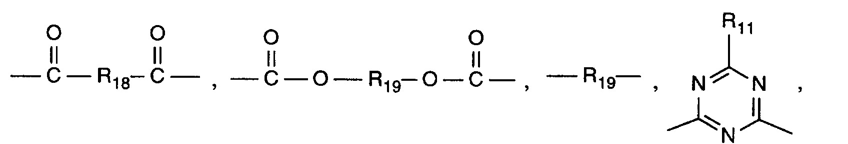 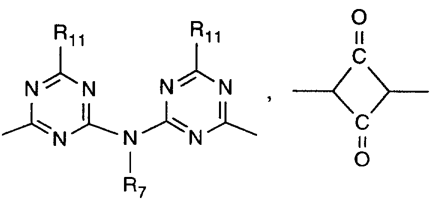 oder 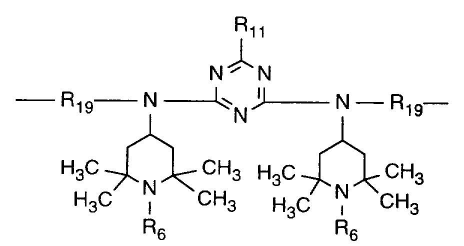 bedeutet.
R'₉ 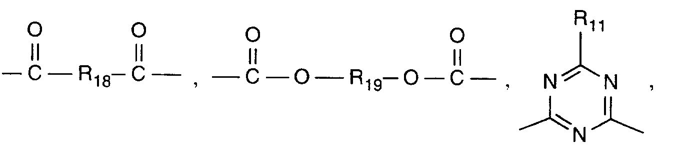 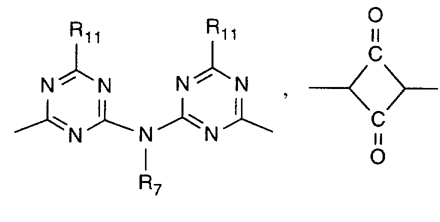 oder 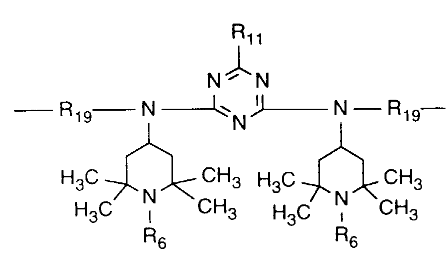 bedeutet,
R₁₀ C₁-C₈-Alkyl oder einen Rest der Formel XVII 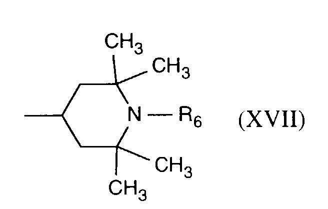 darstellt,
R₁₁ -OR₂₁, -NHR₂₂, 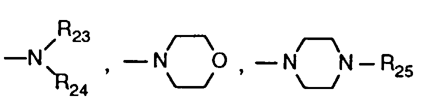 oder -SR₂₁ bedeutet,
R₁₂ und R₁₃ unabhängig voneinander 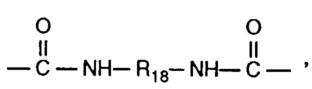 C₁-C₁₈-Alkylen, durch Sauerstoff, Schwefel oder 〉N-R₁₆ unterbrochenes C₂-C₁₈-Alkylen; C₂-C₁₈-Alkenylen, C₂-C₁₈-Alkinylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen oder Naphthylen; 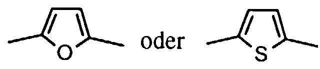 darstellen,
R₁₄ und R₁₅ unabhängig voneinander Wasserstoff oder C₁-C₈-Alkyl bedeuten,
R₁₆ Wasserstoff oder C₁-C₈-Alkyl darstellt,
R₁₇ C₁-C₈-Alkyl bedeutet,
R₁₈ eine direkte Bindung, C₁-C₁₈-Alkylen, durch Sauerstoff, Schwefel oder 〉N-R₁₆ unterbrochenes C₂-C₁₈-Alkylen; C₂-C₁₈-Alkenylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen oder Naphthylen; 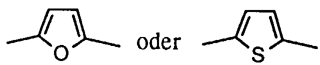 darstellt,
R₁₉ C₁-C₁₈-Alkylen, durch Sauerstoff, Schwefel oder 〉N-R₁₆ unterbrochenes C₂-C₁₈-Alkylen; C₂-C₁₈-Alkenylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen oder Naphthylen; 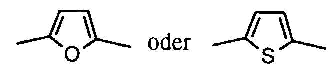 bedeutet,
R₂₀ C₁-C₂₅-Alkanoyl, unsubstituiertes oder durch C₁-C₁₂-Alkyl substituiertes Benzovl: oder 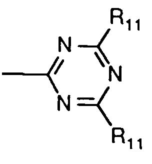 darstellt,
R₂₁ C₁-C₂₅-Alkyl, durch Sauerstoff, Schwefel oder 〉N-R₁₆ unterbrochenes C₂-C₂₅-Alkyl; C₂-C₂₄-Alkenyl, unsubstituiertes oder durch C₁-C₄-Alkyl substituiertes C₅-C₁₅-Cycloalkyl; unsubstituiertes oder durch C₁-C₄-Alkyl substituiertes C₅-C₁₅-Cycloalkenyl; unsubstituiertes oder am Phenylring durch C₁-C₄-Alkyl substituiertes C₇-C₉-Phenylalkyl; unsubstituiertes oder durch C₁-C₄-Alkyl substituiertes Phenyl darstellt;
R₂₂, R₂₃, R₂₄ und R₂₅ unabhängig voneinander Wasserstoff, C₁-C₁₈-Alkyl oder einen Rest der Formel XVII 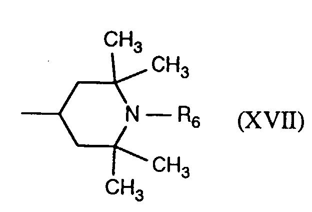 bedeuten,
R₂₆ C₁-C₄-Alkyl oder Hydroxymethyl darstellt,
R₂₇ Wasserstoff oder C₁-C₈-Alkyl bedeutet,
R₂₈ Wasserstoff, C₁-C₈-Alkyl oder einen Rest der Formel XVII 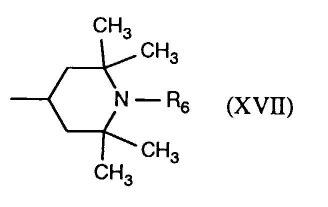 darstellt,
R₂₉ Wasserstoff, C₁-C₂₀-Alkyl, C₅-C₁₂-Cycloalkyl, unsubstituiertes oder durch C₁-C₄-Alkyl substituiertes Phenyl bedeutet,
X₁ eine Gruppe der Formel XVIII, XIX, XX oder XXI 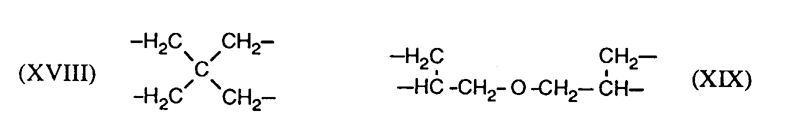 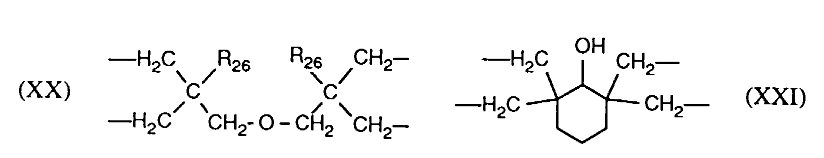 bedeutet,
X₂ 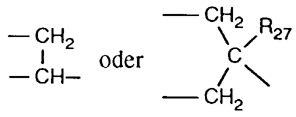 darstellt,
X₃ Sauerstoff oder 〉N-R₂₈ bedeutet, und
X₄ 〉C=O, 〉C=S oder 〉CH-R₂₉ darstellt.

2. Verbindungen gemäss Anspruch 1, worin R₄ C₂-C₄-Alkylen bedeutet.

3. Verbindungen gemäss Anspruch 1, worin
R₄ C₁-C₁₂-Alkylen, durch Sauerstoff oder Schwefel unterbrochenes C₄-C₁₈-Alkylen; oder C₄-C₈-Alkenylen darstellt,
R₅ C₁-C₈-Alkyl bedeutet,
R₆ Wasserstoff, C₁-C₈-Alkyl, O^{•}, C₄-C₁₈-Alkoxy, C₅-C₈-Cycloalkoxy, C₃-C₆-Alkenyl, C₃-C₆-Alkinyl, C₁-C₆-Acyl oder Benzyl darstellt,
R₇ C₁-C₈-Alkyl bedeutet,
R₈ 〉N-R₁₇, 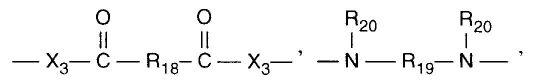 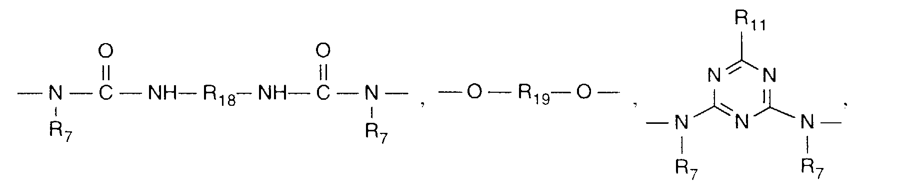 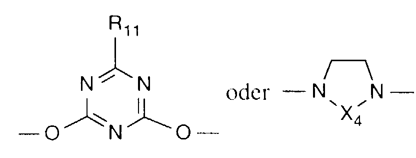 darstellt,
R₉ 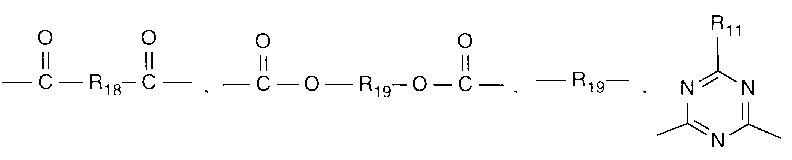 oder 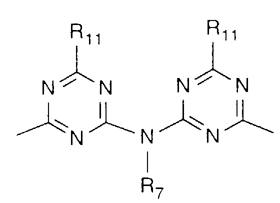 bedeutet,
R'₉ 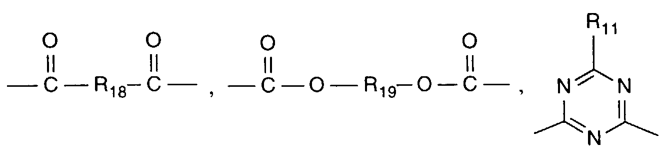 oder 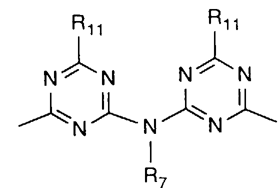 bedeutet,
R₁₀ C₁-C₈-Alkyl darstellt,
R₁₁ -OR₂₁, -NHR₂₂, 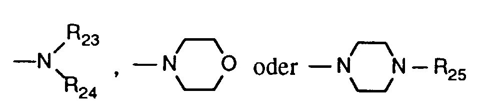 bedeutet,
R₁₂ und R₁₃ unabhängig voneinander 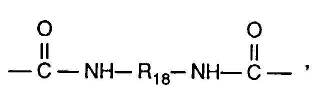 C₁-C₁₂-Alkylen, durch Sauerstoff oder Schwefel unterbrochenes C₄-C₁₂-Alkylen; C₂-C₁₂-Alkenylen, C₂-C₁₂-Alkinylen, C₂-C₁₄-Alkyliden, C₇-C₁₆-Phenylalkyliden, C₅-C₈-Cycloalkylen, Phenylen oder Naphthylen darstellen,
R₁₄ und R₁₅ unabhängig voneinander Wasserstoff oder C₁-C₄-Alkyl bedeuten,
R₁₈ eine direkte Bindung, C₁-C₁₈-Alkylen, durch Sauerstoff oder Schwefel unterbrochenes C₄-C₁₂-Alkylen; C₂-C₁₂-Alkenylen, C₂-C₁₄-Alkyliden, C₇-C₁₆-Phenylalkyliden, C₅-C₈-Cycloalkylen, Phenylen oder Naphthylen darstellt,
R₁₉ C₁-C₁₂-Alkylen, durch Sauerstoff oder Schwefel unterbrochenes C₂-C₁₂-Alkylen; C₂-C₁₂-Alkenylen, C₂-C₁₄-Alkyliden, C₇-C₁₆-Phenylalkyliden, C₅-C₈-Cycloalkylen, Phenylen oder Naphthylen bedeutet,
R₂₀ C₁-C₁₈-Alkanoyl, Benzoyl oder 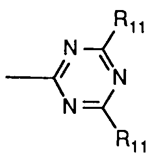 darstellt,
R₂₁ C₁-C₁₈-Alkyl, durch Sauerstoff oder Schwefel unterbrochenes C₂-C₁₈-Alkyl; C₂-C₁₈-Alkenyl, unsubstituiertes oder durch C₁-C₄-Alkyl substituiertes C₅-C₈-Cycloalkyl; unsubstituiertes oder durch C₁-C₄-Alkyl substituiertes C₅-C₈-Cycloalkenyl; C₇-C₉-Phenylalkyl, unsubstituiertes oder durch C₁-C₄-Alkyl substituiertes Phenyl darstellt;
R₂₂, R₂₃, R₂₄ und R₂₅ unabhängig voneinander Wasserstoff oder C₁-C₁₂-Alkyl bedeuten,
R₂₆ C₁-C₄-Alkyl darstellt,
R₂₇ Wasserstoff oder C₁-C₄-Alkyl bedeutet,
R₂₈ Wasserstoff oder C₁-C₄-Alkyl darstellt,
R₂₉ Wasserstoff, C₁-C₁₂-Alkyl, C₅-C₈-Cycloalkyl, unsubstituiertes oder durch C₁-C₄-Alkyl substituiertes Phenyl bedeutet,
X₁ eine Gruppe der Formel XVIII, XIX oder XX 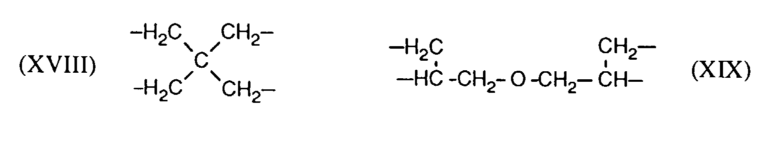 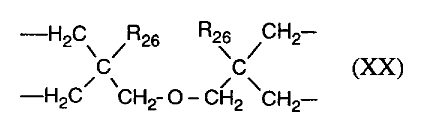 bedeutet,
X₂ 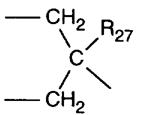 darstellt, und
X₄ 〉C=O oder 〉CH-R₂₉ darstellt.

4. Verbindungen gemäss Anspruch 1, worin
R₄ C₂-C₈-Alkylen, durch Sauerstoff unterbrochenes C₄-C₁₂-Alkylen; oder C₄-C₈-Alkenylen darstellt,
R₅ C₁-C₄-Alkyl bedeutet,
R₆ Wasserstoff, C₁-C₄-Alkyl, C₄-C₁₈-Alkoxy, C₅-C₈-Cycloalkoxy, Allyl, Propargyl, Acetyl oder Benzyl darstellt,
R₇ C₁-C₈-Alkyl bedeutet,
R₈ 〉N-R₁₇, 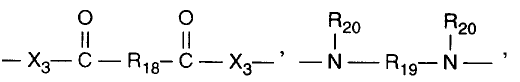
―O―R₁₉―O―, 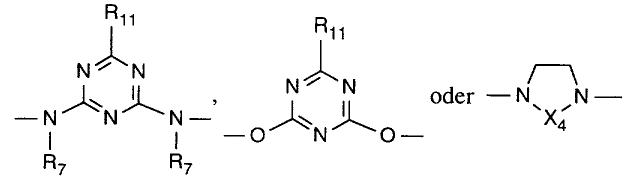
darstellt,
R₉ und R'₉ 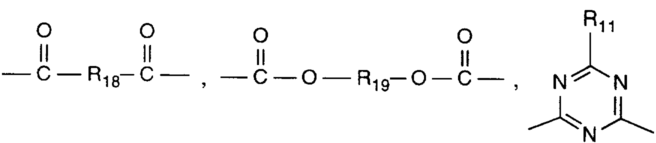 oder 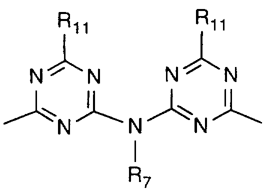 bedeuten,
R₁₀ C₁-C₈-Alkyl darstellt,
R₁₁ -OR₂₁, -NHR₂₂, 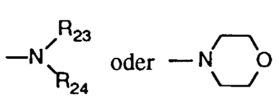 bedeutet,
R₁₂ und R₁₃ unabhängig voneinander 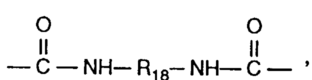 C₁-C₈-Alkylen, durch Sauerstoff unterbrochenes C₄-C₁₂-Alkylen; C₂-C₈-Alkenylen, C₂-C₈-Alkinylen, C₂-C₁₀-Alkyliden, C₇-C₁₂-Phenylalkyliden, Cyclohexylen oder Phenylen darstellen,
R₁₄ und R₁₅ unabhängig voneinander Wasserstoff oder C₁-C₄-Alkyl bedeuten,
R₁₈ eine direkte Bindung, C₁-C₁₂-Alkylen, durch Sauerstoff unterbrochenes C₄-C₁₂-Alkylen; C₂-C₈-Alkenylen, C₂-C₈-Alkyliden, C₇-C₁₂-Phenylalkyliden, Cyclohexylen oder Phenylen darstellt,
R₁₉ C₁-C₁₂-Alkylen, durch Sauerstoff unterbrochenes C₂-C₁₂-Alkylen; C₂-C₈-Alkenylen, C₂-C₈-Alkyliden, C₇-C₁₂-Phenylalkyliden, Cyclohexylen oder Phenylen bedeutet,
R₂₀ C₁-C₁₂-Alkanoyl oder Benzoyl darstellt,
R₂₁ C₁-C₁₂-Alkyl, durch Sauerstoff unterbrochenes C₂-C₁₂-Alkyl; C₂-C₁₂-Alkenyl, unsubstituiertes oder durch C₁-C₄-Alkyl substituiertes Cyclohexyl; Benzyl oder Phenyl darstellt,
R₂₂, R₂₃ und R₂₄ unabhängig voneinander Wasserstoff oder C₁-C₈-Alkyl bedeuten,
R₂₇ Wasserstoff oder C₁-C₄-Alkyl darstellt,
R₂₈ Wasserstoff oder C₁-C₄-Alkyl bedeutet,
R₂₉ Wasserstoff, C₁-C₈-Alkyl, Cyclohexyl oder Phenyl darstellt,
X₁ eine Gruppe der Formel XVIII oder XIX 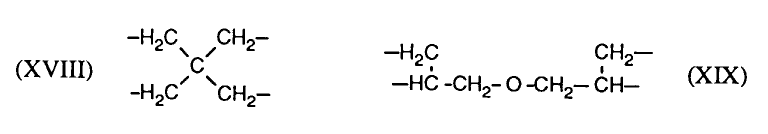 bedeutet,
X₂ 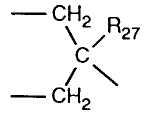 darstellt, und
X₄ 〉C=O oder 〉CH-R₂₉ darstellt.

5. Verbindungen gemäss Anspruch 1, worin
L eine Gruppe der Formel II
―O―R₃―O― (II)
bedeutet,
R₄ C₂-C₈-Alkylen oder durch Sauerstoff unterbrochenes C₄-C₈-Alkylen darstellt,
R₅ C₁-C₄-Alkyl bedeutet,
R₆ Wasserstoff, C₁-C₄-Alkyl, C₄-C₁₈-Alkoxy, C₅-C₈-Cycloalkoxy, Allyl, Propargyl, Acetyl oder Benzyl darstellt,
R₇ C₁-C₈-Alkyl bedeutet,
R₈ 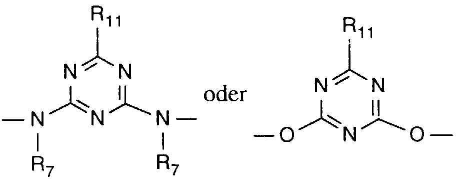 darstellt,
R₉ und R'₉ 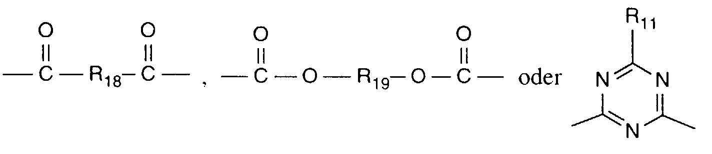 bedeutet,
R₁₀ C₁-C₈-Alkyl darstellt,
R₁₁ -OR₂₁, -NHR₂₂, 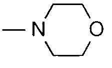 oder -SR₂₁ bedeutet,
R₁₂ und R₁₃ 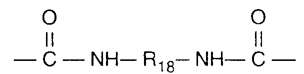 darstellen,
R₁₄ und R₁₅ Wasserstoff bedeuten,
R₁₈ eine direkte Bindung, C₁-C₈-Alkylen oder durch Sauerstoff unterbrochenes C₄-C₈-Alkylen darstellt,
R₁₉ C₂-C₈-Alkylen oder durch Sauerstoff unterbrochenes C₄-C₈-Alkylen bedeutet,
R₂₁ C₁-C₈-Alkyl, durch Sauerstoff unterbrochenes C₄-C₁₂-Alkyl; oder Cyclohexyl darstellt,
R₂₂ C₁-C₈-Alkyl ist,
R₂₇ Wasserstoff oder C₁-C₄-Alkyl bedeutet,
X₁ eine Gruppe der Formel XVIII oder XIX 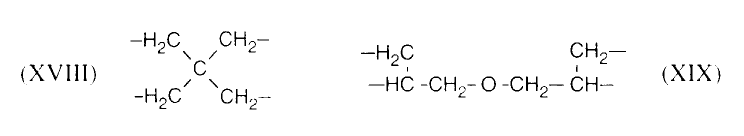 darstellt, und
X₂ 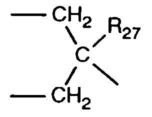 bedeutet.

6. Verbindungen gemäss Anspruch 1, worin
R₆ Wasserstoff, C₁-C₄-Alkyl, C₄-C₁₆-Alkoxy, C₅-C₈-Cycloalkoxy, Allyl, Propargyl, Acetyl oder Benzyl darstellt.

7. Verbindungen gemäss Anspruch 1, worin
L eine Gruppe der Formel II
―O―R₃―O― (II)
darstellt,
R₁ und R₂ Methyl bedeuten oder zusammen mit dem Kohlenstoffatom, an das sie gebunden sind, einen 3,4-Dehydrocyclohexylidenring bilden,
R₃ eine Gruppe der Formel IV, V, VII, VIII, XI, XII, XIV oder XVI 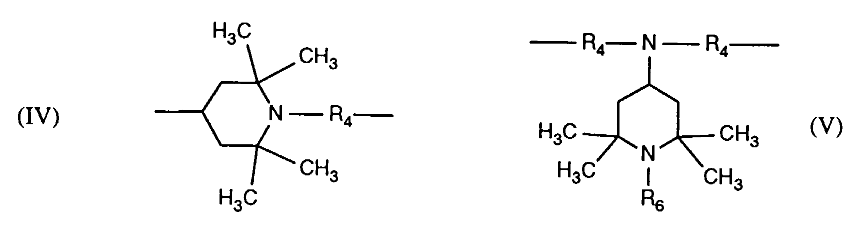 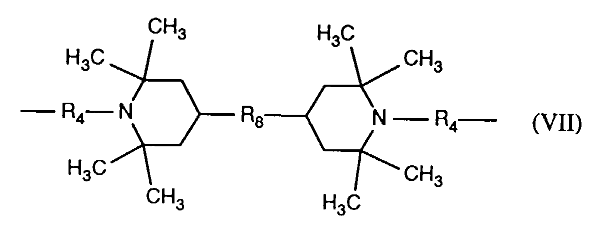 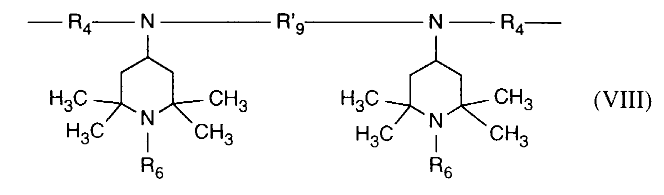 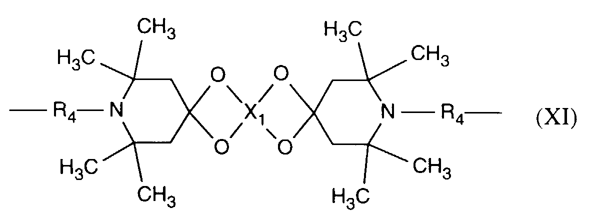 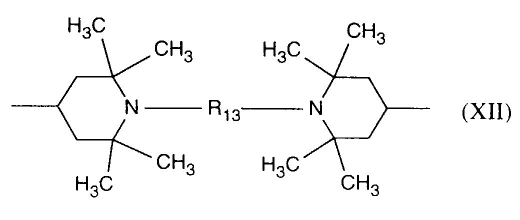 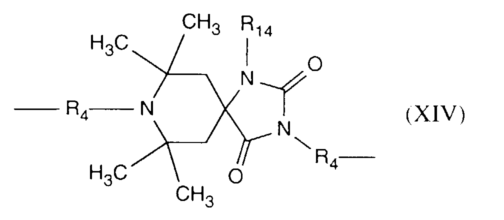 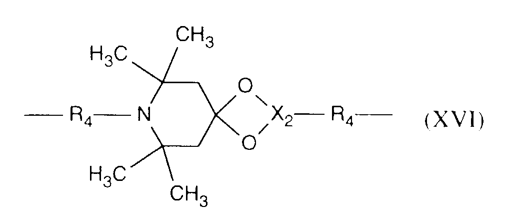 bedeutet,
R₄ Ethylen darstellt,
R₆ Wasserstoff oder Methyl bedeutet,
R₇ C₁-C₆-Alkyl darstellt,
R₈ 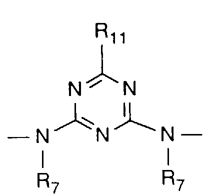 bedeutet,
R'₉ 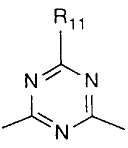 ist,
R₁₁ -OR₂₁, -HNR₂₂ oder 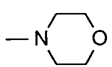 darstellt,
R₁₃ 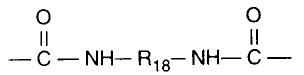 bedeutet,
R₁₄ Wasserstoff darstellt,
R₁₈ eine direkte Bindung oder C₁-C₈-Alkylen bedeutet,
R₂₁ C₁-C₄-Alkyl darstellt,
R₂₂ C₁-C₈-Alkyl ist,
R₂₇ Wasserstoff oder Methyl bedeutet,
X₁ eine Gruppe der Formel XVIII 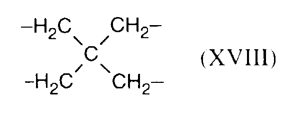 darstellt, und
X₂ 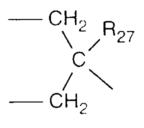 bedeutet.

8. Zusammensetzung enthaltend
a) ein dem oxidativen, thermischen oder lichtinduzierten Abbau unterworfenes organisches Material und
b) mindestens eine Verbindung der Formel I gemäss Anspruch 1.

9. Zusammensetzung gemäss Anspruch 8, enthaltend neben den Komponenten (a) und (b) zusätzlich weitere Additive.

10. Zusammensetzung gemäss Anspruch 9, enthaltend als weitere Additive phenolische Antioxidantien, Lichtschutzmittel oder/und Verarbeitungsstabilisatoren.

11. Zusammensetzung gemäss Anspruch 9, enthaltend als weiteres Additiv mindestens eine Verbindung vom Typ der Benzofuran-2-one.

12. Zusammensetzung gemäss Anspruch 8, enthaltend als Komponente a) natürliche, halbsynthetische oder synthetische Polymere.

13. Zusammensetzung gemäss Anspruch 8, enthaltend als Komponente (a) thermoplastische Polymere.

14. Zusammensetzung gemäss Anspruch 8, enthaltend als Komponente (a) ein Polyolefin.

15. Zusammensetzung gemäss Anspruch 8, enthaltend als Komponente (a) Polyethylen oder Polypropylen.

16. Verwendung der Verbindungen der in Anspruch 1 definierten Formel I als Stabilisatoren für organische Materialien gegen oxidativen, thermischen oder lichtinduzierten Abbau.

17. Verwendung gemäß Anspruch 16 als Verarbeitungsstabilisatoren (Thermostabilisatoren) in thermoplastischen Polymeren.

18. Verfahren zum Stabilisieren eines organischen Materials gegen oxidativen, thermischen oder lichtinduzierten Abbau, dadurch gekennzeichnet, dass man diesem mindestens eine Verbindung der in Anspruch 1 definierten Formel I einverleibt oder auf dieses aufbringt.

19. Verfahren zur Herstellung von Verbindungen der Formel I gemäss Anspruch 1, dadurch gekennzeichnet, dass eine Verbindung der Formel XXII
H ― L ― H (XXII)
worin L wie in Anspruch 1 definiert ist, mit einem cyclischen Chlorphosphit der Formel XXIII 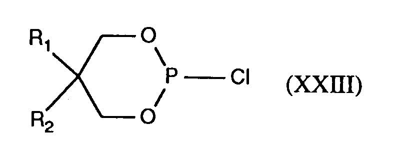 worin R₁ und R₂ wie in Anspruch 1 definiert sind, umgesetzt wird.

## Claims

1. A compound of formula I 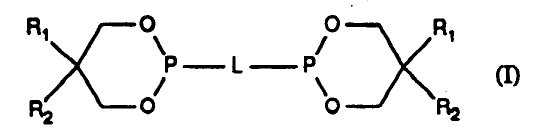 wherein L is a group of formula II or III 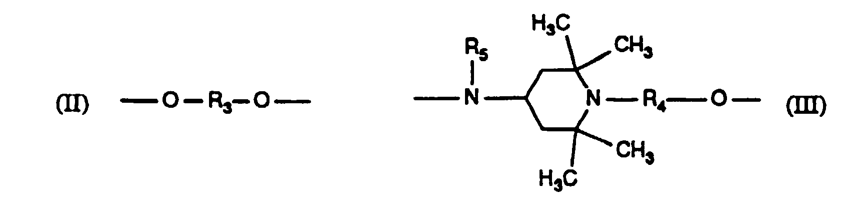
wherein R₁ and R₂ are each independently of the other hydrogen or C₁-C₄alkyl or, together with the linking carbon atom, are a 3,4-dehydrocyclohexylidene ring or 5-norbornenylidene ring,
R₃ is a group of formula IV to XVI 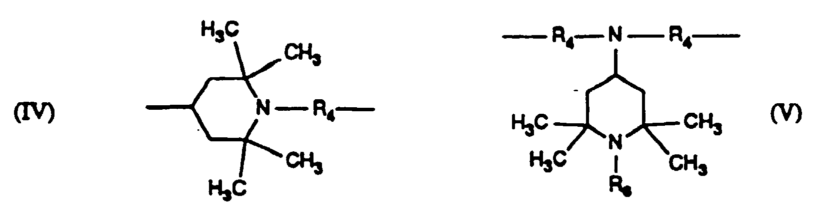 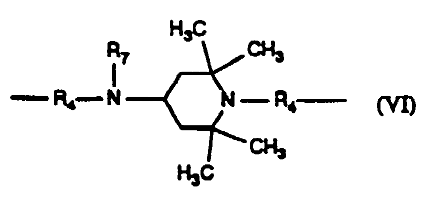 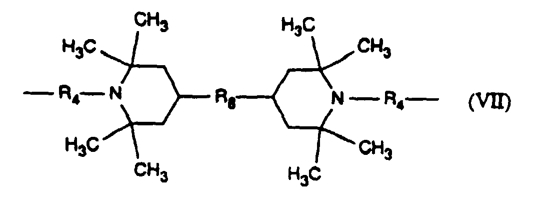 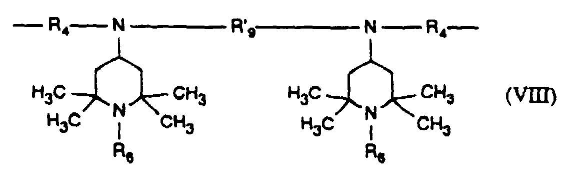 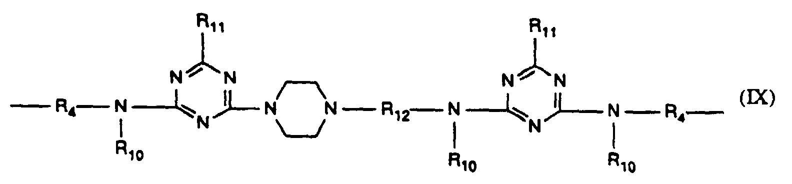 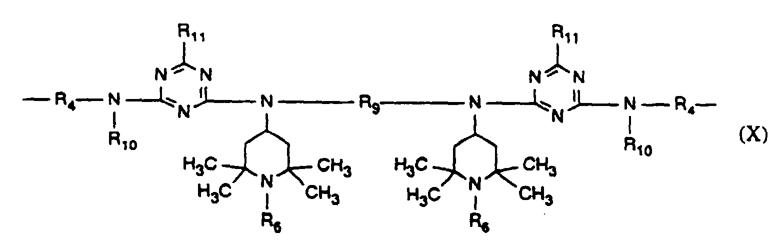 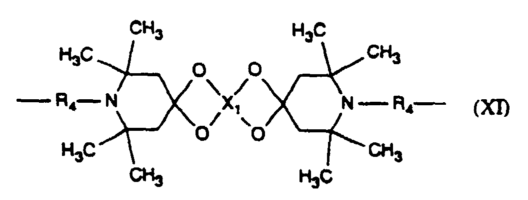 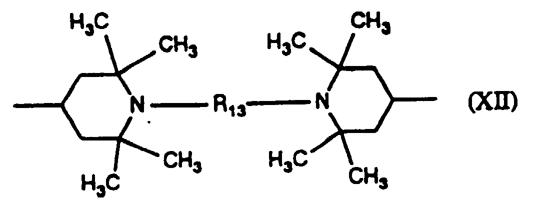 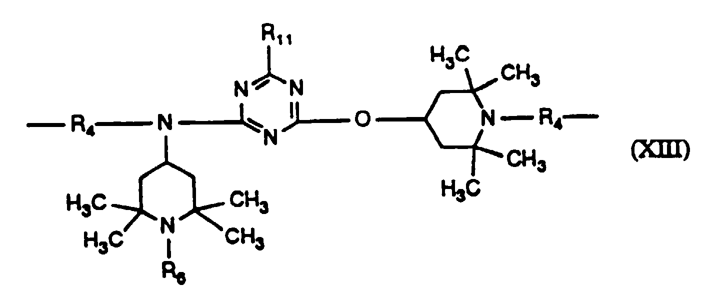 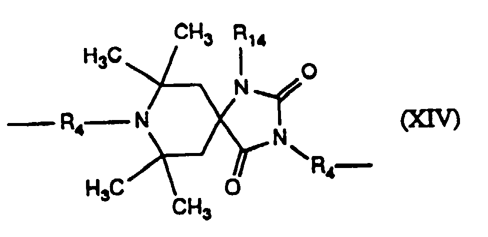 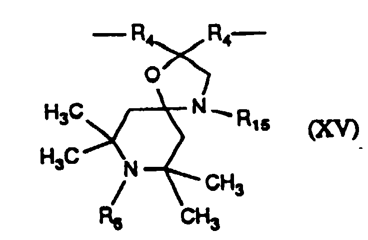 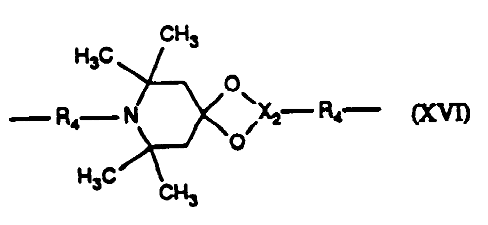
R₄ is C₁-C₁₈alkylene, C₂-C₁₈alkylene which is interrupted by oxygen, sulfur or 〉N-R₁₆ ; C₄-C₈alkenylene or phenylethylene,
R₅ is C₁-C₈alkyl or a radical of formula XVII 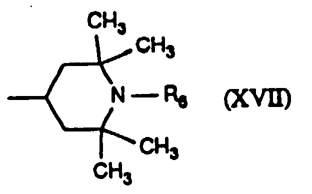
R₆ is hydrogen, C₁-C₈alkyl, O^{•} , OH, NO, -CH₂CN, C₁-C₁₈alkoxy, C₅-C₁₂cycloalkoxy, C₃-C₆alkenyl, C₃-C₆alkynyl, C₁-C₈acyl, C₇-C₉phenylalkyl which is unsubstituted or substituted on the phenyl ring by C₁-C₄alkyl;
R₇ is C₁-C₈alkyl or a radical of formula XVII 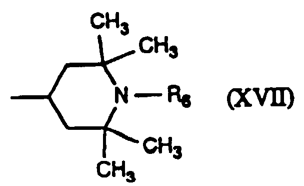
R₈ is 〉N-R₁₇, 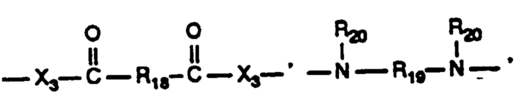 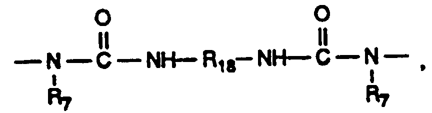 ―O―R₁₉―O―, 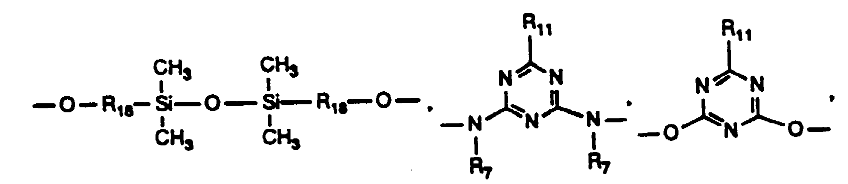 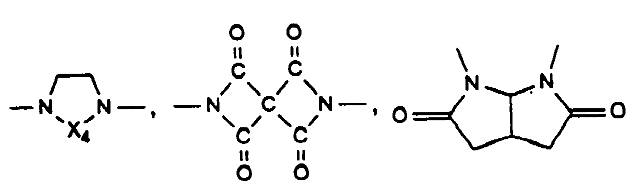 or 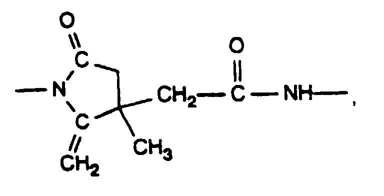
R₉ is 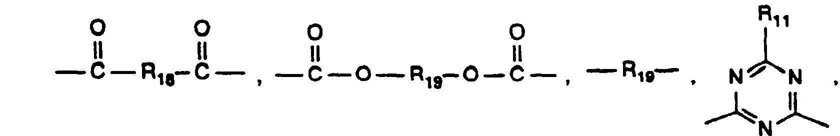 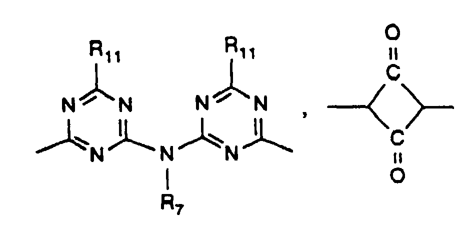 or 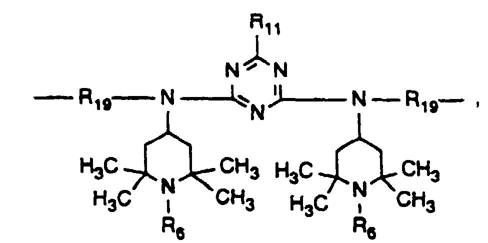
R'₉ is 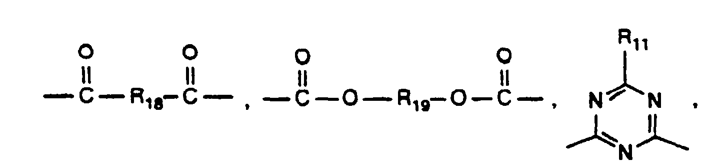 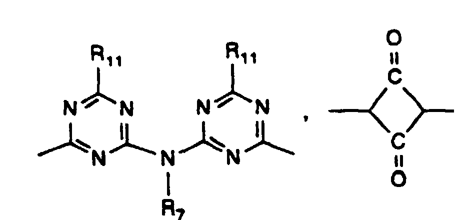 or 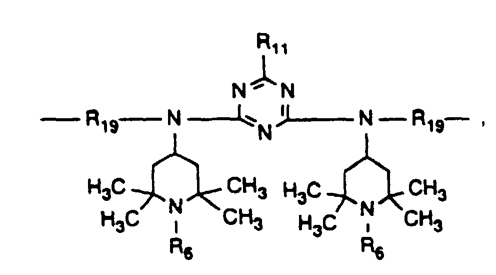
R₁₀ is C₁-C₈alkyl or a radical of formula XVII 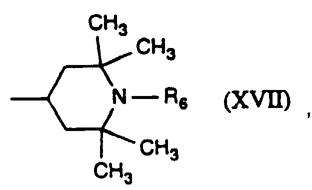
R₁₁ is -OR₂₁, -NHR₂₂, 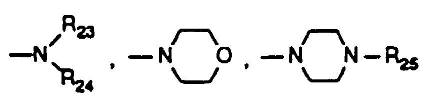 or -SR₂₁,
R₁₂ and R₁₃ are each independently of the other 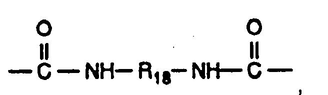 C₁-C₁₈alkylene, C₂-C₁₈alkylene which is interrupted by oxygen, sulfur or 〉N-R₁₆ ; C₂-C₁₈alkenylene, C₂-C₁₈alkynylene, C₂-C₂₀alkylidene, C₇-C₂₀phenylalkylidene, C₅-C₈cycloalkylene, C₇-C₈bicycloalkylene; phenylene or naphthylene which are unsubstituted or substituted by C₁-C₄alkyl; 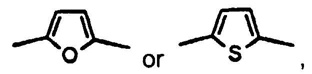
R₁₄ and R₁₅ are each independently of the other hydrogen or C₁-C₈alkyl,
R₁₆ is hydrogen or C₁-C₈alkyl,
R₁₇ is C₁-C₈alkyl,
R₁₈ is a direct bond, C₁-C₁₈alkylene, C₂-C₁₈alkylene which is interrupted by oxygen, sulfur or 〉N-R₁₆ ; C₂-C₁₈alkenylene, C₂-C₂₀alkylidene, C₇-C₂₀phenylalkylidene, C₅-C₈cycloalkylene, C₇-C₈bicydoalkylene, phenylene or naphthylene which are unsubstituted or substituted by C₁-C₄alkyl; 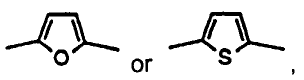
R₁₉ is C₁-C₁₈alkylene, C₂-C₁₈alkylene which is interrupted by oxygen, sulfur or 〉N-R₁₆ ; C₂-C₁₈alkenylene, C₂-C₂₀alkylidene, C₇-C₂₀phenylalkylidene, C₅-C₈cycloalkylene, C₇-C₈bicycloalkylene, phenylene or naphthylene which are unsubstituted or substituted by C₁-C₄alkyl; 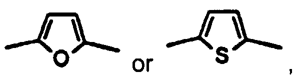
R₂₀ is C₁-C₂₅alkanoyl, benzoyl which is unsubstituted or substituted by C₁-C₁₂-alkyl; or 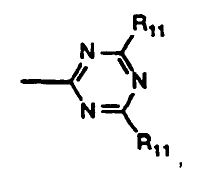
R₂₁ is C₁-C₂₅alkyl, C₂-C₂₅alkyl which is interrupted by oxygen, sulfur or 〉N-R₁₆; C₂-C₂₄alkenyl, C₅-C₁₅cycloalkyl which is unsubstituted or substituted by C₁-C₄alkyl; C₅-C₁₅cycloalkenyl which is unsubstituted or substituted by C₁-C₄alkyl; C₇-C₉phenylalkyl which is unsubstituted or substituted on the phenyl ring by C₁-C₄alkyl; phenyl which is unsubstituted or substituted by C₁-C₄alkyl;
R₂₂, R₂₃, R₂₄ and R₂₅ are each independently of one another hydrogen, C₁-C₁₈alkyl or a radical of formula XVII 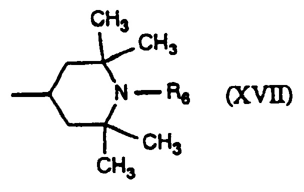
R₂₆ is C₁-C₄alkyl or hydroxymethyl,
R₂₇ is hydrogen or C₁-C₈alkyl,
R₂₈ is hydrogen, C₁-C₈alkyl or a radical of formula XVII 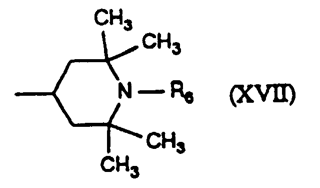
R₂₉ is hydrogen, C₁-C₂₀alkyl, C₅-C₁₂cycloalkyl, unsubstituted or C₁-C₄alkyl-substituted phenyl,
X₁ is a group of formula XVIII, XIX, XX or XXI 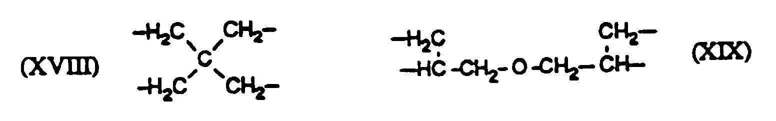 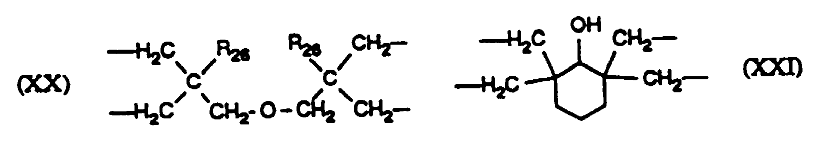
X₂ is 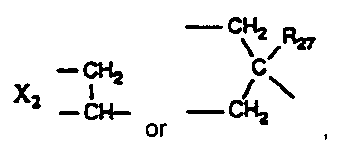
X₃ is oxygen or 〉N-R₂₈, and
X₄ is X₄ 〉C=O, 〉C=S or 〉CH-R₂₉ .

2. A compound according to claim 1, wherein R₄ is C₂-C₄alkylene.

3. A compound according to claim 1, wherein
R₄ is C₁-C₁₂alkylene, C₄-C₁₈alkylene which is interrupted by oxygen or sulfur; or C₄-C₈alkenylene,
R₅ is C₁-C₈alkyl,
R₆ is hydrogen, C₁-C₈alkyl, O^{•} , C₄-C₁₈alkoxy, C₅-C₈cycloalkoxy, C₃-C₆alkenyl, C₃-C₆alkynyl, C₁-C₆acyl or benzyl,
R₇ is C₁-C₈alkyl,
R₈ is 〉N-R₁₇, 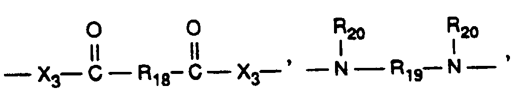 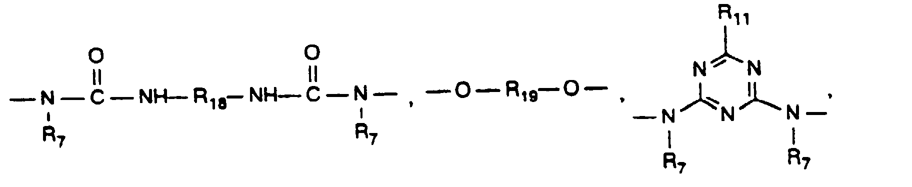 - 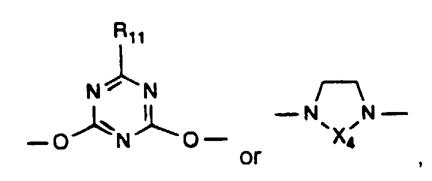
R₉ is 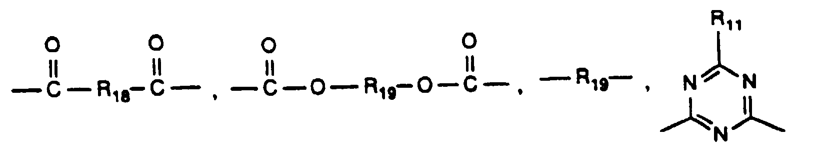 or 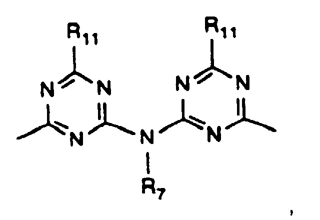
R'₉ is 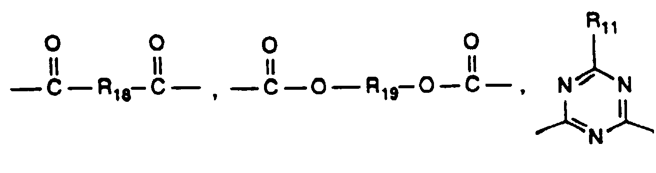 or 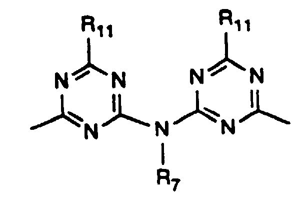
R₁₀ is C₁-C₈alkyl,
R₁₁ is -OR₂₁, -NHR₂₂, 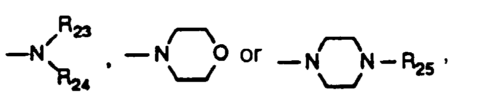
R₁₂ and R₁₃ are each independently of the other 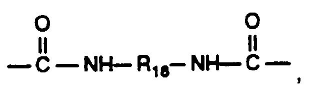 C₁-C₁₂alkylene, C₄-C₁₂alkylene which is interrupted by oxygen or sulfur; C₂-C₁₂alkenylene, C₂-C₁₂alkynylene, C₂-C₁₄alkylidene, C₇-C₁₆phenylalkylidene, C₅-C₈cycloalkylene, phenylene or naphthylene,
R₁₄ and R₁₅ are each independently of the other hydrogen or C₁-C₄alkyl,
R₁₈ is a direct bond, C₁-C₁₈alkylene, C₄-C₁₂alkylene which is interrupted by oxygen or sulfur; C₂-C₁₂alkenylene, C₂-C₁₄alkylidene, C₇-C₁₆phenylalkylidene, C₅-C₈cycloalkylene, phenylene or naphthylene,
R₁₉ is C₁-C₁₂alkylene, C₂-C₁₂alkylene which is interrupted by oxygen or sulfur; C₂-C₁₂alkenylene, C₂-C₁₄alkylidene, C₇-C₁₆phenylalkylidene, C₅-C₈cycloalkylene, phenylene or naphthylene,
R₂₀ is C₁-C₁₈alkanoyl, benzoyl or 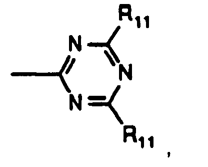
R₂₁ is C₁-C₁₈alkyl, C₂-C₁₈alkyl which is interrupted by oxygen or sulfur; C₂-C₁₈alkenyl, C₅-C₈cydoalkyl which is unsubstituted or substituted by C₁-C₄alkyl; C₅-C₈cycloalkenyl which is unsubstituted or substituted by C₁-C₄alkyl; C₇-C₉phenylalkyl, unsubstituted or C₁-C₄alkyl-substituted phenyl;
R₂₂, R₂₃, R₂₄ and R₂₅ are each independently of one another hydrogen or C₁-C₁₂alkyl,
R₂₆ is C₁-C₄alkyl,
R₂₇ is hydrogen or C₁-C₄alkyl,
R₂₈ is hydrogen or C₁-C₄alkyl,
R₂₉ is hydrogen, C₁-C₁₂alkyl, C₅-C₈cycloalkyl, unsubstituted or C₁-C₄alkyl-substituted phenyl,
X₁ is a group of formula XVIII, XIX or XX 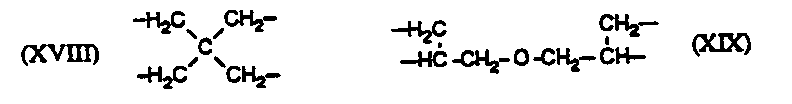 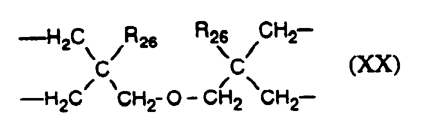
X₂ is 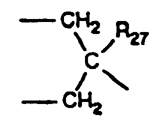 and
X₄ is 〉C=O or 〉CH-R₂₉

4. A compound according to claim 1, wherein
R₄ is C₂-C₈alkylene, C₄-C₁₂alkylene which is interrupted by oxygen; or C₄-C₈alkenylene,
R₅ is C₁-C₈alkyl,
R₆ is hydrogen, C₁-C₄alkyl, C₄-C₁₈alkoxy, C₅-C₈cycloalkoxy, allyl, propargyl, acetyl or benzyl,
R₇ is C₁-C₈alkyl,
R₈ is 〉N-R₁₇, 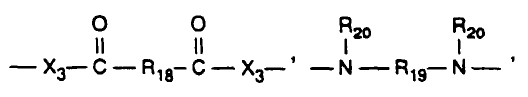
―O―R₁₉―O―, 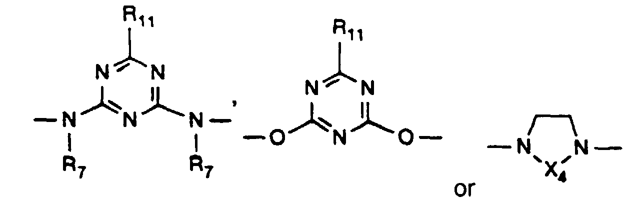
R₉ and R'₉ are 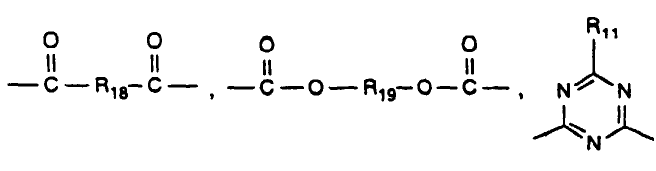 or 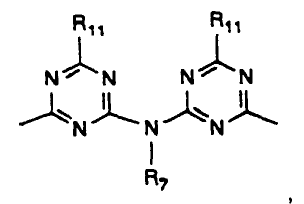
R₁₀ is C₁-C₈alkyl,
R₁₁ is -OR₂₁, -NHR₂₂, 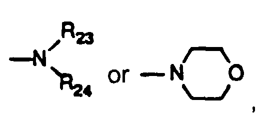
R₁₂ and R₁₃ are each independently of the other 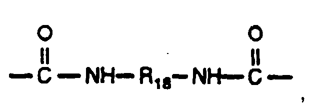 C₁-C₈alkylene, C₄-C₁₂alkylene which is interrupted by oxygen; C₂-C₈alkenylene, C₂-C₈alkynylene, C₂-C₁₀alkylidene, C₇-C₁₂phenylalkylidene, cyclohexylene or phenylene,
R₁₄ and R₁₅ are each independently of the other hydrogen or C₁-C₄alkyl,
R₁₈ is a direct bond, C₁-C₁₂alkylene, C₄-C₁₂alkylene which is interrupted by oxygen; C₂-C₈alkenylene, C₂-C₈alkylidene, C₇-C₁₂phenylalkylidene, cyclohexylene or phenylene,
R₁₉ is C₁-C₁₂alkylene, C₂-C₁₂alkylene which is interrupted by oxygen; C₂-C₈alkenylene, C₂-C₈alkylidene, C₇-C₁₂phenylalkylidene, cyclohexylene or phenylene,
R₂₀ is C₁-C₁₂alkanoyl or benzoyl,
R₂₁ is C₁-C₁₂alkyl, C₂-C₁₂alkyl which is interrupted by oxygen; C₂-C₁₂alkenyl, unsubstituted or C₁-C₄alkyl-substituted cyclohexyl; benzyl or phenyl,
R₂₂, R₂₃ and R₂₄ are each independently of one another hydrogen or C₁-C₈alkyl,
R₂₇ is hydrogen or C₁-C₄alkyl,
R₂₈ is hydrogen or C₁-C₄alkyl,
R₂₉ is hydrogen, C₁-C₈alkyl, cyclohexyl or phenyl,
X₁ is a group of formula XVIII or XIX 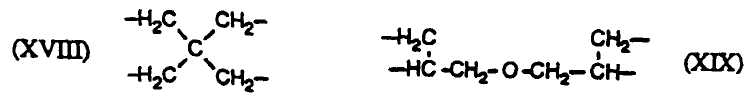
X₂ is 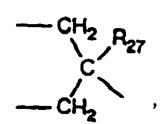 and
X₄ is 〉C=O or 〉CH-R_{29.}

5. A compound according to claim 1, wherein
L is a group of formula II
―O―R₃―O― (II)
R₄ is C₂-C₈alkylene, or C₄-C₈alkylene which is interrupted by oxygen;
R₅ is C₁-C₄alkyl,
R₆ is hydrogen, C₁-C₄alkyl, C₄-C₁₈alkoxy, C₅-C₈cycloalkoxy, allyl, propargyl, acetyl or benzyl,
R₇ is C₁-C₈alkyl,
R₈ is 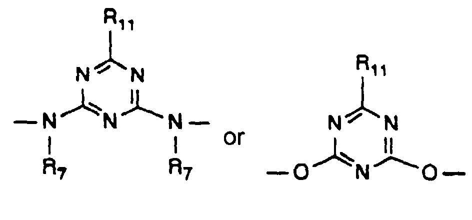
R₉ and R'₉ are 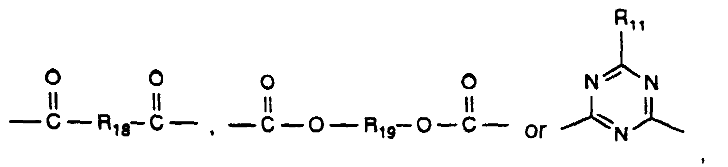
R₁₀ is C₁-C₈alkyl,
R₁₁ is -OR₂₁, -NHR₂₂, 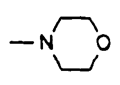 or -SR₂₁,
R₁₂ and R₁₃ are 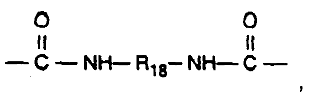
R₁₄ and R₁₅ are hydrogen,
R₁₈ is a direct bond, C₁-C₈alkylene, or C₄-C₁₂alkylene which is interrupted by oxygen,
R₁₉ is C₂-C₈alkylene, or C₄-C₈alkylene which is interrupted by oxygen,
R₂₁ is C₁-C₈alkyl, C₄-C₁₂alkyl which is interrupted by oxygen; or cyclohexyl,
R₂₂ is C₁-C₈alkyl,
R₂₇ is hydrogen or C₁-C₄alkyl,
X₁ is a group of formula XVIII or XIX 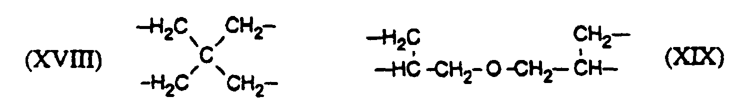 and
X₂ is

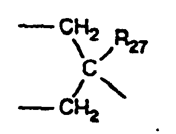

6. A compound according to claim 1, wherein
R₆ is hydrogen, C₁-C₄alkyl, C₄-C₁₆alkoxy, C₅-C₈cycloalkoxy, allyl, propargyl, acetyl or benzyl.

7. A compound according to claim 1, wherein
L is a group of formula II
―O―R₃―O― (II)
R₁ and R₂ are methyl or, together with the linking carbon atom, form a 3,4-dehydrocyclohexylidene ring,
R₃ is a group of formula IV, V, VII, VIII, Xl, XII, XIV or XVI 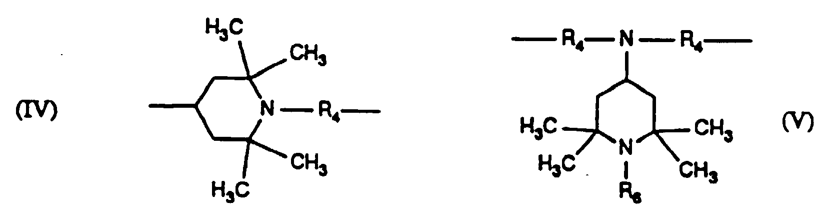 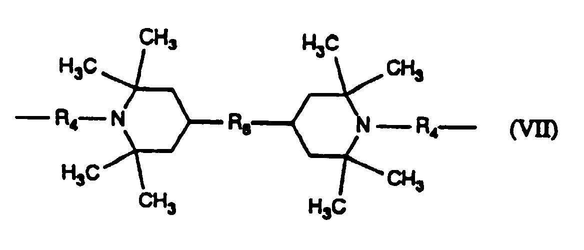 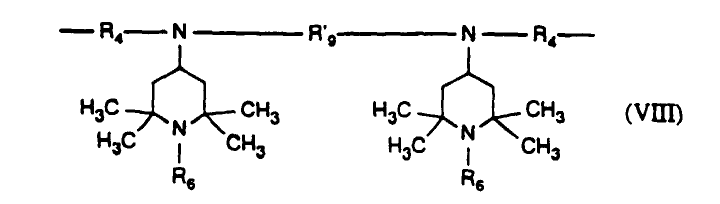 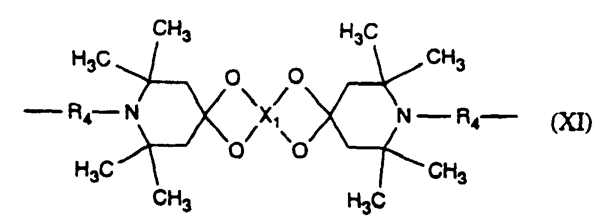 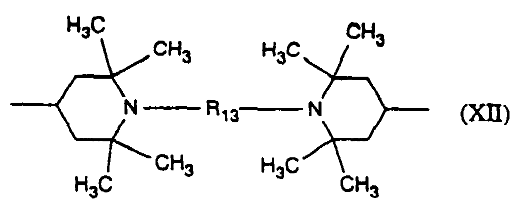 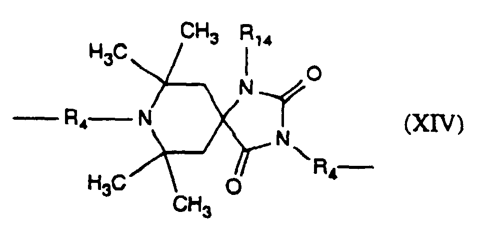 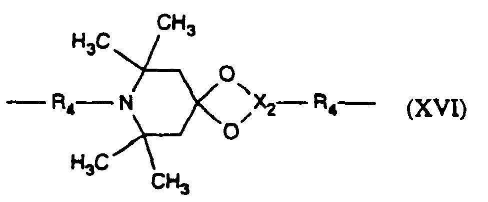
R₄ is ethylene,
R₆ is hydrogen or methyl,
R₇ is C₁-C₆alkyl,
R₈ is 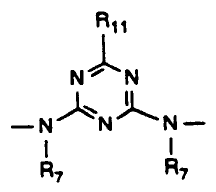
R'₉ is 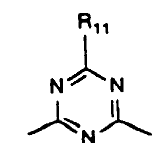
R₁₁ is -OR₂₁, -HNR₂₂ or 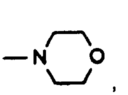
R₁₃ is 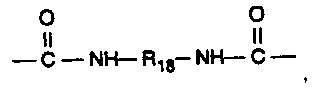
R₁₄ is hydrogen,
R₁₈ is a direct bond or C₁-C₈alkylene,
R₂₁ is C₁-C₄alkyl,
R₂₂ is C₁-C₈alkyl,
R₂₇ is hydrogen or methyl,
X₁ is a group of formula XVIII 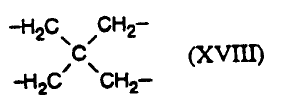 and
X₂ is

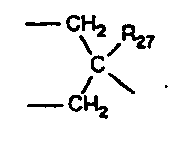

8. A composition comprising
a) an organic material subject to oxidative, thermal or light-induced degradation, and
b) at least one compound of formula I according to claim 1.

9. A composition according to claim 8, comprising further additives in addition to the components (a) and (b).

10. A composition according to claim 9, wherein the further additives are phenolic antioxidants, light stabilizers or/and processing stabilizers.

11. A composition according to claim 9, wherein the further additive is at least one compound of the benzofuran-2-one type.

12. A composition according to claim 8, wherein component a) is a natural, semisynthetic or synthetic polymer.

13. A composition according to claim 8, wherein component (a) is a thermoplastic polymer.

14. A composition according to claim 8, wherein component (a) is a polyolefin.

15. A composition according to claim 8, wherein component (a) is polyethylene or polypropylene.

16. Use of a compound of formula I as defined in claim 1 as a stabilizer for organic materials against oxidative, thermal or light-induced degradation.

17. Use according to claim 16 as a processing stabilizer (thermostabilizer) in thermoplastic polymers.

18. A process for the stabilization of an organic material against oxidative, thermal or light-induced degradation, which process comprises incorporating in, or applying to, said material at least one compound of formula I as defined in claim 1.

19. A process for the preparation of a compound of formula I according to claim 1, which comprises reacting a compound of formula XXII
H-L-H (XXII)
wherein L is as defined in claim 1, with a cyclic chlorophosphite of formula XXIII 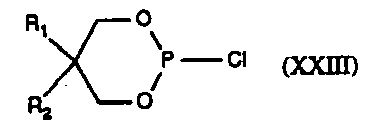 wherein R₁ and R₂ are as defined in claim 1.

## Revendications

1. Composés de formule I 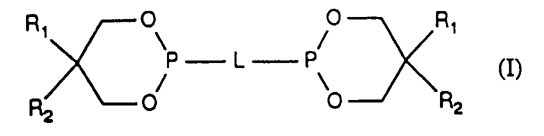 dans laquelle L représente un groupe de formule Il ou III 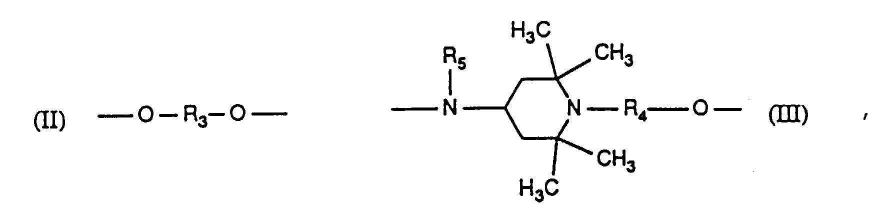 dans laquelle
R₁ et R₂ représentent indépendamment l'un de l'autre un atome d'hydrogène ou un groupe alkyle en C₁-C₄ ou forment ensemble, avec l'atome de carbone auquel ils sont liés, un cycle 3,4-déshydrocyclohexylidène ou 5-nobornénylidène,
R₃ représente un groupe des formules IV à XVI 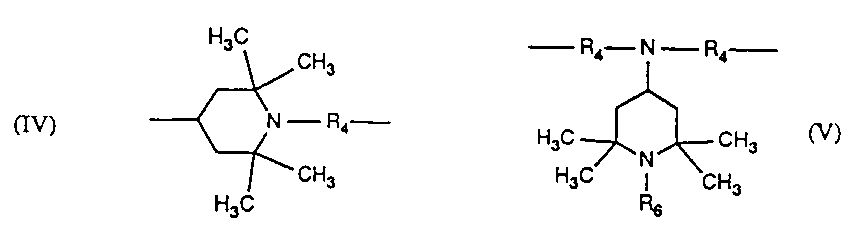 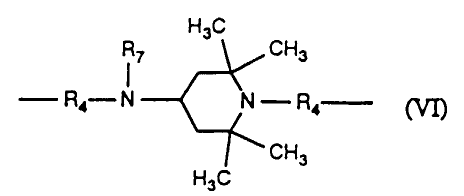 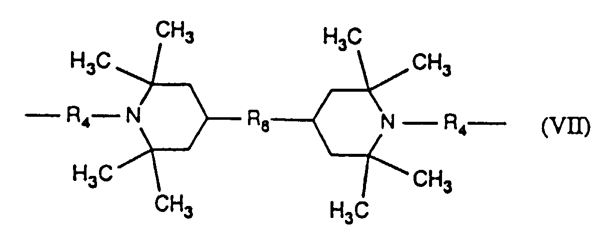 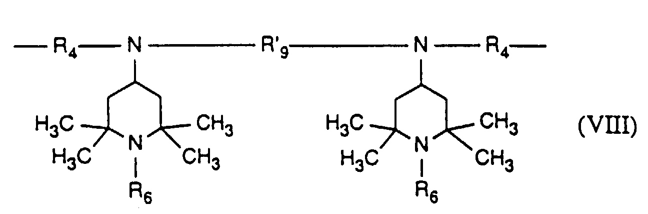 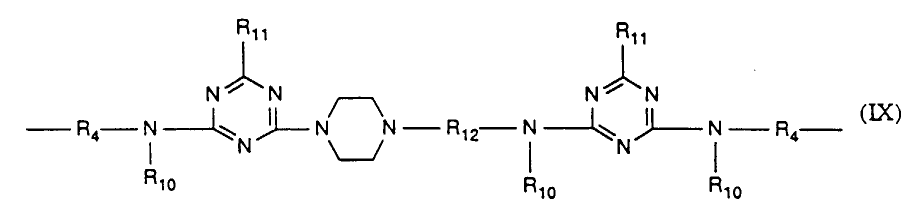 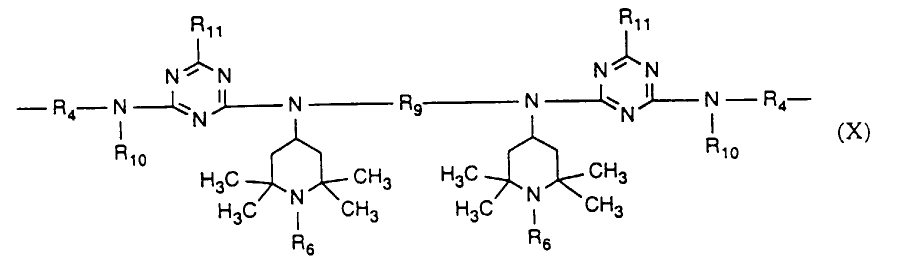 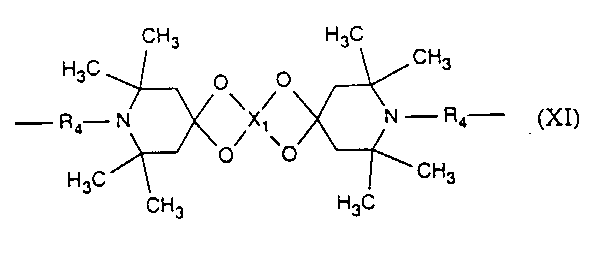 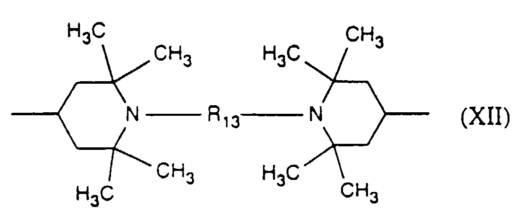 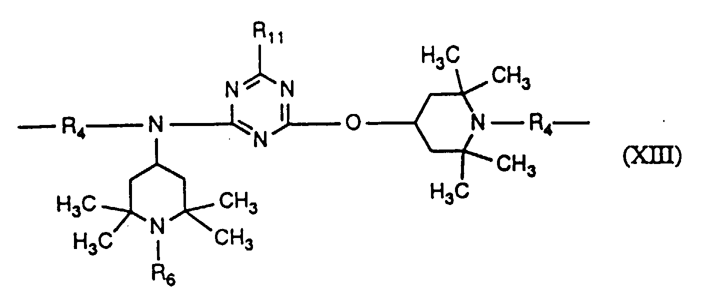 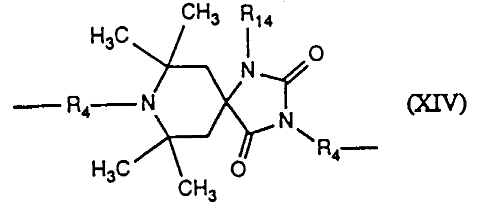 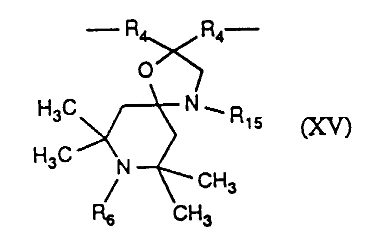 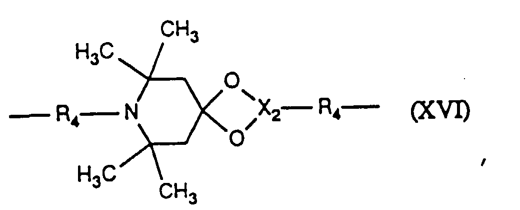
R₄ représente un groupe alkylène en C₁-C₁₈, alkylène en C₂-C₁₈ interrompu par des atomes d'oxygène, de soufre ou des groupes 〉N-R₁₆; alcénylène en C₄-C₈ ou phényléthylène,
R₅ représente un groupe alkyle en C₁-C₈ ou un groupe de formule XVII 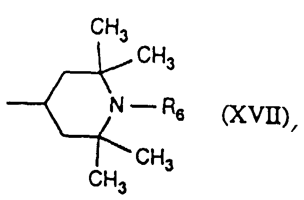
R₆ représente un atome d'hydrogène, un groupe alkyle en C₁-C₈, O^{•}, OH, NO, -CH₂CN, un groupe alcoxy en C₁-C₁₈, cycloalcoxy en C₅-C₁₂, alcényle en C₃-C₆, alcynyle en C₃-C₆, acyle en C₁-C₈, phénylalkyle en C₇-C₉ non substitué ou substitué sur le noyau phényle par un groupe alkyle en C₁-C₄;
R₇ représente un groupe alkyle en C₁-C₈ ou un groupe de formule XVII 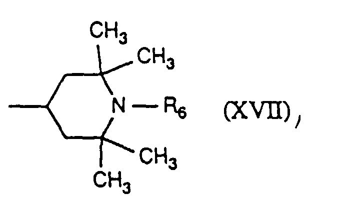
R₈ représente 〉N-R₁₇ , 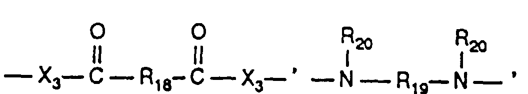 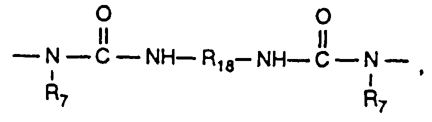
―O―R₁₉―O―, 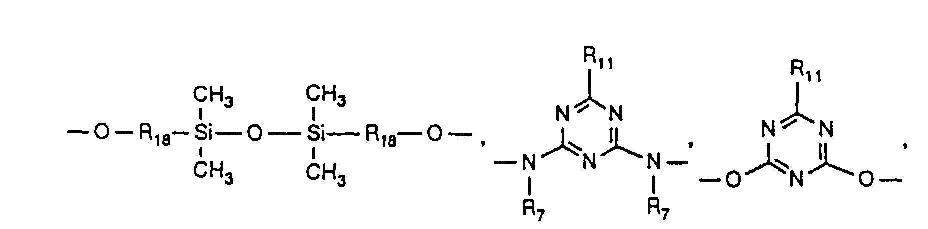 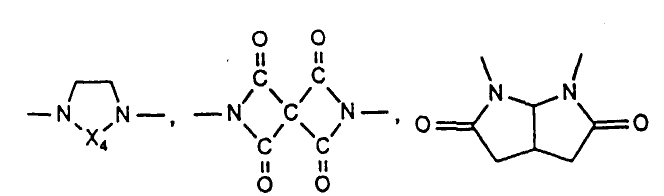
ou 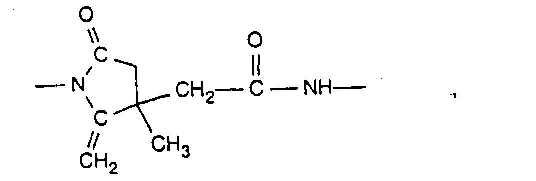
R₉ 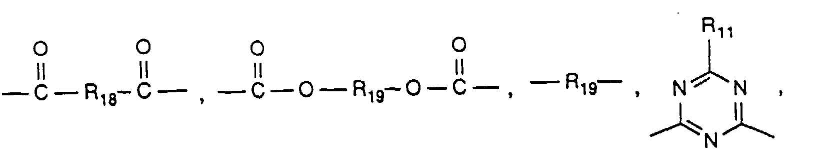 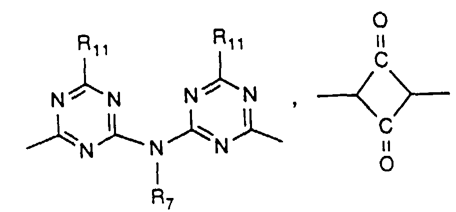 ou 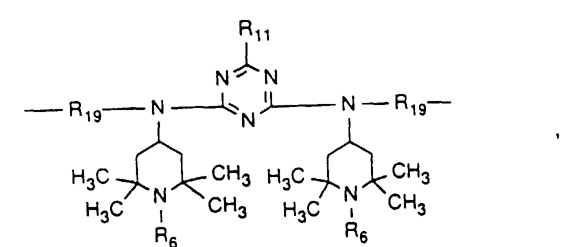
R'₉ 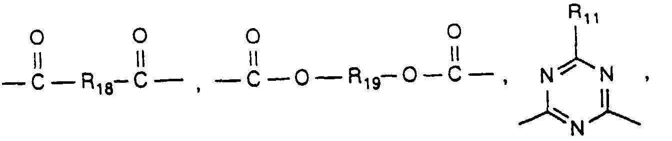 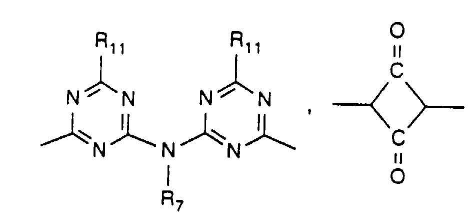 ou 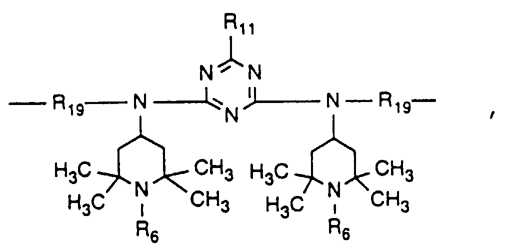
R₁₀ représente un groupe alkyle en C₁-C₈ ou un groupe de formule XVII 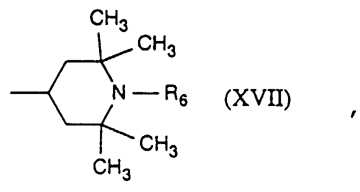
R₁₁ représente -OR₂₁, -NHR₂₂, 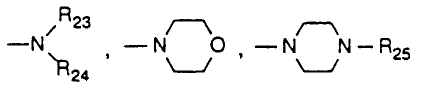 ou -SR₂₁,
R₁₂ et R₁₃ représentent indépendamment l'un de l'autre un groupe 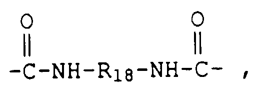 alkylène en C₁-C₁₈, alkylène en C₂-C₁₈ interrompu par des atomes d'oxygène, de soufre ou des groupes 〉N-R₁₆ ; alcénylène en C₂-C₁₈, alcynylène en C₂-C₁₈, alkylidène en C₂-C₂₀, phénylalkylidène en C₂-C₂₀, cyclo-alkylène en C₅-C₈, bicycloalkylène en C₇-C₈, phénylène ou naphtylène non substitué ou substitué par des groupes alkyle en C₁-C₄,; 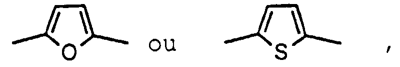
R₁₄ et R₁₅ représentent indépendamment l'une de l'autre un atome d'hydrogène ou un groupe alkyle en C₁-C₈,
R₁₆ représente un atome d'hydrogène ou un groupe alkyle en C₁-C₈,
R₁₇ représente un groupe alkyle en C₁-C₈,
R₁₈ représente une simple liaison, un groupe alkylène en C₁-C₁₈, alkylène en C₂-C₁₈ interrompu par des atomes d'oxygène, de soufre ou des groupes 〉N-R₁₆; alcénylène en C₂-C₁₈, alkylidène en C₂-C₂₀, phénylalkylidène en C₇-C₂₀, cycloalkylène en C₅-C₈, bicycloalkylène en C₇-C₈, phénylène ou naphtylène non substitué ou substitué par des groupes alkyle en C₁-C₄,; 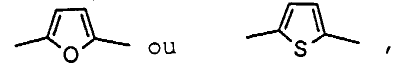
R₁₉ représente un groupe alkylène en C₁-C₁₈, alkylène en C₂-C₁₈ interrompu par des atomes d'oxygène, de soufre ou des groupes 〉N-R₁₆; alcénylène en C₂-C₁₈, alkylidène en C₂-C₂₀, phénylalkylidène en C₇-C₂₀, cycloalkylène en C₅-C₈, bicycloalkylène en C₇-C₈, phénylène ou naphtylène non substitué ou substitué par des groupes alkyle en C₁-C₄; 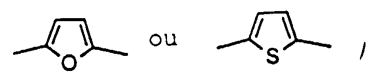
R₂₀ représente un groupe alcanoyle en C₁-C₂₅, benzoyle non substitué ou substitué par des groupes alkyle en C₁-C₁₂; ou 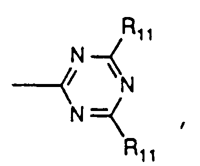
R₂₁ représente un groupe alkyle en C₁-C₂₅, alkyle en C₂-C₂₅ interrompu par des atomes d'oxygène, de soufre ou un groupe 〉N-R₁₆; alcényle en C₂-C₂₄, cycloalkyle en C₅-C₁₅ non substitué ou substitué par des groupes alkyle en C₁-C₄; cycloalcényle en C₅-C₁₅ non substitué ou substitué par des groupes alkyle en C₁-C₄; phénylalkyle en C₇-C₉ non substitué ou substitué sur le noyau phényle par des groupes alkyle en C₁-C₄; phényle non substitué ou substitué par des groupes alkyle en C₁-C₄;
R₂₂, R₂₃, R₂₄ et R₂₅ représentent indépendamment les uns des autres un atome d'hydrogène, un groupe alkyle en C₁-C₁₈ ou un groupe de formule XVII 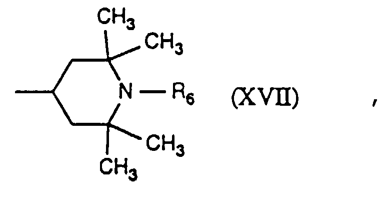
R₂₆ représente un groupe alkyle en C₁-C₄ ou hydroxyméthyle,
R₂₇ représente un atome d'hydrogène ou un groupe alkyle en C₁-C₈,
R₂₈ représente un atome d'hydrogène, un groupe alkyle en C₁-C₈ ou un groupe de formule XVII 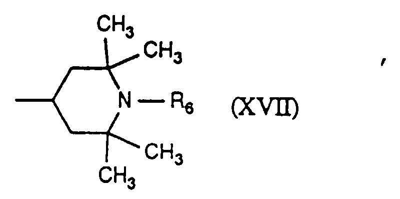
R₂₉ représente un atome d'hydrogène, un groupe alkyle en C₁-C₂₀, cycloalkyle en C₅-C₁₂, phényle non substitué ou substitué par des groupes alkyle en C₁-C₄,
X₁ représente un groupe de formule XVIII, XIX, XX ou XXI 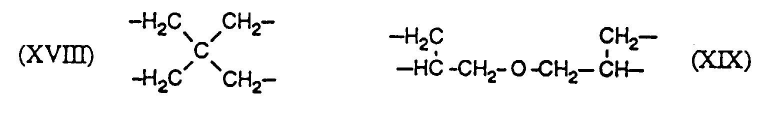 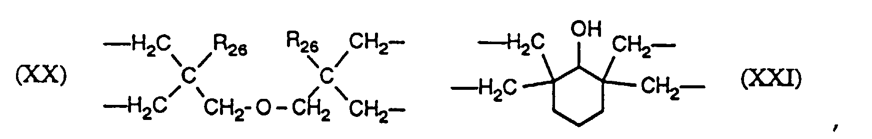
X₂ 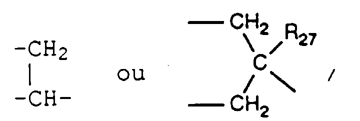
X₃ représente un atome d'oxygène ou 〉N-R₂₈, et
X₄ représente 〉C=O, 〉C=S ou 〉CH-R₂₉.

2. Composés selon la revendication 1, dans lesquels R₄ représente un groupe alkylène en C₂-C₄.

3. Composés selon la revendication 1, dans lesquels
R₄ représente un groupe alkylène en C₁-C₁₂, alkylène en C₄-C₁₈ interrompu par des atomes d'oxygène ou de soufre; ou un groupe alcénylène en C₄-C₈,
R₅ représente un groupe alkyle en C₁-C₈,
R₆ représente un atome d'hydrogène, un groupe alkyle en C₁-C₈, O^{•}, un groupe alcoxy en C₄-C₁₈, cycloalcoxy en C₅-C₈, alcényle en C₃-C₆, alcynyle en C₃-C₆, acyle en C₁-C₆, ou benzyle,
R₇ représente un groupe alkyle en C₁-C₈,
R₈ représente 〉N-R₁₇, 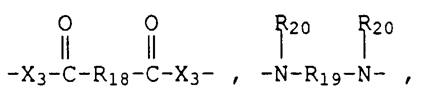 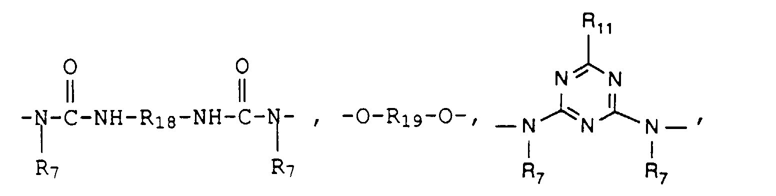 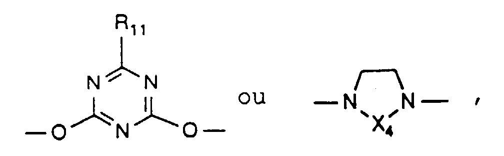
R₉ représente 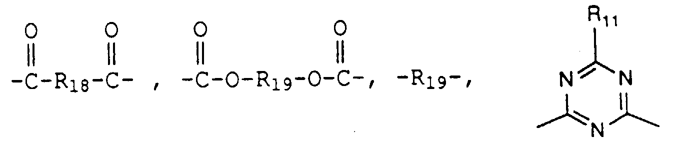 ou 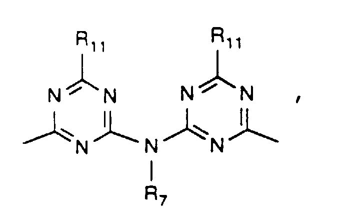
R'₉ représente 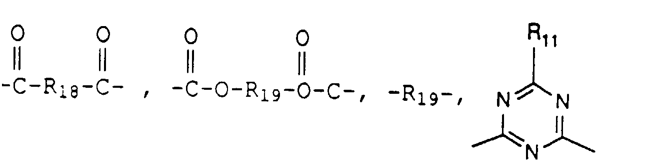 ou 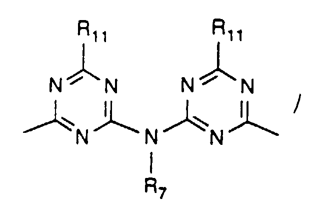
R₁₀ représente un groupe alkyle en C₁-C₈,
R₁₁ représente -OR₂₁, -NHR₂₂, 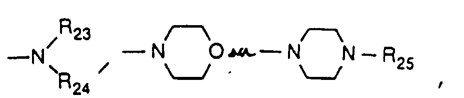
R₁₂ et R₁₃ représentent indépendamment l'un de l'autre un groupe 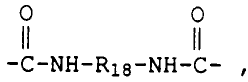 alkylène en C₁-C₁₂, alkylène en C₄-C₁₂ interrompu par des atomes d'oxygène ou de soufre; alcénylène en C₂-C₁₂, alcynylène en C₂-C₁₂, alkylidène en C₂-C₁₄, phénylalkylidène en C₇-C₁₆, cycloalkylène en C₅-C₈, phénylène ou naphtylène,
R₁₄ et R₁₅ représentent indépendamment l'une de l'autre un atome d'hydrogène ou un groupe alkyle en C₁-C₄,
R₁₈ représente une simple liaison, un groupe alkylène en C₁-C₁₈, alkylène en C₄-C₁₂ interrompu par des atomes d'oxygène ou de soufre; alcénylène en C₂-C₁₂, alkylidène en C₂-C₁₄, phénylalkylidène en C₇-C₁₆, cycloalkylène en C₅-C₈, phénylène ou naphtylène,
R₁₉ représente un groupe alkylène en C₁-C₁₂, alkylène en C₂-C₁₂ interrompu par des atomes d'oxygène ou de soufre; alcénylène en C₂-C₁₂, alkylidène en C₂-C₁₄, phénylalkylidène en C₇-C₁₆, cycloalkylène en C₅-C₈, phénylène ou naphtylène,
R₂₀ représente un groupe alcanoyle en C₁-C₁₈, benzoyle ou 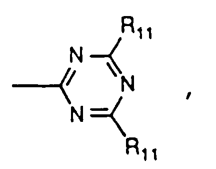
R₂₁ représente un groupe alkyle en C₁-C₁₈, alkyle en C₂-C₁₈ interrompu par des atomes d'oxygène ou de soufre; alcényle en C₂-C₁₈, cycloalkyle en C₅-C₈ non substitué ou substitué par des groupes alkyle en C₁-C₄; cycloalcényle en C₅-C₈ non substitué ou substitué par des groupes alkyle en C₁-C₄; phénylalkyle en C₇-C₉ phényle non substitué ou substitué par des groupes alkyle en C₁-C₄;
R₂₂, R₂₃, R₂₄ et R₂₅ représentent indépendamment les uns des autres un atome d'hydrogène ou un groupe alkyle en C₁-C₁₂,
R₂₆ représente un groupe alkyle en C₁-C₄,
R₂₇ représente un atome d'hydrogène ou un groupe alkyle en C₁-C₄,
R₂₈ représente un atome d'hydrogène ou un groupe alkyle en C₁-C₄,
R₂₉ représente un atome d'hydrogène, un groupe alkyle en C₁-C₁₂, cycloalkyle en C₅-C₈, phényle non substitué ou substitué par des groupes alkyle en C₁-C₄,
X₁ représente un groupe de formule XVIII, XIX, ou XX 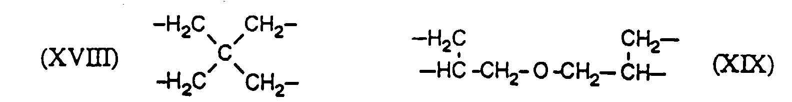 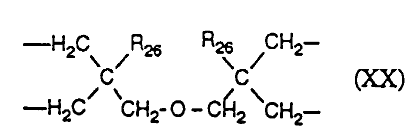
X₂ représente 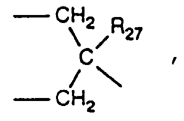 et
X₄ représente 〉C=O, 〉CH-R₂₉.

4. Composés selon la revendication 1, dans lesquels
R₄ représente un groupe alkylène en C₂-C₈, alkylène en C₄-C₁₂ interrompu par des atomes d'oxygène; ou un groupe alcénylène en C₄-C₈,
R₅ représente un groupe alkyle en C₁-C₄,
R₆ représente un atome d'hydrogène, un groupe alkyle en C₁-C₄, alcoxy en C₄-C₁₈, cycloalcoxy en C₅-C₈, allyle, propargyle, acétyle ou benzyle,
R₇ représente un groupe alkyle en C₁-C₈,
R₈ représente 〉N-R₁₇, 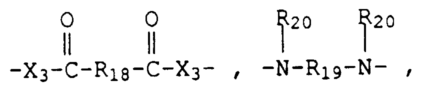
-O-R₁₉-O-, 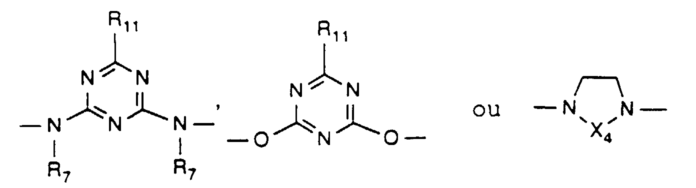
R₉ et R'₉ représentent 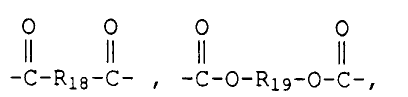 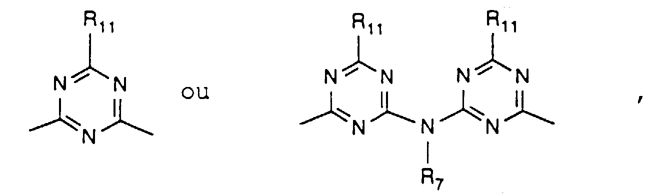
R₁₀ représente un groupe alkyle en C₁-C₈,
R₁₁ représente -OR₂₁, -NHR₂₂, 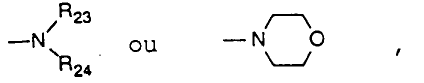
R₁₂ et R₁₃ représentent indépendamment l'un de l'autre un groupe 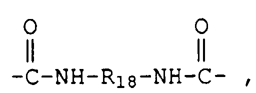 alkylène en C₁-C₈, alkylène en C₄-C₁₂ interrompu par des atomes d'oxygène; alcénylène en C₂-C₈, alcynylène en C₂-C₈, alkylidène en C₂-C₁₀, phénylalkylidène en C₇-C₁₂, cyclohexylène ou phénylène,
R₁₄ et R₁₅ représentent indépendamment l'une de l'autre un atome d'hydrogène ou un groupe alkyle en C₁-C₄,
R₁₈ représente une simple liaison, un groupe alkylène en C₁-C₁₂, alkylène en C₄-C₁₂ interrompu par des atomes d'oxygène; alcénylène en C₂-C₈, alkylidène en C₂-C₈, phénylalkylidène en C₇-C₁₂, cyclohexylène ou phénylène,
R₁₉ représente un groupe alkylène en C₁-C₁₂, alkylène en C₂-C₁₂ interrompu par des atomes d'oxygène; alcénylène en C₂-C₈, alkylidène en C₂-C₈, phénylalkylidène en C₇-C₁₂, cyclohexylène ou phénylène,
R₂₀ représente un groupe alcanoyle en C₁-C₁₂ ou benzoyle,
R₂₁ représente un groupe alkyle en C₁-C₁₂, alkyle en C₂-C₁₂ interrompu par des atomes d'oxygène; alcényle en C₂-C₁₂, cyclohexyle non substitué ou substitué par des groupes alkyle en C₁-C₄; benzyle ou phényle;
R₂₂, R₂₃ et R₂₄ représentent indépendamment les uns des autres un atome d'hydrogène ou un groupe alkyle en C₁-C₈, R₂₇ représente un atome d'hydrogène ou un groupe alkyle en C₁-C₄,
R₂₈ représente un atome d'hydrogène ou un groupe alkyle en C₁-C₄,
R₂₉ représente un atome d'hydrogène, un groupe alkyle en C₁-C₈, cyclohexyle ou phényle,
X₁ représente un groupe de formule XVIII ou XIX 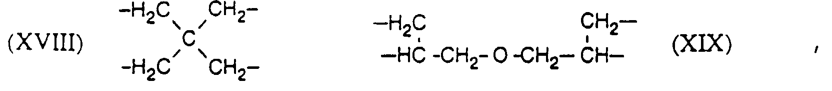
X₂ représente 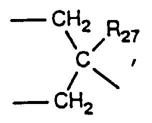 et
X₄ représente 〉C=O ou 〉CH-R₂₉.

5. Composés selon la revendication 1, dans lesquels L représente un groupe de formule Il
―O-R₃-O― (II)
R₄ représente un groupe alkylène en C₂-C₈ ou alkylène en C₄-C₈ interrompu par des atomes d'oxygène,
R₅ représente un groupe alkyle en C₁-C₄,
R₆ représente un atome d'hydrogène, un groupe alkyle en C₁-C₄, alcoxy en C₄-C₁₈, cycloalcoxy en C₅-C₈, allyle, propargyle, acétyle ou benzyle,
R₇ représente un groupe alkyle en C₁-C₈,
R₈ représente 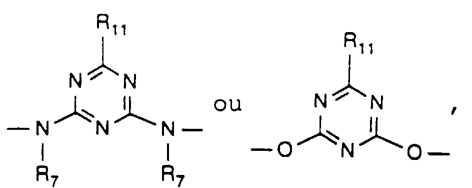
R₉ et R'₉ représentent 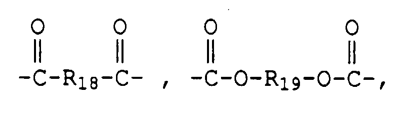 ou 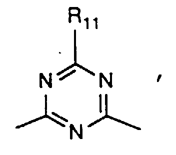
R₁₀ représente un groupe alkyle en C₁-C₈,
R₁₁ représente -OR₂₁, -NHR₂₂, 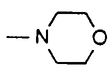 ou -SR₂₁,
R₁₂ et R₁₃ représentent un groupe 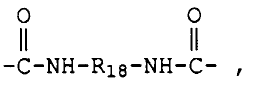
R₁₄ et R₁₅ représentent un atome d'hydrogène,
R₁₈ représente une simple liaison, un groupe alkylène en C₁-C₈ ou alkylène en C₄-C₈ interrompu par des atomes d'oxygène,
R₁₉ représente un groupe alkylène en C₂-C₈, alkylène en C₄-C₈ interrompu par des atomes d'oxygène,
R₂₁ représente un groupe alkyle en C₁-C₈, alkyle en C₄-C₁₂ interrompu par des atomes d'oxygène; ou cyclohexyle,
R₂₂ est un groupe alkyle en C₁-C₈,
R₂₇ représente un atome d'hydrogène ou un groupe alkyle en C₁-C₄,
X₁ représente un groupe de formule XVIII ou XIX 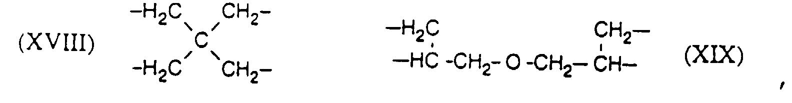 et
X₂ représente

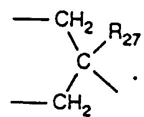

6. Composés selon la revendication 1, dans lesquels R₆ représente un atome d'hydrogène, un groupe alkyle en C₁-C₄, alcoxy en C₄-C₁₆, cycloalcoxy en C₅-C₈, allyle, propargyle, acétyle ou benzyle.

7. Composés selon la revendication 1, dans lesquels L représente un groupe de formule II
―O-R₃-O― (II),
R₁ et R₂ représentent un groupe méthyle ou forment ensemble avec l'atome de carbone auquel ils sont liés, un cycle 3,4-déshydrocyclohexylidène,
R₃ représente un groupe des formules IV, V, VII, VIII, XI, XII, XIV ou XVI 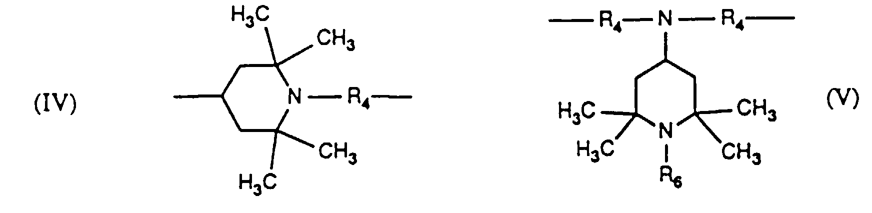 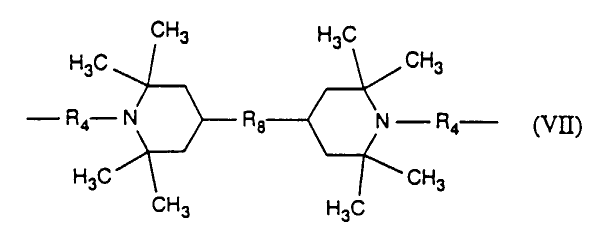 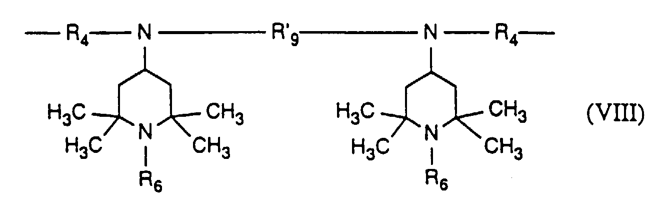 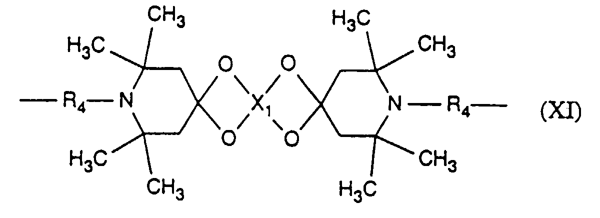 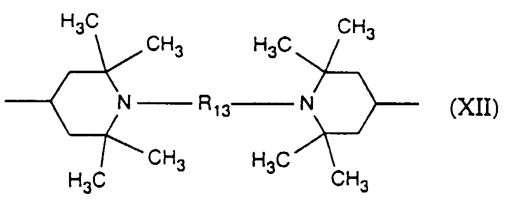 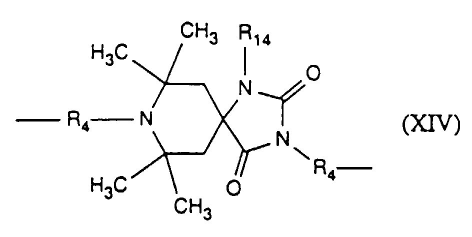 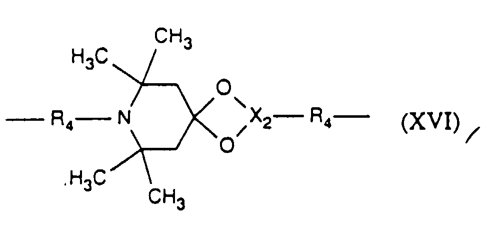
R₄ représente un groupe éthylène,
R₆ représente un atome d'hydrogène ou un groupe méthyle,
R₇ représente un groupe alkyle en C₁-C₆,
R₈ représente 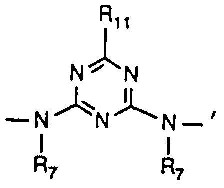
R'₉ est 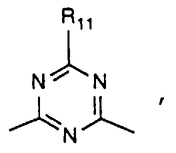
R₁₁ représente -OR₂₁, -NHR₂₂, ou 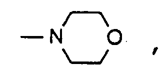
R₁₃ représente un groupe 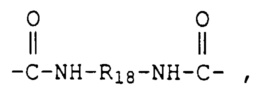
R₁₄ représente un atome d'hydrogène,
R₁₈ représente une simple liaison ou un groupe alkylène en C₁-C₈,
R₂₁ représente un groupe alkyle en C₁-C₄,
R₂₂ est un groupe alkyle en C₁-C₈,
R₂₇ représente un atome d'hydrogène ou un groupe méthyle,
X₁ représente un groupe de formule XVIII 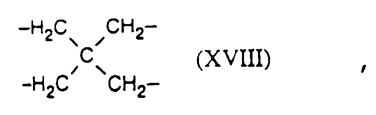 et
X₂

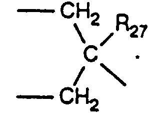

8. Composition contenant
(a) un matériau organique sujet à une dégradation par oxydation, thermique ou induite par la lumière et
(b) au moins un composé de formule I selon la revendication 1.

9. Composition selon la revendication 8, contenant en plus des composants (a) et (b), d'autres additifs.

10. Composition selon la revendication 9, contenant comme autres additifs des antioxydants, des agents de protection contre la lumière et/ou des stabilisants de transformation de type phénolique.

11. Composition selon la revendication 9, contenant comme autre additif au moins un composé du type de la benzofuran-2-one.

12. Composition selon la revendication 8, contenant comme composant (a) des polymères naturels, semi-synthétiques ou synthétiques.

13. Composition selon la revendication 8, contenant comme composant (a) des polymères thermoplastiques.

14. Composition selon la revendication 8, contenant comme composant (a) une polyoléfine.

15. Composition selon la revendication 8, contenant comme composant (a) du polyéthylène ou du polypropylène.

16. Utilisation des composés de formule I définie à la revendication 1 comme stabilisants pour des matériaux organiques contre la dégradation due à l'oxydation, thermique ou induite par la lumière.

17. Utilisation selon la revendication 16 comme stabilisants de transformation (stabilisants thermiques) dans des polymères thermoplastiques.

18. Procédé de stabilisation d'un matériau organique contre la dégradation due à l'oxydation, thermique ou induite par la lumière, caractérisé en ce qu'on incorpore ou on applique à celui-ci au moins un composé de formule I.

19. Procédé de préparation de composés de formule I selon la revendication 1, caractérisé en ce que l'on met à réagir un composé de formule XXII
H ― L ― H (XXII)
dans laquelle L est tel que défini à la revendication 1, avec un chlorophosphite cyclique de formule XXIII 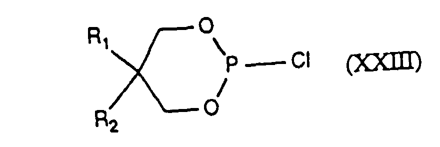 dans laquelle R₁ et R₂ sont tels que définis à la revendication 1.
